(19) Europäisches Patentamt
European Patent Office
Office européen des brevets

(11) **EP 4 589 338 A1**

(12) **EUROPEAN PATENT APPLICATION**
published in accordance with Art. 153(4) EPC

(43) Date of publication:
**23.07.2025 Bulletin 2025/30**

(21) Application number: **23861696.5**

(22) Date of filing: **04.08.2023**

(51) International Patent Classification (IPC):
**G01S 13/87** *(2006.01)*    **G01S 13/46** *(2006.01)*

(52) Cooperative Patent Classification (CPC):
**G01S 13/46; G01S 13/87**

(86) International application number:
**PCT/JP2023/028564**

(87) International publication number:
**WO 2024/053306 (14.03.2024 Gazette 2024/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:   **07.09.2022   JP 2022142186**

(71) Applicant: **Kimura, Fumitoshi
Kobe-shi, Hyogo 651-0056 (JP)**

(72) Inventors:
• **KIMURA, Kenjiro
Kobe-shi, Hyogo 651-0056 (JP)**
• **KIMURA, Noriaki
Kobe-shi, Hyogo 651-0056 (JP)**
• **KIMURA, Fumitoshi
Kobe-shi, Hyogo 651-0056 (JP)**

(74) Representative: **KATZAROV S.A.
Geneva Business Center
12 Avenue des Morgines
1213 Petit-Lancy (CH)**

(54)    **DETECTION DEVICE AND DETECTION METHOD**

(57)    A detection device (100) includes: a generator (101) that generates a plurality of waves; a plurality of transmitters (102) that emit the plurality of waves, the plurality of waves each being emitted by a corresponding one of the plurality of transmitters (102); a plurality of receivers (103) each of which receives one or more of the plurality of waves as a composite wave; a deriver (104) that derives individual data for each combination of one of the plurality of transmitters (102) and one of the plurality of receivers (103) by deriving, from received data of each of the plurality of receivers (103), the individual data corresponding to each of the plurality of transmitters (102); and a detector (105) that detects an object that affects at least one of the plurality of waves, according to the individual data.

FIG. 4

## Description

[Technical Field]

The present disclosure relates to, for example, detection devices that detect an object.

[Background Art]

In PTL 1, a weather radar device for allowing secure collection of three-dimensional weather data in a temporally and spatially high resolution manner is proposed. The weather radar device described in PTL 1 transmits radar waves by emitting a plurality of beams to a plurality of areas that are different from each other in the elevation angle direction, and receives reflected waves for each beam.

[Citation List]

[Patent Literature]

[PTL 1] Japanese Unexamined Patent Application Publication No. 2012-52923

[Summary of Invention]

[Technical Problem]

However, in the case where the plurality of transmitters each emit waves, and the plurality of receivers each receive the waves, there is a possibility that the plurality of waves emitted from the plurality of transmitters are mixed, and received by each of the plurality of receivers. Accordingly, it is difficult to identify the transmission source of the wave from the received data of each receiver, and it is difficult to identify the reflection position of the wave or the like.
To prevent the plurality of waves from being mixed, the transmitters may each transmit the waves at timing different from those of the other transmitters. However, in this case, a long time period is required from the time when the first transmitter starts transmitting the waves until the last transmitter finishes transmitting the waves. Consequently, it is not easy to detect an object at high speed using the plurality of transmitters and the plurality of receivers.
Accordingly, the present disclosure provides a detection device and the like that can detect an object at high speed using a plurality of transmitters and a plurality of receivers.

[Solution to Problem]

A detection device according to one aspect of the present disclosure comprising: a generator that generates a plurality of waves; a plurality of transmitters that emit the plurality of waves, the plurality of waves each being emitted by a corresponding one of the plurality of transmitters; a plurality of receivers each of which receives one or more of the plurality of waves as a composite wave; a deriver that derives individual data for each combination of one of the plurality of transmitters and one of the plurality of receivers by deriving, from received data of each of the plurality of receivers, the individual data corresponding to each of the plurality of transmitters; and a detector that detects an object that affects at least one of the plurality of waves, according to the individual data, wherein the generator: generates a plurality of pulse train groups and at least one carrier wave, the plurality of pulse train groups corresponding to a plurality of code groups each of which includes a reference code and one or more individual codes and that are different from each other; and modulates the plurality of pulse train groups using the at least one carrier wave, to generate a plurality of modulated waves as the plurality of waves, the deriver: demodulates data to be processed from the received data of each of the plurality of receivers, the data to be processed corresponding to the plurality of pulse train groups; and derives the individual data from the data to be processed, the reference code is common to the plurality of code groups, and a plurality of individual codes in the plurality of code groups are different from each other.
It should be noted that these general or specific aspects may be implemented using a system, a device, a method, an integrated circuit, a computer program, or a non-transitory recording medium such as a computer-readable CD-ROM, or may be implemented using any combination of systems, devices, methods, integrated circuits, computer programs, and recording media.

[Advantageous Effects of Invention]

According to an aspect of the present disclosure, it is possible to detect an object at high speed using the plurality of transmitters and the plurality of receivers.

[Brief Description of Drawings]

[FIG. 1]

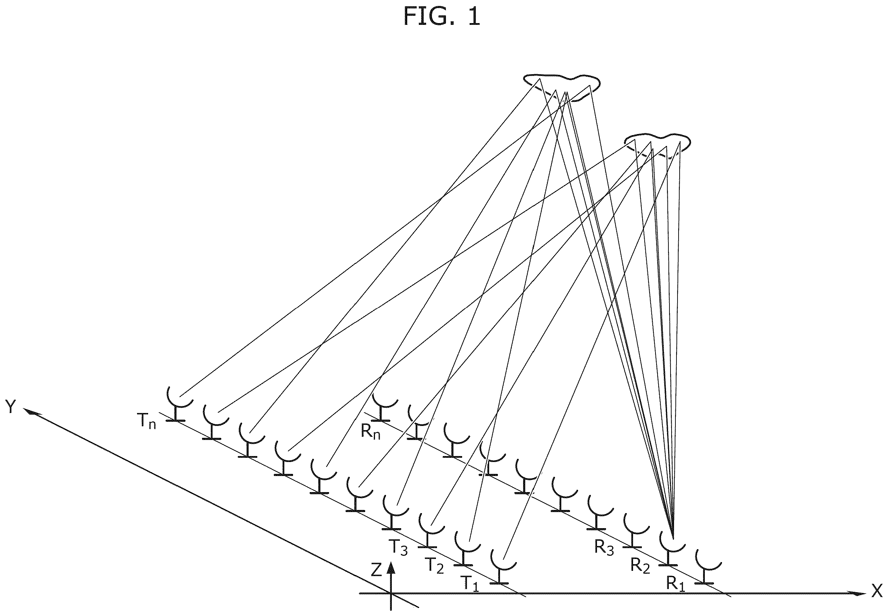

FIG. 1 is a conceptual diagram illustrating simultaneous transmission and simultaneous reception of a plurality of waves at a plurality of transmitters and a plurality of receivers.
[FIG. 2]

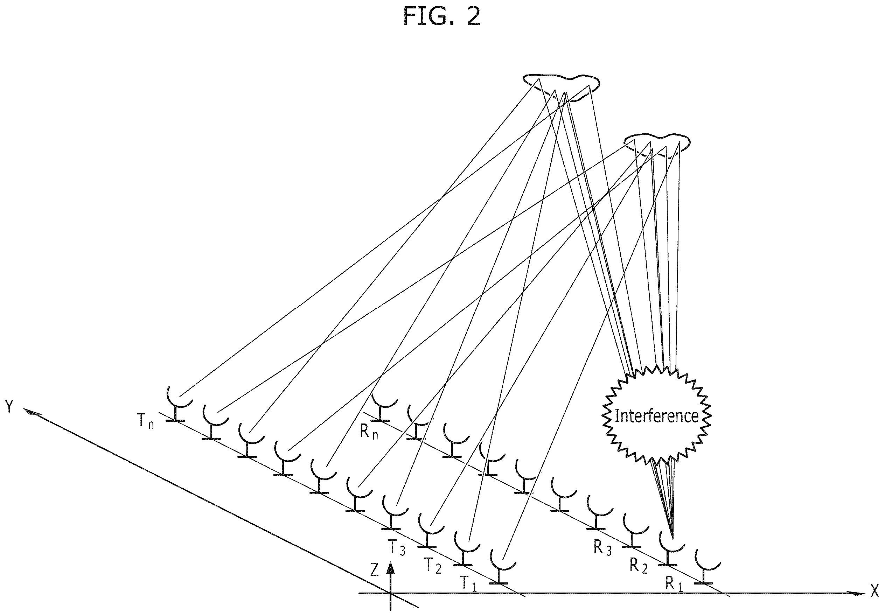

FIG. 2 is a conceptual diagram illustrating interference occurring by simultaneous transmission and simultaneous reception of the plurality of waves at the plurality of transmitters and the plurality of receivers.
[FIG. 3]

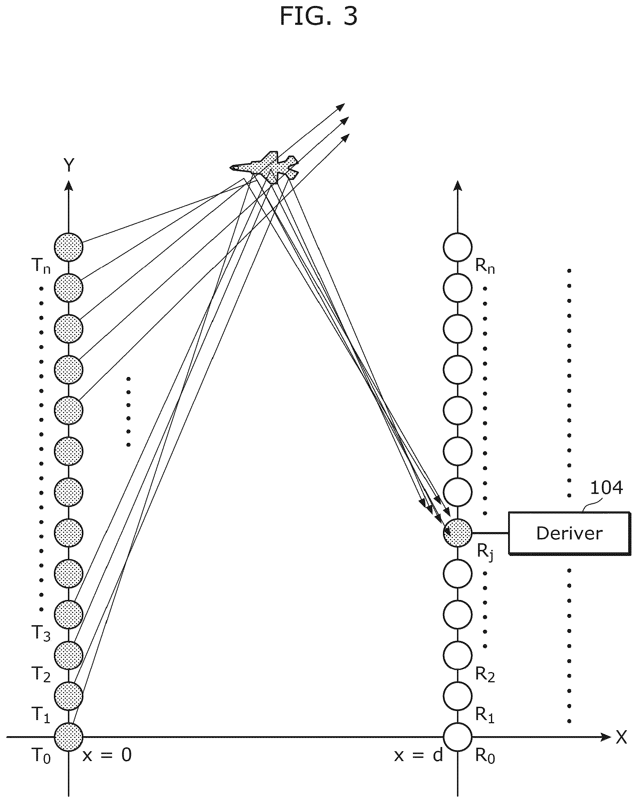

FIG. 3 is a conceptual diagram illustrating the plurality of transmitters, the plurality of receivers, and a deriver according to the embodiment.
[FIG. 4]

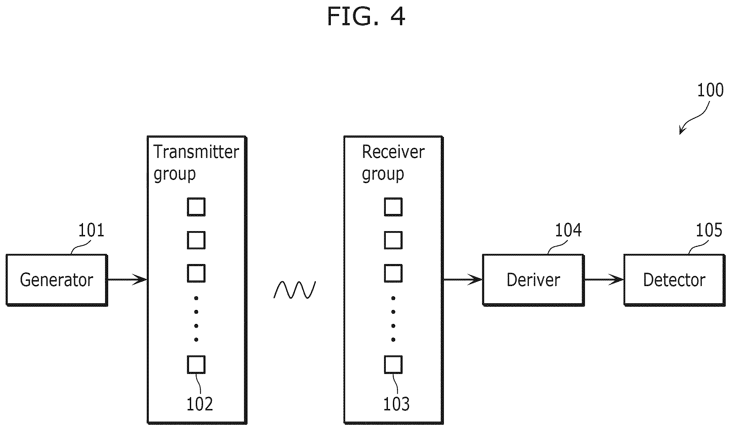

FIG. 4 is a block diagram illustrating a configuration example of a detection device according to the embodiment.
[FIG. 5]

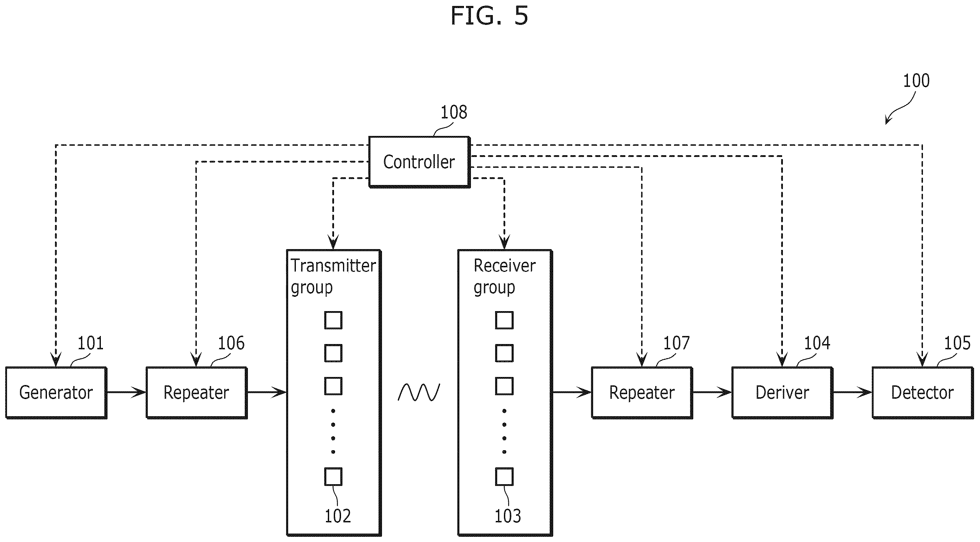

FIG. 5 is a block diagram illustrating an entire configuration example of the detection device.
[FIG. 6]

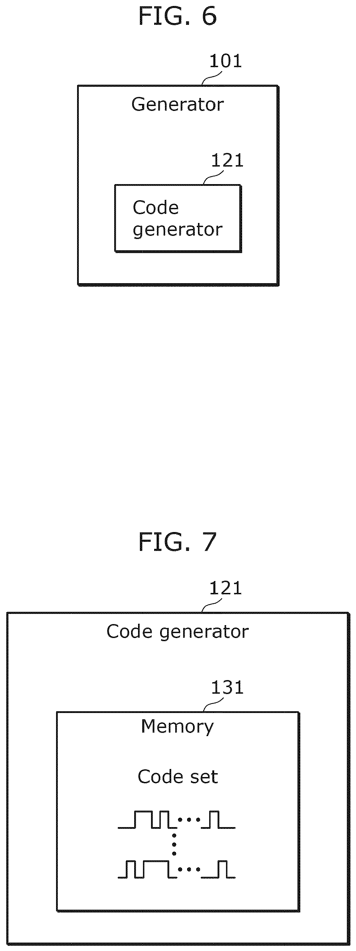

FIG. 6 is a block diagram illustrating a configuration example of a generator.
[FIG. 7]
FIG. 7 is a block diagram illustrating a configuration example of a code generator.
[FIG. 8]

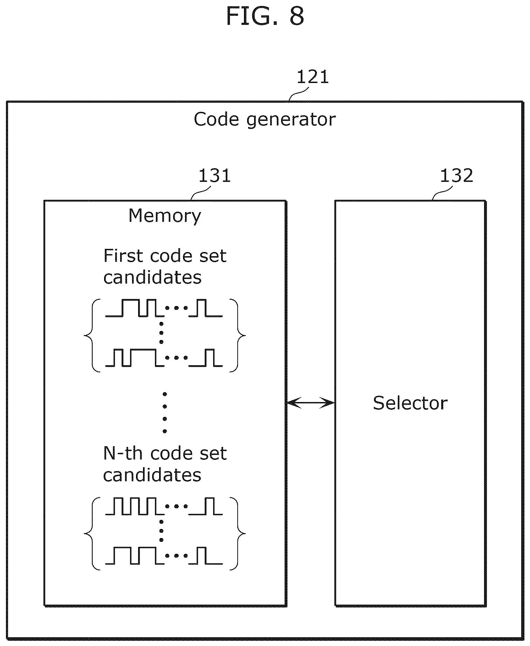

FIG. 8 is a block diagram illustrating another configuration example of a code generator.
[FIG. 9]

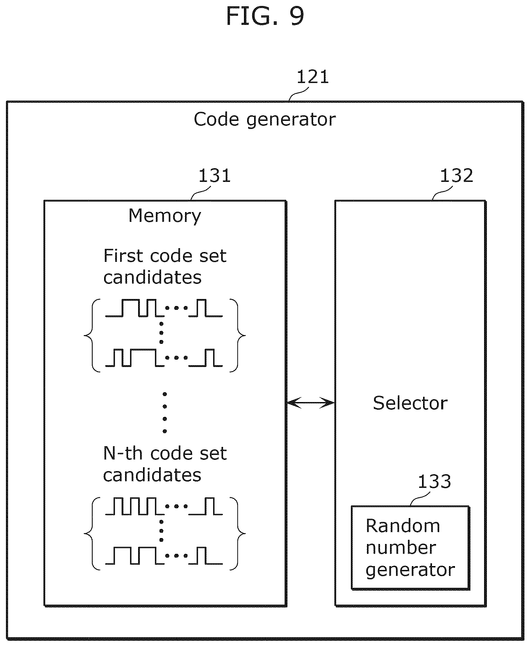

FIG. 9 is a block diagram illustrating still another configuration example of a code generator.
[FIG. 10]

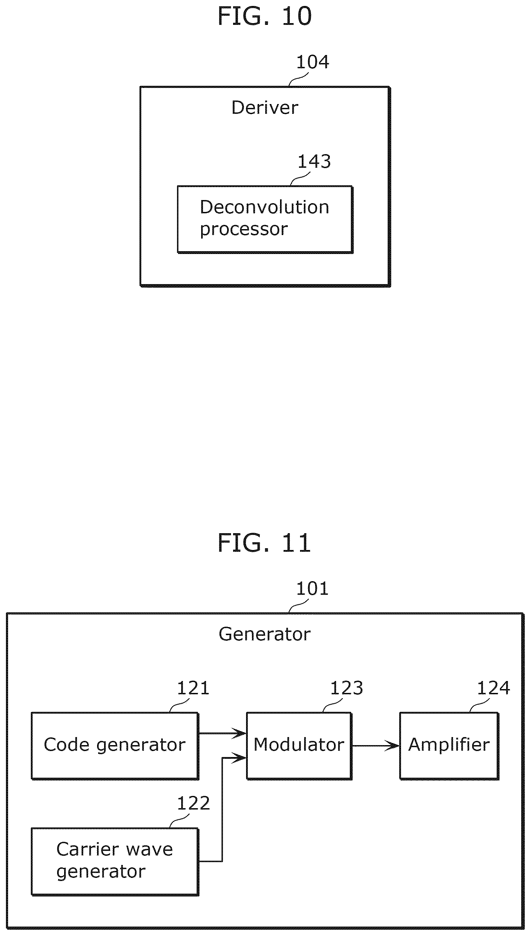

FIG. 10 is a block diagram illustrating a configuration example of a deriver.
[FIG. 11]
FIG. 11 is a block diagram illustrating a configuration example of a generator in a case where a carrier wave is used.
[FIG. 12]

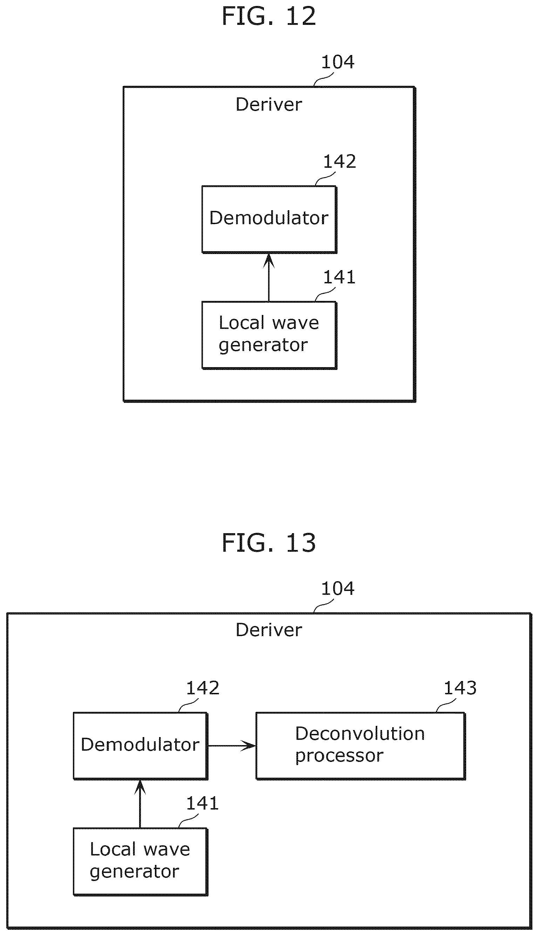

FIG. 12 is a block diagram illustrating a configuration example of a deriver in the case where a carrier wave is used.
[FIG. 13]
FIG. 13 is a block diagram illustrating another configuration example of a deriver in the case where a carrier wave is used.
[FIG. 14]

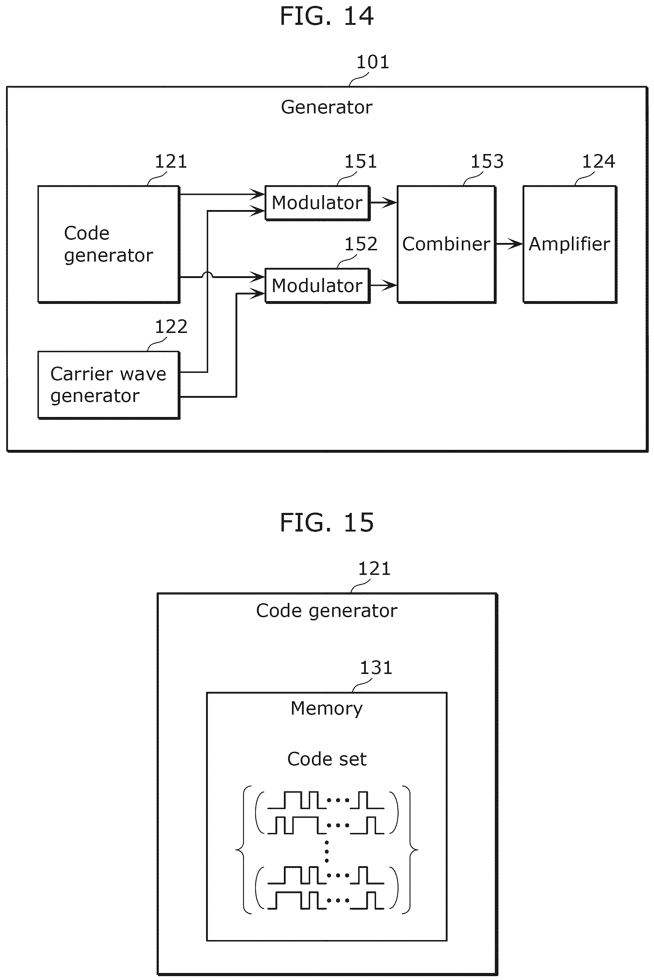

FIG. 14 is a block diagram illustrating a configuration example of a generator in a case where a pair of carrier waves are used.
[FIG. 15]
FIG. 15 is a block diagram illustrating a configuration example of a code generator in the case where a pair of carrier waves are used.
[FIG. 16]

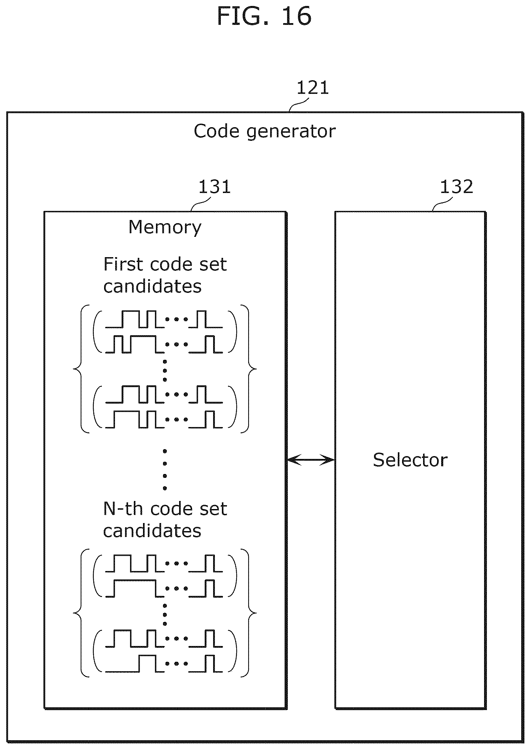

FIG. 16 is a block diagram illustrating another configuration example of a code generator in the case where a pair of carrier waves are used.
[FIG. 17]

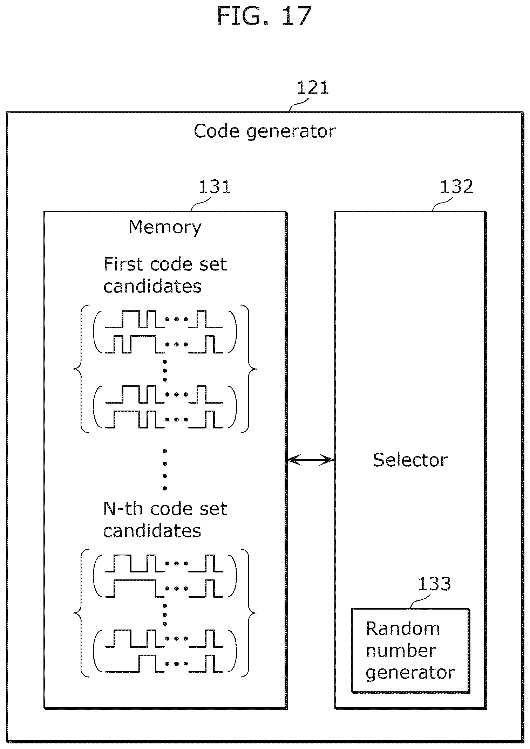

FIG. 17 is a block diagram illustrating still another configuration example of a code generator in the case where a pair of carrier waves are used.
[FIG. 18]

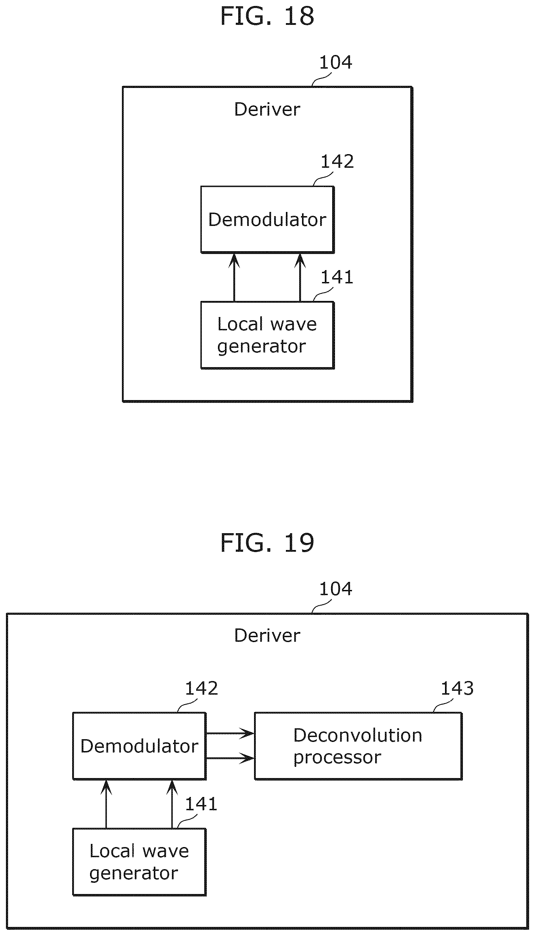

FIG. 18 is a block diagram illustrating a configuration example of a deriver in the case where a pair of carrier waves are used.
[FIG. 19]
FIG. 19 is a block diagram illustrating another configuration example of a deriver in the case where a pair of carrier waves are used.
[FIG. 20]

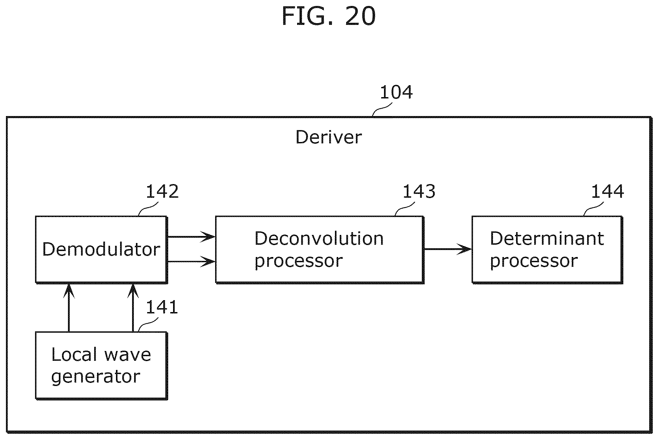

FIG. 20 is a block diagram illustrating still another configuration example of a deriver in the case where a pair of carrier waves are used.
[FIG. 21]

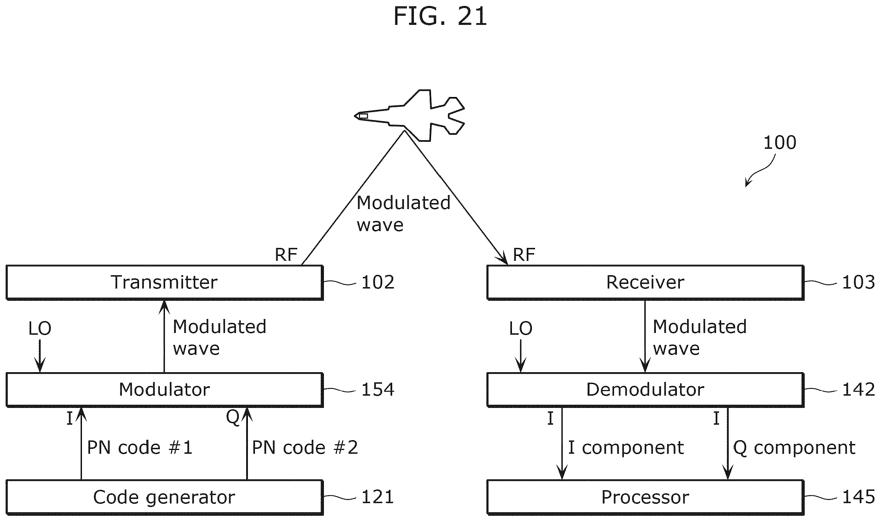

FIG. 21 is a conceptual diagram illustrating a process example in the case where a pair of carrier waves are used.

[FIG. 22]

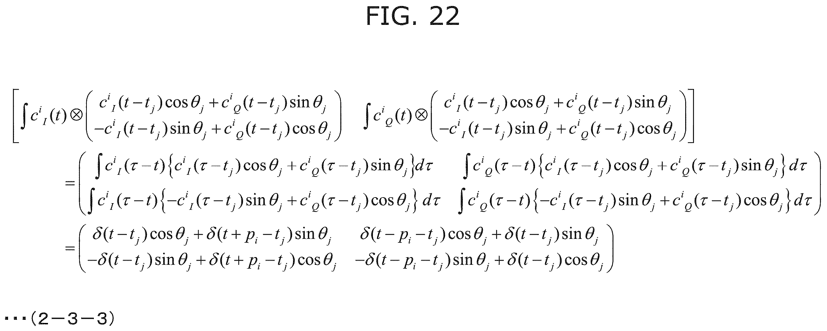

FIG. 22 is a diagram illustrating Expression (2-3-3).

[FIG. 23]

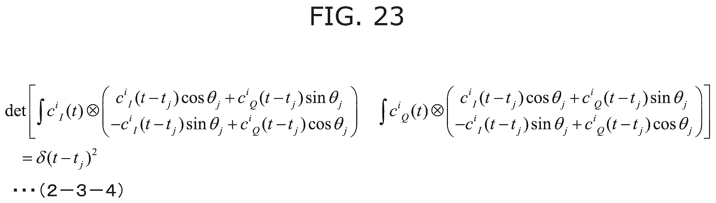

FIG. 23 is a diagram illustrating Expression (2-3-4).

[FIG. 24]

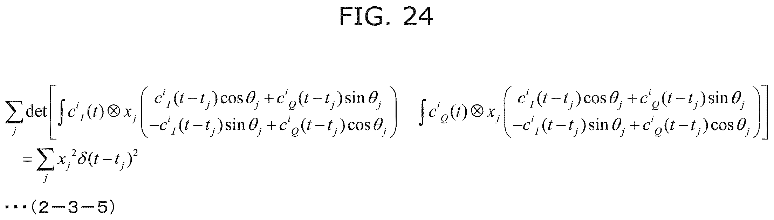

FIG. 24 is a diagram illustrating Expression (2-3-5).

[FIG. 25]

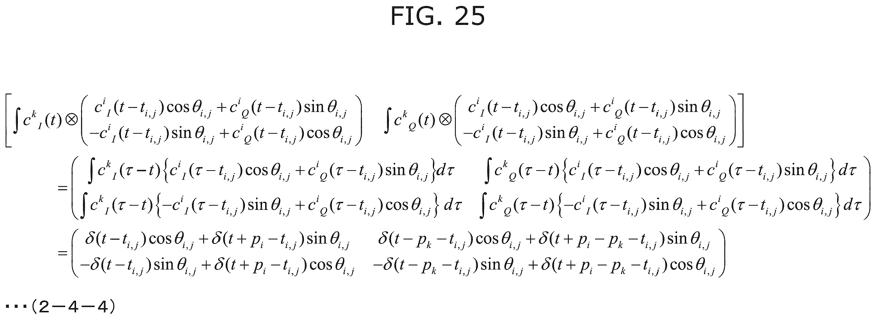

FIG. 25 is a diagram illustrating Expression (2-4-4).

[FIG. 26]

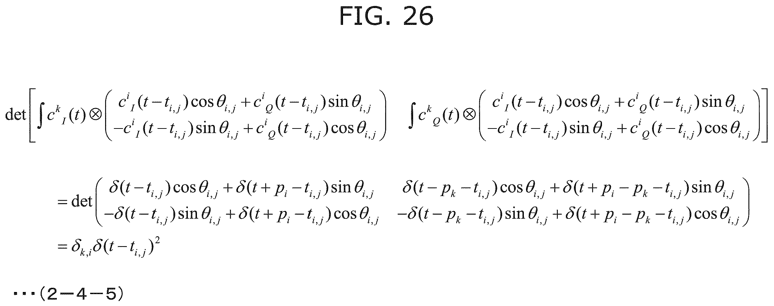

FIG. 26 is a diagram illustrating Expression (2-4-5).

[FIG. 27]

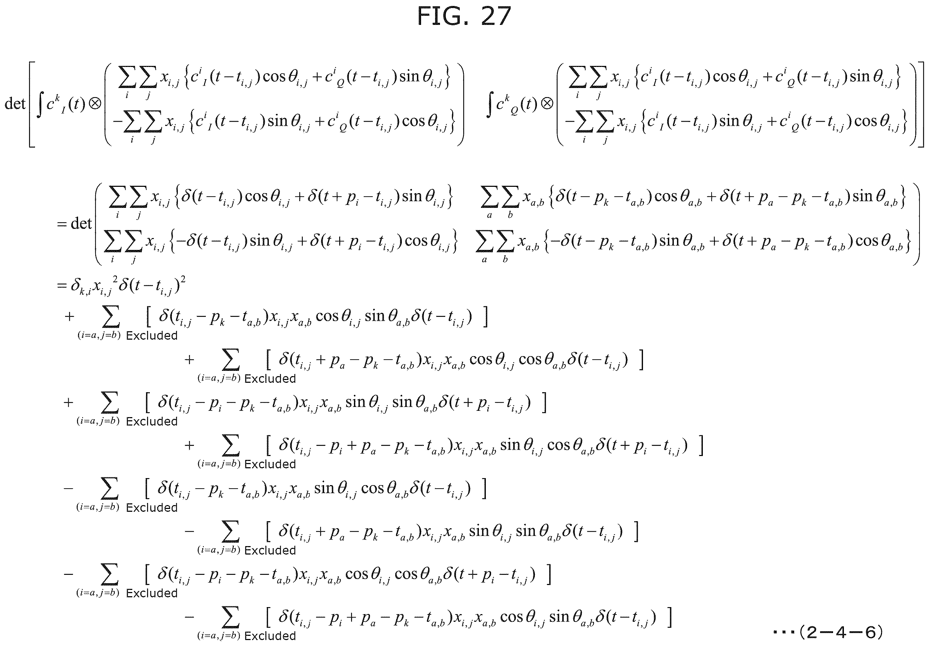

FIG. 27 is a diagram illustrating Expression (2-4-6).

[FIG. 28]

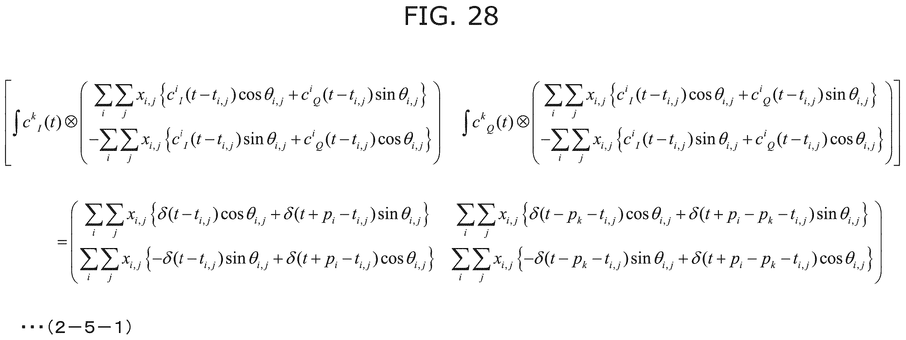

FIG. 28 is a diagram illustrating Expression (2-5-1).

[FIG. 29]

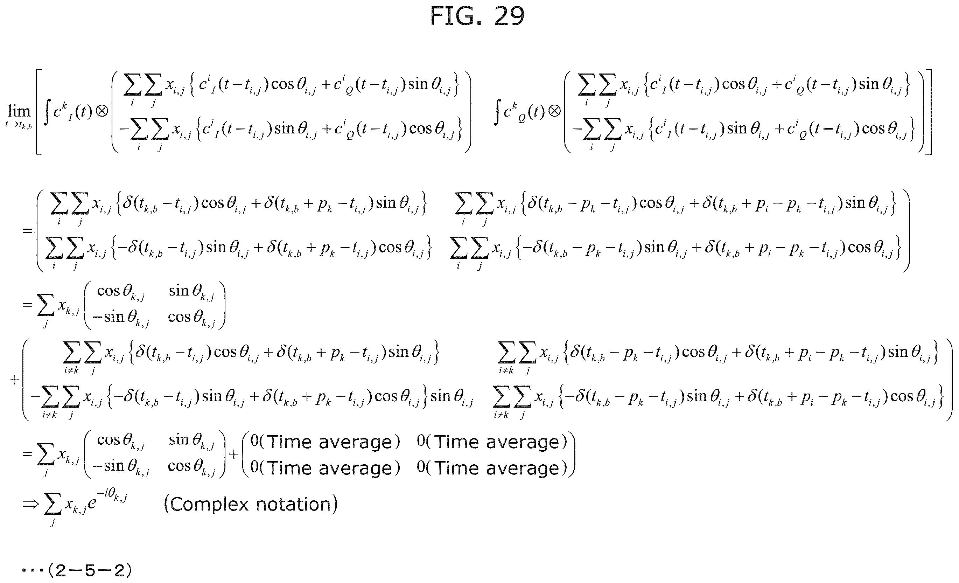

FIG. 29 is a diagram illustrating Expression (2-5-2).

[FIG. 30]

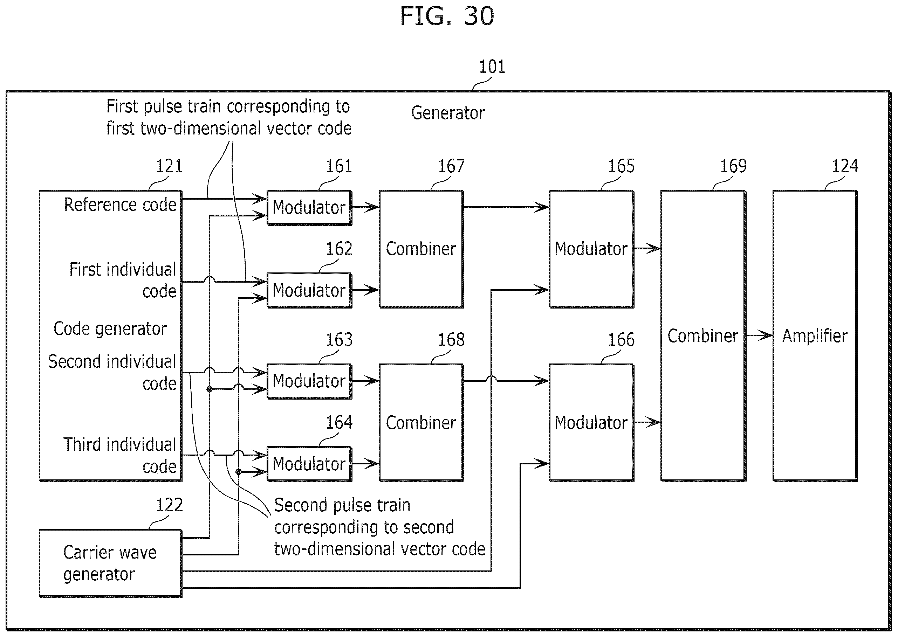

FIG. 30 is a block diagram illustrating a configuration example of a generator in a case where two pairs of carrier waves are used.

[FIG. 31]

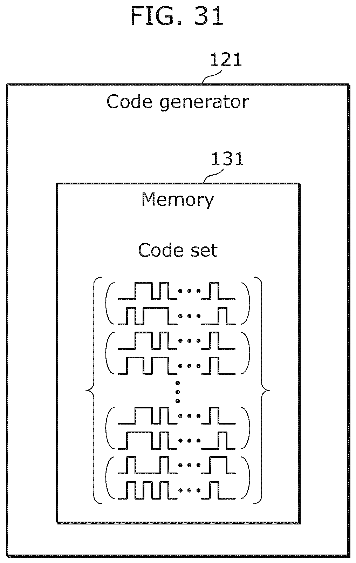

FIG. 31 is a block diagram illustrating a configuration example of a code generator in the case where two pairs of carrier waves are used.

[FIG. 32]

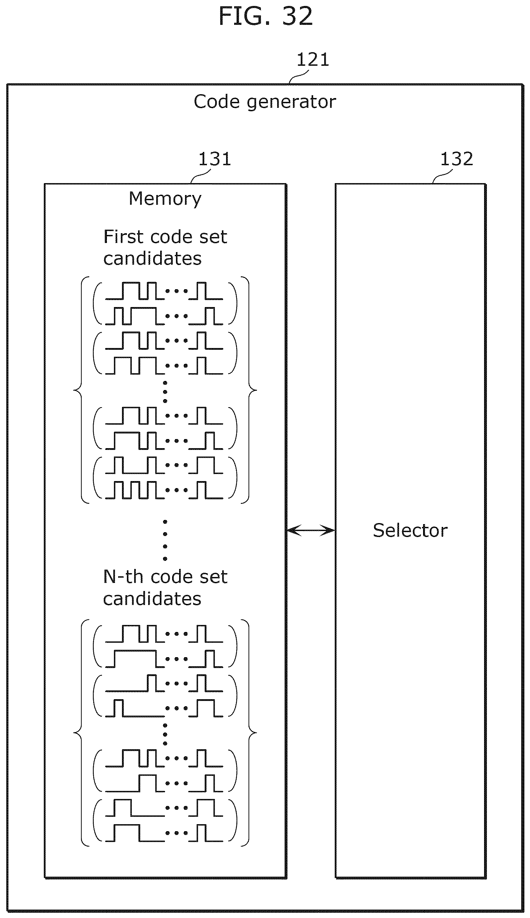

FIG. 32 is a block diagram illustrating another configuration example of a code generator in the case where two pairs of carrier waves are used.

[FIG. 33]

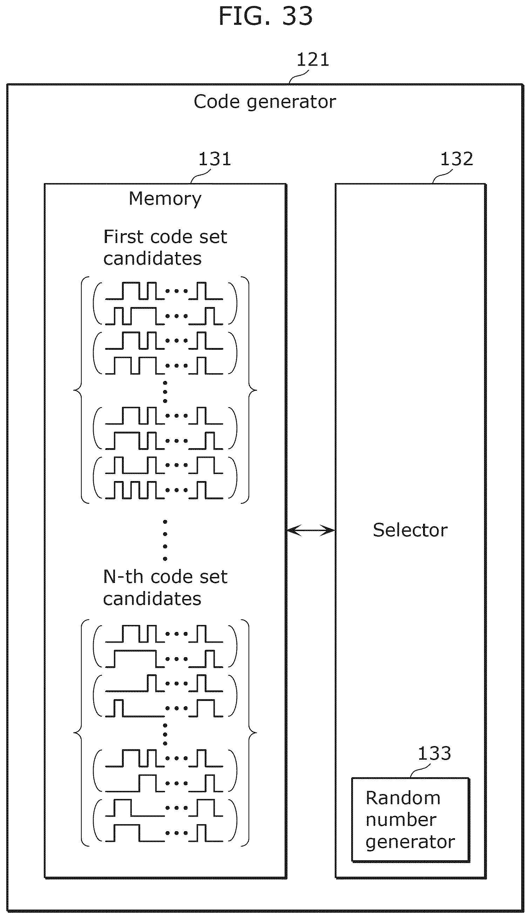

FIG. 33 is a block diagram illustrating still another configuration example of a code generator in the case where two pairs of carrier waves are used.

[FIG. 34]

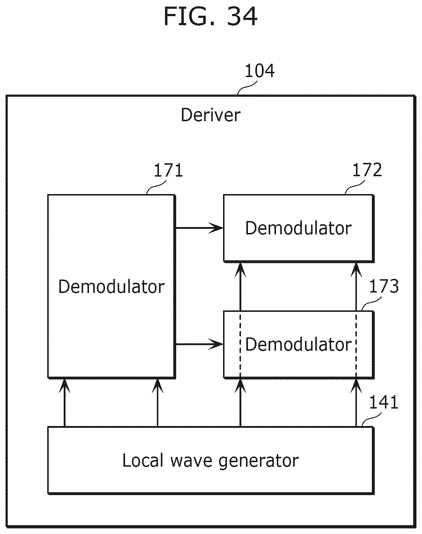

FIG. 34 is a block diagram illustrating a configuration example of a deriver in the case where two pairs of carrier waves are used.

[FIG. 35]

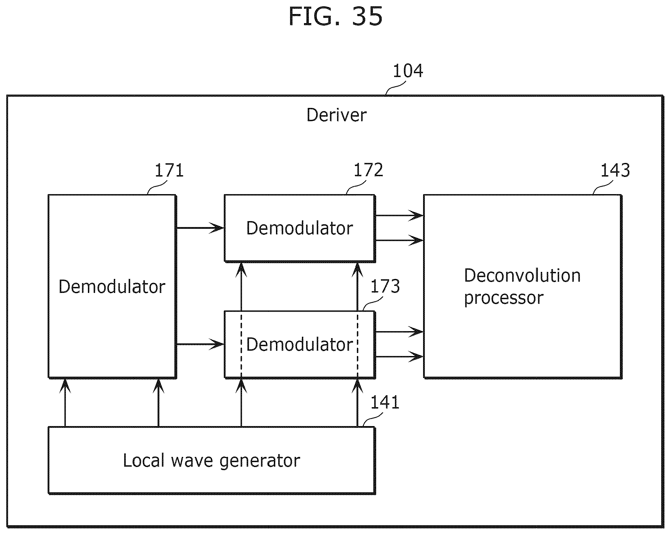

FIG. 35 is a block diagram illustrating another configuration example of a deriver in the case where two pairs of carrier waves are used.

[FIG. 36]

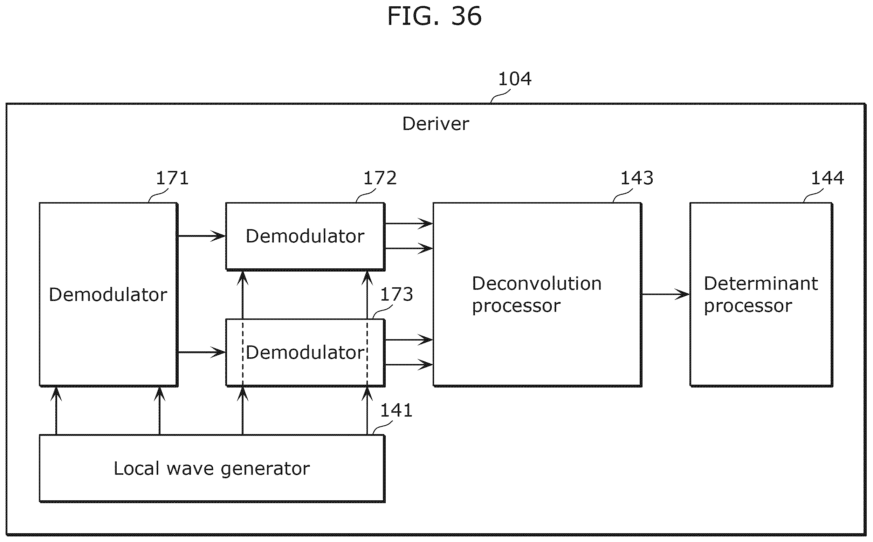

FIG. 36 is a block diagram illustrating still another configuration example of a deriver in the case where two pairs of carrier waves are used.

[FIG. 37]

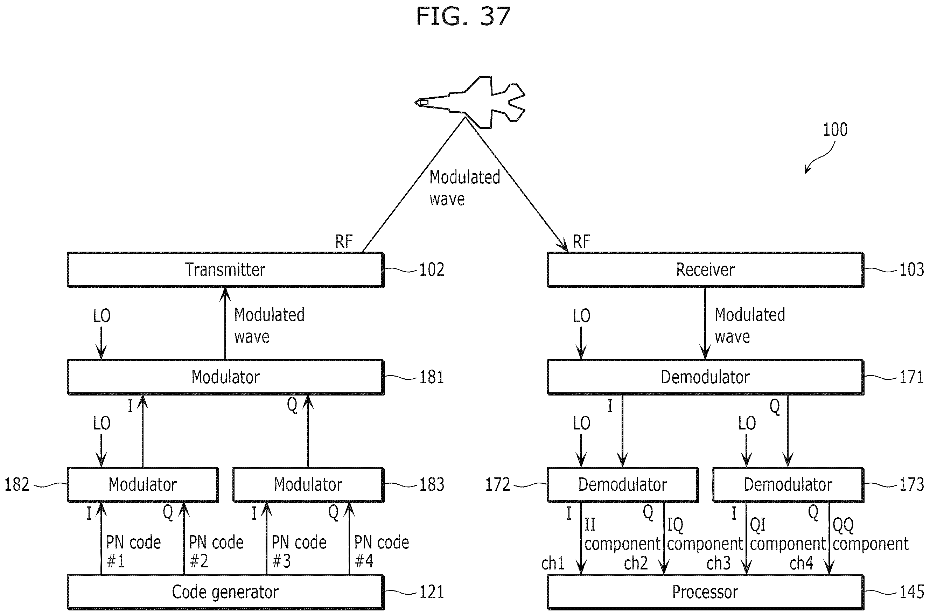

FIG. 37 is a conceptual diagram illustrating a process example in the case where two pairs of carrier waves are used.

[FIG. 38]

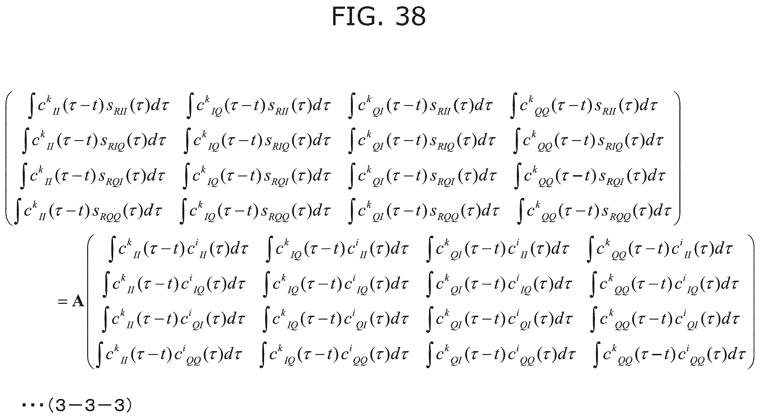

FIG. 38 is a diagram illustrating Expression (3-3-3).

[FIG. 39]

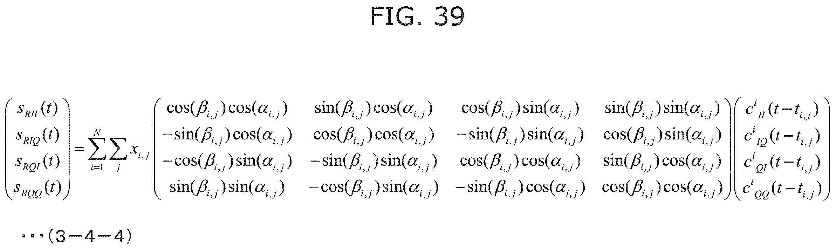

FIG. 39 is a diagram illustrating Expression (3-4-4).

[FIG. 40]

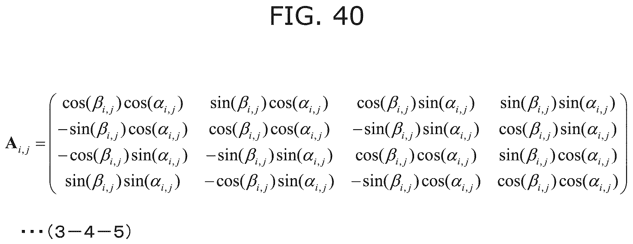

FIG. 40 is a diagram illustrating Expression (3-4-5).

[FIG. 41]

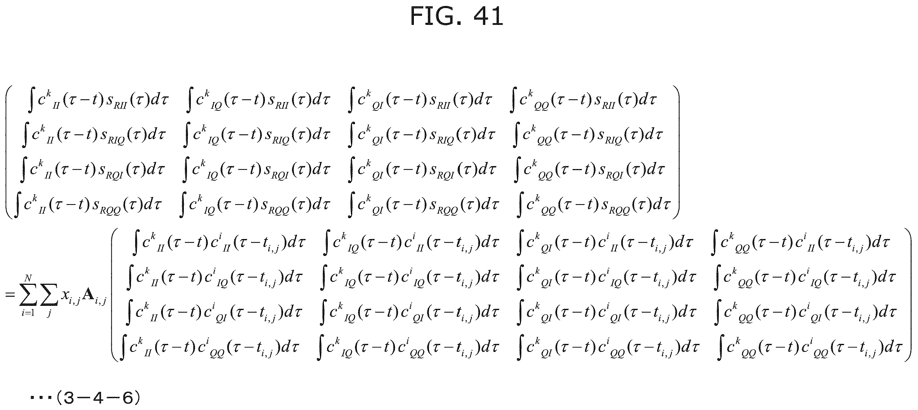

FIG. 41 is a diagram illustrating Expression (3-4-6).

[FIG. 42]

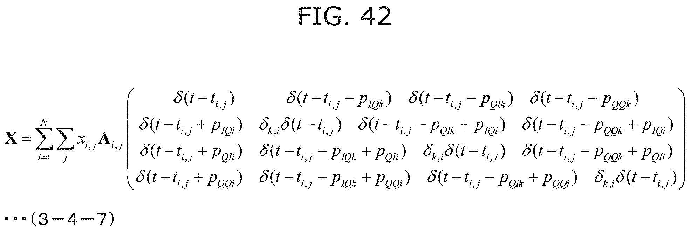

FIG. 42 is a diagram illustrating Expression (3-4-7).

[FIG. 43]

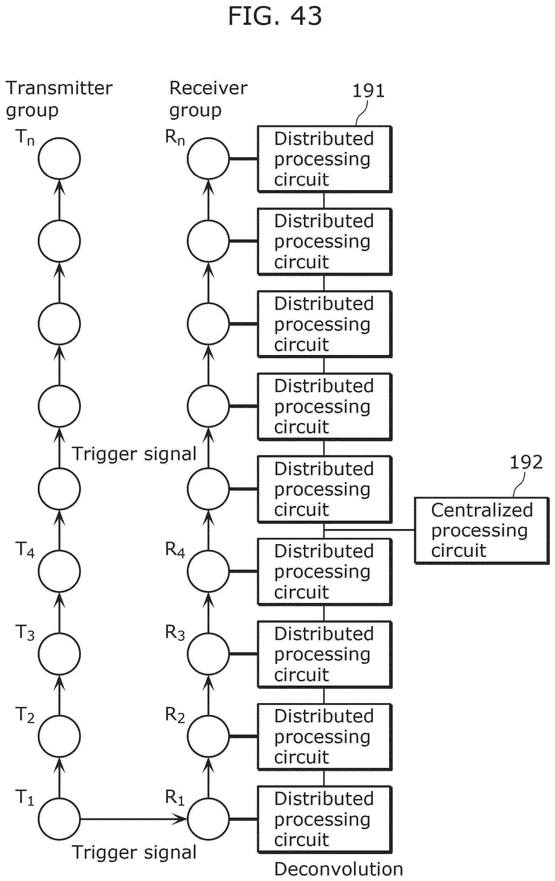

FIG. 43 is a conceptual diagram illustrating synchronization of the plurality of transmitters and the plurality of receivers.

[FIG. 44]

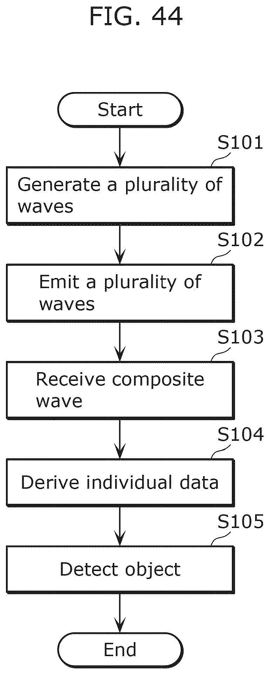

FIG. 44 is a flowchart illustrating a basic operation example of the detection device according to the embodiment.

[Description of Embodiments]

FIG. 1 is a conceptual diagram illustrating simultaneous transmission and simultaneous reception of a plurality of waves at a plurality of transmitters and a plurality of receivers. In FIG. 1, n transmitters $T_1$, $T_2$, ..., $T_n$, and n receivers $R_1$, $R_2$, ..., $R_n$ are present.

For example, n waves are simultaneously emitted from n transmitters $T_1$, $T_2$, ..., $T_n$, reflected by an object, and enter any of n receivers $R_1$, $R_2$, ..., $R_n$. If data can be obtained with respect to each of combinations of n transmitters $T_1$, $T_2$, ..., $T_n$ and n receivers $R_1$, $R_2$, ..., $R_n$, the object can be efficiently detected according to the data obtained with respect to each combination.

That is, if n×n-dimension data corresponding to the plurality of combinations of n transmitters $T_1$, $T_2$, ..., $T_n$ and n receivers $R_1$, $R_2$, ..., $R_n$ can be used, the object can be efficiently detected.

FIG. 2 is a conceptual diagram illustrating interference occurring by simultaneous transmission and simultaneous reception of the plurality of waves at the plurality of transmitters and the plurality of receivers.

As illustrated in FIG. 2, scattered waves of the waves emitted from all transmitters $T_1$, $T_2$, ..., $T_n$ enter, for example, receiver $R_j$, and interfere. Accordingly, it is difficult to distinguish which transmitter $T_i$ has transmitted the waves received by receiver $R_j$. It is a difficult problem to determine how to extract individual data (time evolution waveform) corresponding to the combination of transmitter $T_i$ and receiver $R_j$ from received data (time evolution waveform) obtained by receiver $R_j$.

In view of this, for example, a detection device according to one aspect of the present disclosure includes: a generator that generates a plurality of waves; a plurality of transmitters that emit the plurality of waves, the plurality of waves each being emitted by a corresponding one of the plurality of transmitters; a plurality of receivers each of which receives one or more of the plurality of waves as a composite wave; a deriver that derives individual data for each combination of one of the plurality of transmitters and one of the plurality of receivers by deriving, from received data of each of the plurality of receivers, the individual data corresponding to each of the plurality of transmitters; and a detector that detects an object that affects at least one of the plurality of waves, according to the individual data. The generator: generates a plurality of pulse train groups and at least one carrier wave, the plurality of pulse train groups corresponding to a plurality of code groups each of which includes a reference code and one or more individual codes and that are different from each other; and modulates the plurality of pulse train groups using the at least one carrier wave, to generate a plurality of modulated waves as the plurality of waves. The deriver: demodulates data to be processed from the received data of each of the plurality of receivers, the data to be processed corresponding to the plurality of pulse train groups; and derives the individual data from the data to be processed, the reference code is common to the plurality of code groups. A plurality of individual codes in the plurality of code groups are different from each other.

Accordingly, even in the case where the plurality of transmitters and the plurality of receivers are used at the same time, the detection device can obtain individual data with respect to each of combinations of the transmitters and the receivers because the plurality of waves respectively correspond to a plurality of code groups different from each other. Consequently, the detection device can detect the object at high resolution and high speed. Accordingly, the detection device can appropriately detect an object moving at high speed.

Moreover, for example, the generator: generates a plurality of pairs of pulse trains and a pair of carrier waves as the plurality of pulse train groups and the at least one carrier wave, respectively, the plurality of pairs of pulse trains corresponding to a plurality of two-dimensional vector codes each of which includes the reference code and one individual code as two elements and that are different from each other, the pair of carrier waves having phases that are orthogonal to each other; and modulates the plurality of pairs of pulse trains using the pair of carrier waves, to generate the plurality of modulated waves. The deriver demodulates the data to be processed from the received data of each of the plurality of receivers, the data to be processed corresponding to the plurality of pairs of pulse trains. The reference code is common to the plurality of two-dimensional vector codes. The plurality of individual codes in the plurality of two-dimensional vector codes are different from each other.

Accordingly, the detection device can efficiently transmit the plurality of modulated waves corresponding to the plurality of two-dimensional vector codes according to the pair of carrier waves.

Furthermore, for example, the reference code and the plurality of individual codes are a plurality of orthogonal codes that are orthogonal to each other.

Accordingly, the detection device can efficiently obtain the individual data with respect to each of the combinations of the transmitters and the receivers according to the orthogonality of the codes.

Moreover, for example, the reference code and the plurality of individual codes are a plurality of cyclic codes each of which has a different shift amount.

Accordingly, the detection device can efficiently obtain the individual data with respect to each of the combinations of the transmitters and the receivers according to the difference in shift amount.

Furthermore, for example, the reference code and the plurality of individual codes are a plurality of pseudo-noise (PN) codes that are orthogonal to each other and each of which has a different shift amount.

Accordingly, the detection device can efficiently obtain the individual data with respect to each of the combinations of the transmitters and the receivers according to the characteristics of the PN code.

Moreover, for example, every time a condition is satisfied, the generator selects a set of the reference code and the plurality of individual codes from a plurality of candidate sets, to change the reference code and the plurality of individual codes.

Accordingly, the detection device can adaptationally change the plurality of codes related to the plurality of waves. Accordingly, the detection device can prevent accidental reduction in distinguishability, and appropriately obtain the individual data with respect to each of the combinations of the transmitters and the receivers.

Furthermore, for example, the generator selects the set randomly from the plurality of candidate sets.

Accordingly, the detection device can prevent accidental reduction in distinguishability according to the randomness, and appropriately obtain the individual data with respect to each of the combinations of the transmitters and the receivers.

Moreover, for example, the deriver derives the individual data according to a computational result obtained by performing deconvolution on the data to be processed, using each of the plurality of two-dimensional vector codes.

Accordingly, the detection device can efficiently obtain the individual data with respect to each of the combinations of the transmitters and the receivers according to the deconvolution corresponding to the two-dimensional vector code.

Furthermore, for example, the deriver derives the individual data according to a determinant for the computational result.

Accordingly, the detection device can efficiently obtain the individual data with respect to each of the combinations of the transmitters and the receivers according to the deconvolution corresponding to the two-dimensional vector code and the determinant.

Moreover, for example, the generator: generates (i) a plurality of pairs of first pulse trains and a plurality of pairs of second pulse trains and (ii) a pair of first carrier waves and a pair of second carrier waves as the plurality of pulse train groups and the at least one carrier wave, respectively, the plurality of pairs of first pulse trains corresponding to a plurality of first two-dimensional vector codes that are different from each other, the plurality of pairs of second pulse trains corresponding to a plurality of second two-dimensional vector codes that are different from each other, the pair of first carrier waves having phases that are orthogonal to each other, the pair of second carrier waves having phases that are orthogonal to each other; modulates the plurality of pairs of first pulse trains using the pair of first carrier waves, to generate a plurality of first modulated waves; modulates the plurality of pairs of second pulse trains using the pair of first carrier waves, to generate a plurality of second modulated waves; and modulates the plurality of first modulated waves and the plurality of second modulated waves using the pair of second carrier waves, to generate the plurality of modulated waves. The deriver: demodulates first data to be processed from the received data of each of the plurality of receivers, the first data to be processed corresponding to the plurality of first modulated waves and the plurality of second modulated waves; and demodulates, as the data to be processed, second data to be processed from the first data to be processed, the second data to be processed corresponding to the plurality of pairs of first pulse trains and the plurality of pairs of second pulse trains. Each of the plurality of first two-dimensional vector codes includes the reference code and a first individual code as two elements. Each of the plurality of second two-dimensional vector codes includes a second individual code and a third individual code as two elements. The reference code is common to the plurality of first two-dimensional vector codes. A plurality of first individual codes in the plurality of first two-dimensional vector codes and a plurality of second individual codes and a plurality of third individual codes in the plurality of second two-dimensional vector codes are different from each other. A frequency of the pair of first carrier waves and a frequency of the pair of second carrier waves are different from each other.

Accordingly, the detection device can efficiently transmit the plurality of modulated waves corresponding to the plurality of pairs of two-dimensional vector codes according to the two pairs of carrier waves.

Furthermore, for example, the reference code, the plurality of first individual codes, the plurality of second individual codes, and the plurality of third individual codes are a plurality of orthogonal codes that are orthogonal to each other.

Accordingly, the detection device can efficiently obtain the individual data with respect to each of the combinations of the transmitters and the receivers according to the orthogonality of the codes.

Moreover, for example, the reference code, the plurality of first individual codes, the plurality of second individual codes, and the plurality of third individual codes are a plurality of cyclic codes each of which has a different shift amount.

Accordingly, the detection device can efficiently obtain the individual data with respect to each of the combinations of the transmitters and the receivers according to the difference in shift amount.

Furthermore, for example, the reference code, the plurality of first individual codes, the plurality of second individual codes, and the plurality of third individual codes are a plurality of pseudo-noise (PN) codes that are orthogonal to each other and each of which has a different shift amount.

Accordingly, the detection device can efficiently obtain the individual data with respect to each of the combinations of the transmitters and the receivers according to the characteristics of the PN code.

Moreover, for example, every time a condition is satisfied, the generator selects a set of the reference code, the plurality of first individual codes, the plurality of second individual codes, and the plurality of third individual codes from a plurality of candidate sets, to change the reference code, the plurality of first individual codes, the plurality of second individual codes, and the plurality of third individual codes.

Accordingly, the detection device can adaptationally change the plurality of codes related to the plurality of waves. Accordingly, the detection device can prevent accidental reduction in distinguishability, and appropriately obtain the individual data with respect to each of the combinations of the transmitters and the receivers.

Furthermore, for example, the generator selects the set randomly from the plurality of candidate sets.

Accordingly, the detection device can prevent accidental reduction in distinguishability according to the randomness, and appropriately obtain the individual data with respect to each of the combinations of the transmitters and the receivers.

Moreover, for example, the deriver derives the individual data according to a computational result obtained by performing deconvolution on the second data to be processed, using each combination of one of the plurality of first two-dimensional vector codes and a corresponding one of the plurality of second two-dimensional codes.

Accordingly, the detection device can efficiently obtain the individual data with respect to each of the combinations of the transmitters and the receivers according to the deconvolution corresponding to the pair of two-dimensional vector codes.

Furthermore, for example, the deriver derives the individual data according to a determinant for the computational result.

Accordingly, the detection device can efficiently obtain the individual data with respect to each of the combinations of the transmitters and the receivers according to the deconvolution corresponding to the pair of two-dimensional vector codes and the determinant.

A detection method according to one aspect of the present disclosure includes: generating a plurality of waves; emitting the plurality of waves from a plurality of transmitters, the plurality of waves each being emitted from a corresponding one of the plurality of transmitters; receiving, by each of a plurality of receivers, one or more of the plurality of waves as a composite wave; deriving individual data for each combination of one of the plurality of transmitters and one of the plurality of receivers by deriving, from received data of each of the plurality of receivers, the individual data corresponding to each of the plurality of transmitters; and detecting an object that affects at least one of the plurality of waves, according to the individual data. In the generating: a plurality of pulse train groups and at least one carrier wave are generated, the plurality of pulse train groups corresponding to a plurality of code groups each of which includes a reference code and one or more individual codes and that are different from each other; and the plurality of pulse train groups are modulated using the at least one carrier wave, to generate a plurality of modulated waves as the plurality of waves. In the deriving: data to be processed is demodulated from the received data of each of the plurality of receivers, the data to be processed corresponding to the plurality of pulse train groups; and the individual data is derived from the data to be processed. The reference code is common to the plurality of code groups. A plurality of individual codes in the plurality of code groups are different from each other.

Accordingly, even in the case where the plurality of transmitters and the plurality of receivers are simultaneously used, the individual data with respect to each of combinations of the transmitters and the receivers can be obtained because the plurality of waves respectively correspond to a plurality of code groups different from each other. Consequently, the object can be detected at high resolution and at high speed. Accordingly, the object moving at high speed can be appropriately detected.

Hereinafter, an embodiment is described with reference to the drawings. It should be noted that the embodiment described below shows a general or specific example. Numerical values, shapes, materials, configuration elements, the arrangement and connection of the configuration elements, steps, order of the steps, etc. shown in the following embodiment are mere examples, and are thus not intended to limit the scope of the claims.

In the following description, radio waves, such as microwaves, are mainly assumed as waves. However, the waves are not limited to radio waves, such as microwaves, and may be sounds, light or the like. A moving object, such as an aircraft, is assumed as an object to be detected. However, the object to be detected may be a stationary object or the like. Emission of waves is sometimes represented as transmission of waves.

Separation of the entirety into individual parts is sometimes represented as separation of individual parts from the entirety. A code in the following description sometimes means a codeword or a set of codewords. A PN code vector in the following description may be represented as an PN code.

[Embodiment]

<Basic configuration example>

FIG. 3 is a conceptual diagram illustrating a plurality of transmitters, a plurality of receivers, and a deriver according to the present embodiment. Specifically, FIG. 3 illustrates transmitters $T_1$, $T_2$, ..., $T_n$, receivers $R_1$, $R_2$, ..., $R_n$, and deriver 104. Deriver 104 may be provided in accordance with receivers $R_1$, $R_2$, ..., $R_n$ in a distributed manner.

For example, transmitters $T_1$, $T_2$, ..., $T_n$, and receivers $R_1$, $R_2$, ..., $R_n$ are arranged in single lines. The waves are simultaneously emitted from respective transmitters $T_1$, $T_2$, ..., $T_n$, are reflected by an object, and are simultaneously received by receivers $R_1$, $R_2$, ..., $R_n$. Deriver 104 separates received data of each receiver $R_j$ into individual data $s_{ij}(t)$ of corresponding transmitter $T_i$. Deriver 104 thus obtains individual data $s_{ij}(t)$ for each combination of transmitter $T_i$ and corresponding receiver $R_j$.

FIG. 4 is a block diagram illustrating a configuration example of detection device 100. Detection device 100 includes generator 101, a plurality of transmitters 102, a plurality of receivers 103, deriver 104, and detector 105.

In the present disclosure, transmitter 102 is sometimes represented as transmitter T, and i-th transmitter 102 is sometimes represented as transmitter $T_i$. Receiver 103 is sometimes represented as receiver R, and i-th receiver 103 is sometimes represented as receiver $R_i$.

Generator 101 generates a plurality of waves corresponding to respective codes that are different from each other. The waves may be radio waves, light, sound or the like. For example, generator 101 generates n waves. Here, n is the number of transmitters 102. Generator 101 may be provided in a distributed manner corresponding to the plurality of transmitters 102.

The plurality of transmitters 102 emit the respective waves generated by generator 101. In this case, each transmitter 102 emits one of the waves generated by generator 101. For example, each transmitter 102 emits the wave into a medium. The medium may be air, water, earth, a vacuum or the like. Each transmitter 102 may be a transmission antenna. Transmitters 102 may be arranged in a single line, or need not be arranged in a single line. Transmitters 102 may be arranged at regular intervals, or need not be arranged at regular intervals.

Each of receivers 103 receives one or more of the waves emitted from transmitters 102, as a composite wave. For example, each receiver 103 receives the wave from the medium into which the waves have been emitted. Each receiver 103 may be a receiving antenna. Receivers 103 may be arranged in a single line, or need not be arranged in a single line. Receivers 103 may be arranged at regular intervals, or need not be arranged at regular intervals. The number of receivers 103 may differ from the number of transmitters 102.

Deriver 104 derives, from received data of each receiver 103, individual data corresponding to each transmitter 102, according to the signal of the wave emitted from the corresponding transmitter 102. Accordingly, deriver 104 derives the individual data for each combination of one of transmitters 102 and the corresponding one of receivers 103. Deriver 104 may be provided corresponding to receivers 103 in a distributed manner, or distributed and integrally with corresponding receiver 103.

Detector 105 detects an object that affects at least one of the waves emitted from transmitters 102, according to the individual data derived by deriver 104. For example, detector 105 detects the object in the medium into which the wave has been emitted. For example, detector 105 outputs a detection result. Detector 105 may display the detection result on a display device or the like, and may notify another device of the detection result.

According to the configuration described above, even in the case where the plurality of transmitters 102 and the plurality of receivers 103 are used at the same time, detection device 100 can obtain individual data for each of combinations of transmitters 102 and receivers 103. Consequently, detection device 100 can detect the object at high resolution and high speed. Accordingly, detection device 100 can appropriately detect the object moving at high speed.

Note that generator 101 may transmit waves to transmitters 102 in a wireless manner or transmit the waves in a wired manner. Likewise, each receiver 103 may transmit received data to deriver 104 in a wireless manner or transmit the received data in a wired manner. Likewise, deriver 104 may transmit individual data to detector 105 in a wireless manner or transmit the individual data in a wired manner.

FIG. 5 is a block diagram illustrating an entire configuration example of detection device 100. In this example, detection device 100 includes generator 101, the plurality of transmitters 102, the plurality of receivers 103, deriver 104, and detector 105 illustrated in FIG. 4, and further includes repeaters 106 and 107, and controller 108.

Repeater 106 repeats a plurality of waves from generator 101 to the plurality of transmitters 102. Repeater 107 repeats the plurality of waves from the plurality of receivers 103 to deriver 104. Each of repeaters 106 and 107 may repeat the waves as electric signals. The electric signals may be analog signals or digital signals.

Controller 108 controls operations of each configuration element included in detection device 100. Specifically, controller 108 controls operations of generator 101, the plurality of transmitters 102, the plurality of receivers 103, deriver 104, detector 105, and repeaters 106 and 107. Controller 108 may control start and stop of the operation of each configuration element, or change the operation mode or operation parameter of each configuration element.

Note that the plurality of configuration elements constituting detection device 100 may be capable of communicating with each other in a wireless manner or a wired manner. Each of repeaters 106 and 107, and controller 108 may be provided or need not be provided depending on the environment in which detection device 100 is used.

FIG. 6 is a block diagram illustrating a configuration example of generator 101. As illustrated in FIG. 6, generator 101 may include code generator 121.

In this example, code generator 121 generates a plurality of pulse trains corresponding to respective codes that are different from each other. For example, code generator 121 generates n pulse trains corresponding to n codes that are different from each other. Here, n is the number of transmitters 102. Generator 101 may generate the plurality of pulse trains generated by code generator 121, as a plurality of waves corresponding to respective signals that are different from each other.

The codes that are different from each other may be orthogonal codes that are orthogonal to each other. The plurality of codes that are different from each other may be a plurality of cyclic codes that have shift amounts different from each other. The plurality of codes that are different from each other may be a plurality of PN (Pseudo-Noise) codes that are orthogonal to each other and each of which has a different shift amount.

The PN codes are cyclic codes based on a Galois field. As for the cyclic code, a result obtained by cyclically permuting (cyclically shifting) a codeword of the cyclic code is also a codeword of the cyclic code. For example, the codeword of the cyclic code is represented as in following Expression (1-1).

[Math. 1]

$$c_1 = \left\{ a_{n-1}, a_{n-2}, \cdots, a_2, a_1, a_0 \right\}$$

$$\cdots (1-1)$$

A result obtained, as in following Expression (1-2), by cyclically permuting the codeword of Expression (1-1) is also a codeword of the cyclic code.

[Math. 2]

$$c_2 = \left\{ a_{n-2}, a_{n-3}, \cdots, a_1, a_0, a_{n-1} \right\}$$
$$c_3 = \left\{ a_{n-3}, a_{n-4}, \cdots, a_0, a_{n-1}, a_{n-2} \right\}$$
$$\cdots \qquad \cdots$$
$$c_n = \left\{ a_0, a_{n-1}, \cdots, a_3, a_2, a_1 \right\}$$

$$\cdots (1-2)$$

Next, the definition and properties of the PN series are described. The PN series can be defined as a code that satisfies the following randomness properties (i), (ii), and (iii).

(i) Balance property

In each single cycle of the series, the number of appearances of "1" differs from the number of appearances of "0" by one at most.

(ii) Run property

Among multiple running items "running 1" and multiple running items "running 0" included in one cycle, half of the multiple running items has a length of "1", 1/4 of the items has a length of "2", and 1/8 of the items has a length of "3". Hereinafter, a similar rule is also satisfied. That is, the running items having a length of k are present at a rate of 1/2k.

(iii) Correlation property

In a case where the series is permuted and codewords are compared with respect to each term in every state, the number of matching terms and the number of not matching terms differ from each other by one at most.

Although detailed description is omitted, the PN series generating method is summarized as follows. Note that it is practically preferable that the suffixes of codes be in the inverse order.

(i) First, a k-th primitive polynomial is obtained.
(ii) Next, a linear regression equation, such as following Expression (1-3), is constructed from the coefficient of the primitive polynomial. Here, $h_j$ corresponds to the coefficient. [Math. 3]

$$a_i = \sum_{j=1}^{k} h_j a_{i-j} \quad (\mathrm{mod}\ 2), \quad i = k, k+1, k+2, \cdots$$

$$\cdots (1-3)$$

(iii) Subsequently, k freely selected initial values ($a_0$, $a_1$, $a_2$, ..., $a_{k-1}$) are provided, and ($a_k$, $a_{k+1}$, $a_{k+2}$, ..., $a_{n-1}$) are calculated from the above Expression (1-3).

The PN code has an interesting property that a code obtained by permuting (shifting) a certain code is orthogonal to the original code. However, a code generated from certain initial values ($a_0$, $a_1$, $a_2$, ..., $a_{k-1}$) is not orthogonal to a code obtained from other initial values ($a_0'$, $a_1'$, $a_2'$, ..., $a_{k-1}'$).

FIG. 7 is a block diagram illustrating a configuration example of code generator 121. In this example, code generator 121 includes memory 131 that stores a code set. The code set includes a plurality of codes that are different from each other. The characteristics of the plurality of codes included in the code set are the same as the characteristics of the plurality of codes described with reference to FIG. 6.

In this example, code generator 121 may generate a plurality of pulse trains corresponding to the respective codes included in the code set, according to the code set stored in memory 131. Generator 101 may then generate the plurality of pulse trains generated by code generator 121, as a plurality of waves that are to be emitted. The plurality of pulse trains may then be emitted from respective transmitters 102.

The number of codes included in the code set is the number of transmitters 102 or more. If the number of them is larger than the number of transmitters 102, some of them need not be used to transmit waves.

FIG. 8 is a block diagram illustrating another configuration example of code generator 121. In this example, code generator 121 includes selector 132 in addition to memory 131 illustrated in FIG. 7. In this example, memory 131 stores a plurality of code set candidates. The plurality of code set candidates are different from each other. The characteristics of the plurality of codes included in each code set candidate are the same as the characteristics of the plurality of codes included in the code set described with reference to FIG. 7.

In this example, selector 132 selects a code set from among the code set candidates. Selector 132 generates a plurality of pulse trains corresponding to the codes included in the selected code set.

For example, every time the condition for changing the plurality of codes related to the plurality of waves to be emitted is satisfied, selector 132 changes the plurality of codes by selecting the code set from among the code set candidates. Accordingly, detection device 100 can adaptationally change the plurality of codes related to the plurality of waves to be emitted. Consequently, detection device 100 can prevent accidental reduction in distinguishability, and can appropriately identify data corresponding to the wave emitted from each transmitter 102.

Every time the plurality of waves are transmitted from respective transmitters 102, selector 132 may change the plurality of codes by selecting the code set. Alternatively, selector 132 may change the plurality of codes by selecting the code set at regular time periods. Alternatively, selector 132 may change the plurality of codes by selecting the code set every time of receiving a control signal from controller 108.

FIG. 9 is a block diagram illustrating still another configuration example of code generator 121. In this example, code generator 121 includes random number generator 133 in selector 132.

In this example, random number generator 133 generates a random number. Selector 132 randomly selects a code set from among code set candidates according to a random number obtained from random number generator 133.

For example, an identification number is allocated to each code set candidate in the range of the number of code set candidates. Random number generator 133 generates a random number in the range of the number of code set candidates. Selector 132 selects, as a code set, a code set candidate to which the random number obtained from random number generator 133 is allocated as an identification number. Accordingly, the code set is randomly selected from among the code set candidates.

In this case, selector 132 generates a plurality of pulse trains corresponding to the codes included in the randomly selected code sets.

FIG. 10 is a block diagram illustrating a configuration example of deriver 104. In this example, deriver 104 includes deconvolution processor 143.

In this example, deconvolution processor 143 performs deconvolution for the received data of each receiver 103, with the code corresponding to the wave emitted by corresponding transmitter 102.

Accordingly, deconvolution processor 143 can obtain a component corresponding to the code from the received data. Consequently, detection device 100 can derive individual data corresponding to each transmitter 102, from the received data of each receiver 103, and can derive the individual data, for each of combinations of transmitters 102 and receivers 103.

<Configuration example using carrier wave>

FIG. 11 is a block diagram illustrating a configuration example of generator 101 in a case where a carrier wave is used. In this example, generator 101 includes code generator 121, carrier wave generator 122, modulator 123, and amplifier 124. Code generator 121 is a configuration element similar to that in any of the examples in FIGS. 6 to 9.

In this example, carrier wave generator 122 generates a carrier wave. The carrier wave may be a sine wave.

In this example, modulator 123 modulates a plurality of pulse trains generated by code generator 121, with the carrier wave generated by carrier wave generator 122. Thus, modulator 123 generates a plurality of modulated waves.

In this example, amplifier 124 amplifies the plurality of modulated waves generated by modulator 123.

In this example, generator 101 generates the plurality of pulse trains and the carrier wave, and modulates the plurality of pulse trains with the carrier wave, thereby generating the plurality of modulated waves as a plurality of waves to be emitted. For example, generator 101 generates n pulse trains, and the carrier wave, and modulates the n pulse trains with the carrier wave, thereby generating n modulated waves as n waves to be emitted. The n modulated waves are emitted respectively from n transmitters 102.

FIG. 12 is a block diagram illustrating a configuration example of deriver 104 in the case where the carrier wave is used. In this example, deriver 104 includes local wave generator 141, and demodulator 142.

In this example, local wave generator 141 generates a local wave corresponding to the carrier wave generated by carrier wave generator 122 or the like. For example, the local wave has the same frequency as the carrier wave. The phase of the local wave may be synchronized with the phase of the carrier wave, or need not be synchronized.

In this example, demodulator 142 demodulates the received data of each receiver 103, with the local wave generated by local wave generator 141, to recover data to be processed. The data to be processed corresponds to the plurality of pulse trains. Deriver 104 then derives individual data from the data to be processed, for each of combinations of transmitters 102 and receivers 103.

FIG. 13 is a block diagram illustrating another configuration example of deriver 104 in the case where the carrier wave is used. In this example, deriver 104 includes deconvolution processor 143 in addition to local wave generator 141 and demodulator 142 illustrated in FIG. 12.

In this example, deconvolution processor 143 performs deconvolution for the data to be processed demodulated by demodulator 142, with the code corresponding to the wave emitted by corresponding transmitter 102.

Accordingly, deconvolution processor 143 can obtain a component corresponding to the code, from the data to be processed. Consequently, detection device 100 can derive individual data corresponding to each transmitter 102, from the received data of each receiver 103, and can derive the individual data, for each of combinations of transmitters 102 and receivers 103.

<Configuration example using pair of carrier waves>

FIG. 14 is a block diagram illustrating a configuration example of generator 101 in a case where a pair of carrier waves are used. In this example, generator 101 includes code generator 121, carrier wave generator 122, modulators 151 and 152, combiner 153, and amplifier 124.

In this example, code generator 121 generates a plurality of pairs of pulse trains corresponding to respective two-dimensional vector codes that are different from each other. For example, code generator 121 generates n pairs of pulse trains corresponding to n two-dimensional vector codes that are different from each other. Here, n is the number of transmitters 102. Each two-dimensional vector code includes a reference code and an individual code as two elements. The reference code is common to the plurality of two-dimensional vector codes. The reference code common to the plurality of two-dimensional vector codes, and the plurality of individual codes are different from each other.

The common reference code and the plurality of individual codes may be a plurality of orthogonal codes that are orthogonal to each other. The common reference code and the plurality of individual codes may be a plurality of cyclic codes that have shift amounts different from each other. The common reference code and the plurality of individual codes may be a plurality of PN codes that are orthogonal to each other and each of which has a different shift amount.

In this example, carrier wave generator 122 generates a pair of carrier waves that have phases orthogonal to each other.

In this example, modulator 151 modulates the pulse trains on one side from the plurality of pairs of pulse trains generated by code generator 121, with one carrier wave from the pair of carrier waves generated by carrier wave generator 122. Specifically, for example, modulator 151 modulates the plurality of pulse trains each corresponding to the common reference code, with one carrier wave from the pair of carrier waves. Thus, modulator 151 generates a plurality of modulated waves.

In this example, modulator 152 modulates the pulse trains on the other side of the plurality of pairs of pulse trains generated by code generator 121, with the other carrier wave from the pair of carrier waves generated by carrier wave generator 122. Specifically, for example, modulator 152 modulates the plurality of pulse trains corresponding to the plurality of individual codes, with the other carrier wave. Thus, modulator 152 generates a plurality of modulated waves.

In this example, combiner 153 combines the plurality of modulated waves generated by modulator 151, with the plurality of modulated waves generated by modulator 152. Thus, combiner 153 newly generates a plurality of modulated waves. For example, combiner 153 combines n modulated waves generated by modulator 151, with n modulated waves generated by modulator 152, thereby newly generating n modulated waves.

In this example, amplifier 124 amplifies the plurality of modulated waves generated by combiner 153.

In this example, generator 101 generates a plurality of pairs of pulse trains and a pairs of carrier waves, and modulates the plurality of pairs of pulse trains with the pair of carrier waves, thereby generating the plurality of modulated waves as a plurality of waves to be emitted. For example, generator 101 generates n pairs of pulse trains, and a pair of carrier waves, and modulates the n pairs of pulse trains with the pair of carrier wave, thereby generating n modulated waves as n waves to be emitted. The n modulated waves are emitted respectively from n transmitters 102.

FIG. 15 is a block diagram illustrating a configuration example of code generator 121 in the case where the pair of carrier waves are used. In this example, code generator 121 includes memory 131 that stores a code set. The code set includes a plurality of two-dimensional vector codes that are different from each other. The characteristics of the plurality of two-dimensional vector codes included in the code set are the same as the characteristics of the plurality of two-dimensional vector codes described with reference to FIG. 14.

In this example, code generator 121 may generate a plurality of pairs of pulse trains corresponding to the respective two-dimensional vector codes included in the code set, according to the code set stored in memory 131. Generator 101 may then modulate the plurality of pairs of pulse trains generated by code generator 121 with the pair of carrier waves, thereby generating the plurality of modulated waves as a plurality of waves to be emitted. The plurality of modulated waves may then be emitted from the respective transmitters 102.

The number of two-dimensional vector codes included in the code set is the number of transmitters 102 or more. If the number of them is larger than the number of transmitters 102, some of them need not be used to transmit waves.

FIG. 16 is a block diagram illustrating another configuration example of code generator 121 in the case where the pair of carrier waves are used. In this example, code generator 121 includes selector 132 in addition to memory 131 illustrated in FIG. 15. In this example, memory 131 stores a plurality of code set candidates. The plurality of code set candidates are different from each other. Each code set candidate includes a plurality of two-dimensional vector codes that have the same characteristics as the characteristics of the two-dimensional vector codes included in the code set described using FIG. 15.

In this example, selector 132 selects a code set from among the code set candidates. Selector 132 generates a plurality of pairs of pulse trains corresponding to the two-dimensional vector codes included in the selected code set.

In this example, similar to the example in FIG. 8, every time the condition for changing the plurality of codes related to the plurality of waves to be emitted is satisfied, selector 132 changes the plurality of two-dimensional vector codes by selecting the code set from among the code set candidates.

FIG. 17 is a block diagram illustrating still another configuration example of code generator 121 in the case where the pair of carrier waves are used. In this example, code generator 121 includes random number generator 133 in selector 132. Similar to the example in FIG. 9, random number generator 133 generates a random number. Selector 132 randomly selects a code set from among code set candidates according to a random number obtained from random number generator 133.

In this example, selector 132 generates a plurality of pairs of pulse trains corresponding to the plurality of two-dimensional vector codes included in the randomly selected code set.

FIG. 18 is a block diagram illustrating a configuration example of deriver 104 in the case where the pair of carrier waves are used. In this example, deriver 104 includes local wave generator 141, and demodulator 142.

In this example, local wave generator 141 generates a pair of local waves corresponding to the pair of carrier waves generated by carrier wave generator 122 or the like. For example, the pair of local waves have the same frequency as the pair of carrier waves, and are orthogonal to each other. The phase of the pair of local waves may be synchronized with the phase of the pair of carrier waves, or need not be synchronized.

In this example, demodulator 142 demodulates the received data of each receiver 103, with the pair of local waves generated by local wave generator 141, to recover data to be processed. The data to be processed corresponds to the plurality of pairs of pulse trains. Deriver 104 then derives individual data from the data to be processed, for each of combinations of transmitters 102 and receivers 103.

FIG. 19 is a block diagram illustrating another configuration example of deriver 104 in the case where the pair of carrier waves are used. In this example, deriver 104 includes deconvolution processor 143 in addition to local wave generator 141 and demodulator 142 illustrated in FIG. 18.

In this example, deconvolution processor 143 performs deconvolution for the data to be processed demodulated by demodulator 142, with the two-dimensional vector code corresponding to the wave emitted by corresponding transmitter 102.

Accordingly, deconvolution processor 143 can obtain a component corresponding to the two-dimensional vector code from the data to be processed. Consequently, detection device 100 can derive individual data corresponding to each transmitter 102, from the received data of each receiver 103, and can derive the individual data, for each of combinations of transmitters 102 and receivers 103.

FIG. 20 is a block diagram illustrating still another configuration example of deriver 104 in the case where the pair of carrier waves are used. In this example, deriver 104 includes determinant processor 144 in addition to local wave generator 141, demodulator 142, and deconvolution processor 143 illustrated in FIG. 19.

In this example, determinant processor 144 performs determinant computation, for the computational result of the deconvolution performed by deconvolution processor 143. Accordingly, deriver 104 can derive individual data in an appropriate form, for each of combinations of transmitters 102 and receivers 103, according to the deconvolution corresponding to the two-dimensional vector code and the determinant.

FIG. 21 is a conceptual diagram illustrating a process example in the case where a pair of carrier waves are used. In this example, code generator 121, modulator 154, transmitter 102, receiver 103, demodulator 142, and deconvolution processor 143 are described as configuration elements of detection device 100. These configuration elements correspond to the configuration elements described above. For example, modulator 154 corresponds to modulators 151 and 152 and the like. Processor 145 corresponds to deconvolution processor 143, determinant processor 144 and the like.

In this example, code generator 121 generates a pair of pulse trains corresponding to a pair of PN codes, and inputs the pulse trains into modulator 154. Modulator 154 modulates the pair of pulse trains corresponding to the pair of PN codes, with a pair of carrier waves (LO), thereby generating the modulated wave. Here, I/Q modulation, which is orthogonal modulation, is used. From the pair of pulse trains, one is used as an in-phase (I) component, and the other is used as an orthogonal (Q) component. For example, the frequency of the pair of carrier waves is 10 GHz.

Modulator 154 then inputs the modulated wave into each transmitter 102. Transmitters 102 emit the modulated waves. Subsequently, the modulated waves are reflected by an object.

Each receiver 103 then receives the modulated waves, and enters the modulated waves into the demodulator 142. It is assumed that the modulated waves include a plurality of modulated waves emitted from the plurality of transmitters 102 and reflected by the object in a mixed manner.

Demodulator 142 demodulates the modulated waves to an in-phase (I) component and an orthogonal (Q) component according to the pair of local waves (LO). Demodulator 142 then inputs the in-phase (I) component and the orthogonal (Q) component into processor 145. Processor 145 performs deconvolution for the in-phase (I) component and the orthogonal (Q) component, with the pair of PN codes. Accordingly, individual data for the pair of PN codes is obtained.

For example, to facilitate achievement of simultaneous transmission and simultaneous reception, the property of the PN code that a code obtained by permuting (shifting) a certain code is orthogonal to the original code can be used. This method is described using the two-dimensional PN code as in the following Expression (2-1-1).

[Math. 4]

$$\mathbf{c}^i = \begin{pmatrix} \mathbf{c}^i_I \\ \mathbf{c}^i_Q \end{pmatrix} = \begin{pmatrix} a_j \\ a_{p_i+j} \end{pmatrix} = \begin{pmatrix} a_0, a_1, a_2, \cdots, a_{M-1} \\ a_{p_i}, a_{p_i+1}, a_{p_i+2}, \cdots, a_{p_i+M-1} \end{pmatrix}$$

$$(j = 0, 1, 2, \cdots, M-1)$$

$$\cdots (2-1-1)$$

Here, the code on the second line is a code obtained by shifting the code on the first line by $p_i$ bit. These codes are modulated, and input into port I and port Q of modulator 154 illustrated in FIG. 21.

The signal modulated by orthogonal modulation based on QPSK (Quadrature Phase Shift Keying) is output as a time-series signal as in following Expression (2-1-2) from transmitter 102.

[Math. 5]

$$s(t) = c^i_I(t)\cos(2\pi f_c t) + c^i_Q(t)\sin(2\pi f_c t)$$

$$\cdots (2-1-2)$$

Here, $c^i_I(t)$ and $c^i_Q(t)$ represent the digital waveform (digital temporal waveform) corresponding to the temporal waveform in the case of digital transmission of the code. $f_c$ is the frequency of the pair of carrier waves. This signal is emitted from transmitter 102, reflected by the object, and received by receiver 103. The waveform of the signal received by receiver 103 can be represented as following Expression (2-1-3) when transmitter 102 and receiver 103 have the same frequency and phase.

[Math. 6]

$$s_R(t) = f_I(t)\cos(2\pi f_c t) + g_Q(t)\sin(2\pi f_c t)$$

$$f_I(t) = \sum_j x_j c^i{}_I(t - t_j)$$

$$g_Q(t) = \sum_j y_j c^i{}_Q(t - t_j)$$

$$\cdots (2 - 1 - 3)$$

Here, $f_I(t)$ and $g_Q(t)$ are the I component and the Q component of the detected intermediate frequency (IF) signal. $\{x_j, y_j\}$ is the amplitude of the signal returned at $t = t_j$. In Expression (2-1-3), j corresponds to the j-th reflection point. Next, deconvolution is performed for $f_I(t)$ and $g_Q(t)$ with code ($c^i{}_I$, $c^i{}_Q$). [Math. 7]

$$F_I(t) = \int c^i{}_I(\tau - t) f_I(\tau)\, d\tau = \sum_j x_j \delta(t - t_j)$$

$$G_Q(t) = \int c^i{}_Q(\tau - t) g_Q(\tau)\, d\tau = \sum_j y_j \delta(t - t_j)$$

$$\cdots (2 - 1 - 4)$$

This result is represented as following Expression (2-1-5) using a matrix representation. Here, ideally, $x_j = y_j$. [Math. 8]

$$\begin{pmatrix} 0, 0, 0, x_1, 0, 0, x_2, 0, 0, 0, 0, x_3, 0, 0, \cdots \\ 0, 0, 0, y_1, 0, 0, y_2, 0, 0, 0, 0, y_3, 0, 0, \cdots \end{pmatrix}$$

$$\left( -, -, -, t_1, -, -, t_2, -, -, -, -, t_3, -, -, \cdots \right)$$

$$\cdots (2 - 1 - 5)$$

By performing the deconvolution with the code used for transmission, a pulse having the substantially same size at the same time. In a case of deconvolution with code ($c^k{}_I$, $c^k{}_Q$) different from the transmission code, results as in following Expressions (2-1-6) and (2-1-7) are obtained. For simplicity, it is assumed that code ($c^k{}_I$, $c^k{}_Q$) different from the transmission code is shifted by one bit from the transmission code ($c^i{}_I$, $c^i{}_Q$) with respect to Q (i.e., $p_k = p_i + 1$).
[Math. 9]

$$F_D(t) = \int c^k{}_I(\tau - t) f(\tau)\, d\tau = \sum_j x_j \delta(t - t_j)$$

$$G_D(t) = \int c^k{}_Q(\tau - t) g(\tau)\, d\tau = \sum_j y_j \delta(t - t_j - 1)$$

$$\cdots (2 - 1 - 6)$$

[Math. 10]

$$\begin{pmatrix} 0,0,0,x_1,0,0,x_2,0,0,0,0,x_3,0,0,\cdots \\ 0,0,0,0,y_1,0,0,y_2,0,0,0,0,y_3,0,\cdots \end{pmatrix}$$

$$\left(-,-,-,t_1,-,-,t_2,-,-,-,-,t_3,-,-,\cdots\right)$$

$$\cdots (2-1-7)$$

On the first line and the second line of Expression (2-1-7) there is no pulse at the same time.

Based on the two types of results, signals from the plurality of transmitters 102 received in an interfering manner by one receiver 103 can be separated with respect to each transmitter 102. In this example, codes $c_Q$ of different transmitters 102 are shifted by one bit. In actuality, it is designed such that code $c_Q$ is shifted by several tens of bits or more.

In a case where a highly accurate crystal oscillator is used to generate the carrier wave, the frequency accuracy is about $10^{-10}$. Consequently, in a case where the frequency of the carrier wave is 10 GHz, an error about 1 Hz occurs. Accordingly, in a case where heterodyne detection where the transmission side and the reception side are not synchronized with each other is used, the phase gradually changes with time. For example, the signal modulated by orthogonal modulation based on QPSK is output as a time-series signal as in following Expression (2-2-1) from transmitter 102.

[Math. 11]

$$s(t) = c^i{}_I(t)\cos(2\pi f_c t) + c^i{}_Q(t)\sin(2\pi f_c t)$$

$$\cdots (2-2-1)$$

It is hereinafter assumed that the carrier wave for wave detection is generated by local wave generator 141 or the like, and the phase difference of the carrier wave (i.e., LO signal) between the transmission side and the reception side is θ. In this assumption, the received signal $s_R(t)$ is represented as following Expression (2-2-2).

[Math. 12]

$$s_R(t) = c^i{}_I(t)\cos(2\pi f_c t + \theta) + c^i{}_Q(t)\sin(2\pi f_c t + \theta)$$

$$= \left\{ c^i{}_I(t)\cos\theta + c^i{}_Q(t)\sin\theta \right\}\cos(2\pi f_c t)$$

$$+ \left\{ -c^i{}_I(t)\sin\theta + c^i{}_Q(t)\cos\theta \right\}\sin(2\pi f_c t)$$

$$\cdots (2-2-2)$$

The I component and Q component of the IF signal detected for the received signal $s_R(t)$ in Expression (2-2-2) are represented as following Expression (2-2-3).

[Math. 13]

$$\begin{pmatrix} f_I(t) \\ g_Q(t) \end{pmatrix} = \begin{pmatrix} \cos\theta & \sin\theta \\ -\sin\theta & \cos\theta \end{pmatrix}\begin{pmatrix} c^i{}_I(t) \\ c^i{}_Q(t) \end{pmatrix}$$

$$\cdots (2-2-3)$$

Expression (2-2-3) described above corresponds to rotation of the original signal $\{c^i{}_I(t), c^i{}_Q(t)\}$ by angle θ. Next, two-dimensional deconvolution represented by following Expression (2-2-4) is performed for Expression (2-2-3).

[Math. 14]

$$\left[ \int c^i{}_I(t) \otimes \begin{pmatrix} f_I(t) \\ g_Q(t) \end{pmatrix} \quad \int c^i{}_Q(t) \otimes \begin{pmatrix} f_I(t) \\ g_Q(t) \end{pmatrix} \right]$$

$$= \begin{pmatrix} \int c^i{}_I(\tau - t) f_I(\tau)\,d\tau & \int c^i{}_Q(\tau - t) f_I(\tau)\,d\tau \\ \int c^i{}_I(\tau - t) g_Q(\tau)\,d\tau & \int c^i{}_Q(\tau - t) g_Q(\tau)\,d\tau \end{pmatrix}$$

$$= \begin{pmatrix} \delta(t)\cos\theta + \delta(t - p_i)\sin\theta & \delta(t + p_i)\cos\theta + \delta(t)\sin\theta \\ -\delta(t)\sin\theta + \delta(t - p_i)\cos\theta & -\delta(t + p_i)\sin\theta + \delta(t)\cos\theta \end{pmatrix}$$

$$\cdots (2-2-4)$$

By calculating the determinant in Expression (2-2-4), following Expression (2-2-5) is obtained as long as $p_i$ is not zero.
[Math. 15]

$$\det\left[ \int c^i{}_I(t) \otimes \begin{pmatrix} f_I(t) \\ g_Q(t) \end{pmatrix} \quad \int c^i{}_Q(t) \otimes \begin{pmatrix} f_I(t) \\ g_Q(t) \end{pmatrix} \right] = \delta(t)^2$$

$$\cdots (2-2-5)$$

That is, the result does not depend on $\theta$. This result is because the product of eigenvalues of two matrices is a rotation invariant, and indicates that deconvolution is allowed even if the phase of the LO signal between transmitter 102 and receiver 103 changes (without synchronization).

Next, it is assumed that the signal modulated by orthogonal modulation based on QPSK is output as a time-series signal as in following Expression (2-3-1) from transmitter 102.
[Math. 16]

$$s(t) = c^i{}_I(t)\cos(2\pi f_c t) + c^i{}_Q(t)\sin(2\pi f_c t)$$

$$\cdots (2-3-1)$$

Here, $c^i_I(t)$ and $c^i_Q(t)$ represent the digital waveform (digital temporal waveform) corresponding to the temporal waveform in the case of digital transmission of the code. $f_c$ is the frequency of the pair of carrier waves. This signal is emitted from transmitter 102, reflected by the object, and received by receiver 103. The waveform of the signal received by receiver 103 can be represented as following Expression (2-3-2) when transmitter 102 and receiver 103 have the same frequency and different phases.
[Math. 17]

$$s_R(t) = \sum_j x_j \left\{ c^i{}_I(t - t_j)\cos(2\pi f_c t + \theta_j) + c^i{}_Q(t - t_j)\sin(2\pi f_c t + \theta_j) \right\}$$

$$= \sum_j x_j \left[ \left\{ c^i{}_I(t - t_j)\cos\theta_j + c^i{}_Q(t - t_j)\sin\theta_j \right\}\cos(2\pi f_c t) \right.$$

$$\left. + x_j \left\{ -c^i{}_I(t - t_j)\sin\theta_j + c^i{}_Q(t - t_j)\cos\theta_j \right\}\sin(2\pi f_c t) \right]$$

$$\cdots (2-3-2)$$

Two-dimensional deconvolution is performed for the signal detected for received signal $s_R(t)$ as represented in Expression (2-3-2).

For example, for fixed j, Expression (2-3-3) in FIG. 22 holds. By calculating the determinant of Expression (2-3-3), a result that does not depend on $\theta$ as in Expression (2-3-4) in FIG. 23 can be obtained.

Consequently, received signal $s_R(t)$ is detected with the carrier wave, two-dimensional deconvolution is performed using the two-dimensional PN code, and the determinant is calculated, thereby obtaining a result as in Expression (2-3-5) in FIG. 24.

For example, the signal subjected to QPSK orthogonal modulation is output as the following time-series signal from i-th transmitter 102.
[Math. 18]

$$s(t) = c^i_I(t)\cos(2\pi f_c t) + c^i_Q(t)\sin(2\pi f_c t)$$

$$\cdots (2-4-1)$$

A signal simultaneously emitted from every transmitter 102 and received by one receiver 103 is represented as follows.
[Math. 19]

$$s_R(t)$$
$$= \sum_i \sum_j x_{i,j} \left\{ c^i_I(t-t_{i,j})\cos(2\pi f_c t + \theta_{i,j}) + c^i_Q(t-t_{i,j})\sin(2\pi f_c t + \theta_{i,j}) \right\}$$
$$= \sum_i \sum_j x_{i,j} \left[ \left\{ c^i_I(t-t_{i,j})\cos\theta_{i,j} + c^i_Q(t-t_{i,j})\sin\theta_{i,j} \right\}\cos(2\pi f_c t) \right.$$
$$\left. + x_{i,j} \left\{ -c^i_I(t-t_{i,j})\sin\theta_{i,j} + c^i_Q(t-t_{i,j})\cos\theta_{i,j} \right\}\sin(2\pi f_c t) \right]$$

$$\cdots (2-4-2)$$

$x_{i,j}$, $t_{i,j}$, and $\theta_{i,j}$ respectively represent the reflection amplitude, arrival time, and phase difference that correspond to the signal emitted from i-th transmitter 102, reflected by j-th reflection point, and received by receiver 103. The following expression represents the i-th transmission code, and the k-th transmission code.
[Math. 20]

$$\mathbf{c}^i = \begin{pmatrix} \mathbf{c}^i_I \\ \mathbf{c}^i_Q \end{pmatrix} = \begin{pmatrix} a_j \\ a_{p_i+j} \end{pmatrix} = \begin{pmatrix} a_0, a_1, a_2, \cdots, a_{M-1} \\ a_{p_i}, a_{p_i+1}, a_{p_i+2}, \cdots, a_{p_i+M-1} \end{pmatrix}$$
$$(j = 0, 1, 2, \cdots, M-1)$$

$$\mathbf{c}^k = \begin{pmatrix} \mathbf{c}^k_I \\ \mathbf{c}^k_Q \end{pmatrix} = \begin{pmatrix} a_j \\ a_{p_k+j} \end{pmatrix} = \begin{pmatrix} a_0, a_1, a_2, \cdots, a_{M-1} \\ a_{p_k}, a_{p_k+1}, a_{p_k+2}, \cdots, a_{p_k+M-1} \end{pmatrix}$$
$$(j = 0, 1, 2, \cdots, M-1)$$

$$\cdots (2-4-3)$$

Two-dimensional deconvolution in Expression (2-4-2) is performed using these codes. Accordingly, first, deconvolution as in Expression (2-4-4) in FIG. 25 is performed. Next, the value of the determinant at time t is obtained according to Expression (2-4-5) in FIG. 26. The complete deconvolution and determinant of Expression (2-4-2) are represented as in Expression (2-4-6) in FIG. 27 using these results.

Here, except the first line on the right side, a δ function is present in the first factor of each term, the arguments of δ function consist only of constants, such as $t_{i,j}$, $p_i$, and $p_k$, and do not include variable t. $t_{i,j}$ is a time period during which the wave emitted from i-th transmitter 102 is reflected by the object (identification number j), and is received by receiver 103. This $t_{i,j}$ is a quantity continuously changing with time t. On the other hand, $p_i$, $p_k$ and the like are quantities that can be freely determined.

For example, it can happen by chance that the term indicated in following Expression (2-4-7) from the right side of Expression (2-4-6) is not zero. However, if $p_k$ has another value, the term is zero. [Math. 21]

$$\delta(t_{i,j} - p_k - t_{\tilde{i},\tilde{j}})x_{i,j}x_{\tilde{i},\tilde{j}} \cos\theta_{i,j} \sin\theta_{\tilde{i},\tilde{j}}\delta(t - t_{i,j})$$

$$\cdots (2-4-7)$$

Consequently, the terms except the first line on the right side of Expression (2-4-6) can be represented as accidental interference terms. Based on them, it is effective to generate the code as follows.

In the next expression, a two-dimensional PN code indicated by Expression (2-1-1) is indicated.

[Math. 22]

$$\mathbf{c}^i = \begin{pmatrix} \mathbf{c}^i_I \\ \mathbf{c}^i_Q \end{pmatrix} = \begin{pmatrix} a_j \\ a_{p_i+j} \end{pmatrix} = \begin{pmatrix} a_0, a_1, a_2, \ldots\ldots a_{M-1} \\ a_{p_i}, a_{p_i+1}, a_{p_i+2} \ldots\ldots a_{p_i+M-1} \end{pmatrix}$$

$$(j = 0,1,2,\ldots\ldots M-1)$$

$$\cdots (2-4-8)$$

$c^i_Q$ is a code obtained by shifting $c^i_I$ by $p_i$ bit. Code generator 121 makes this bit delay amount $p_i$ hop every time the code is transmitted, without fixing the amount. In the case where the number of transmitter 102 is n, code generator 121 selects $p_i$ (i = 1, 2, 3, ..., n) from among n different integer values. Code generator 121 then changes delay amount $p_i$ of the i-th transmission code every time the code transmission trigger occurs, and replaces the code of i-th transmitter 102 as follows.

[Math. 23]

$$\mathbf{c}^{\sigma_t(i)}_Q \quad (i = 1,2,\cdots,n) \quad (t = 0,1,2,3,\cdots,t,\cdots)$$

$$\cdots (2-4-9)$$

$\sigma_t(i)$ (i = 1, 2, 3, ..., n) represents t times of shifting to the right at trigger timing t. If t exceeds a constant number N, code generator 121 changes the code in a manner of cyclic permutation using mod(N). In such control, the delay amount is $p_{\sigma t(i)}$. Accordingly, the probability of occurrence of accidental interference can be reduced to 1/N.

For example, two different transmission codes $c^i_Q$ and $c^j_Q$ are reflected by the object, and enter identical receiver 103. If the difference in reception time between these codes is equal to the delay amount $p_k$ of certain initially defined code $c^k_Q$, interference occurs. The probability of occurrence of such interference can be reduced to 1/N by hoping of the delay amount described above.

The above description assumes that the hopping delay amount is selected from a delay amount sample in a permuted manner. However, the delay amount may be more freely selected from a larger sample.

Consequently, received signal $s_R(t)$ is detected with the carrier wave, two-dimensional deconvolution is performed with the two-dimensional PN code, and the determinant is calculated, thereby obtaining the following expression.

[Math. 24]

$$\text{Detected received signal } (T_k \to R) = \sum_i\sum_j \delta_{k,i} x_{i,j}^2 \delta(t - t_{i,j})^2$$

$$= \sum_j x_{k,j}^2 \delta(t - t_{k,j})^2$$

$$\cdots (2-4-10)$$

Consequently, even if the plurality of transmitters 102 modulate the two-dimensional PN codes different from each other by QPSK orthogonal modulation, and simultaneously emit them, received data that has no interference in effect can be obtained.

The result described above is a result in a case where carrier wave synchronization is not required. If the carrier waves are synchronized, a more accurate result can be obtained.

For example, received signal $s_R(t)$ is detected with the carrier wave, two-dimensional deconvolution is performed for received signal $s_R(t)$ with the two-dimensional PN code. The two-dimensional deconvolution in this case is represented as Expression (2-5-1) in FIG. 28 using a matrix representation. By substituting $t = t_{k,b}$ into this expression, Expression (2-5-2) in FIG. 29 is obtained.

Zero (time average) in Expression (2-5-2) means that the average for a longer time period than the period of the code is zero. The signal emitted from transmitter 102 is represented by Expression (2-3-1). The following expression is the same expression as Expression (2-3-1). $f_c$ is the frequency of the carrier wave.

[Math. 25]

$$s(t) = c^i_I(t)\cos(2\pi f_c t) + c^i_Q(t)\sin(2\pi f_c t)$$

$$\cdots (2-5-3)$$

The signal obtained by receiver 103 is generally represented by the following expression.

[Math. 26]

$$s_R(t) = \sum_j x_j \left\{ c^i_I(t-t_j)\cos(2\pi f_c t + \theta_j) + c^i_Q(t-t_j)\sin(2\pi f_c t + \theta_j) \right\}$$

$$\cdots (2-5-4)$$

$x_j$ is the reflectance. $\theta_j$ is the phase difference in propagation between transmitter 102 and receiver 103, and has a physical meaning as follows.

[Math. 27]

$$\theta_j = \frac{2\pi \left( r_{T \to P} + r_{P \to R} \right)}{\lambda_c}$$

$$\cdots (2-5-5)$$

That is, $\theta_j$ is the phases difference obtained by dividing the distance from the transmission point to the reflection by object P and then to the reception point, by the wavelength of the carrier wave. The signal from k-th transmitter 102 received by one receiver 103 is represented as follows.

[Math. 28]

$$\Phi_k = \sum_j x_{k,j} e^{-i\theta_{k,j}} \quad \left( \text{complex notation} \right)$$

$$\cdots (2-5-6)$$

Expression (2-5-6) represents the reflectance of the signal from k-th transmitter 102 received by one receiver 103, and the phase difference between carrier waves. Even with simultaneous transmission, the phase difference between carrier waves can be obtained without interference. Accordingly, by obtaining data in Expression (2-5-6) for each receiver 103, high-resolution data can be obtained.

<Configuration example using two pairs of carrier waves>

FIG. 30 is a block diagram illustrating a configuration example of generator 101 in a case where two pairs of carrier waves are used. In this example, generator 101 includes code generator 121, carrier wave generator 122, modulators 161 to 166, combiners 167 to 169, and amplifier 124.

In this example, code generator 121 generates a plurality of pairs of first pulse trains corresponding to a plurality of first two-dimensional vector codes that are different from each other, and a plurality of pairs of second pulse trains corresponding to a plurality of second two-dimensional vector codes that are different from each other. For example, code generator 121 generates n pairs of first pulse trains corresponding to n first two-dimensional vector codes that are different from each other, and n pairs of second pulse trains corresponding to n second two-dimensional vector codes that are different from each other. Here, n is the number of transmitters 102.

Each first two-dimensional vector code includes a reference code and a first individual code as two elements. Each second two-dimensional vector code includes a second individual code and a third individual code as two elements. The reference code is common to the plurality of first two-dimensional vector codes. The common reference code, the plurality of first individual codes, the plurality of second individual codes, and the plurality of third individual codes in the plurality of first individual codes and the plurality of second individual codes are different from each other.

The common reference code, the plurality of first individual codes, the plurality of second individual codes, and the plurality of third individual codes may be a plurality of orthogonal codes that are orthogonal to each other. The common reference code, the plurality of first individual codes, the plurality of second individual codes, and the plurality of third individual codes may be a plurality of cyclic codes that have shift amounts different from each other. The common reference code, the plurality of first individual codes, the plurality of second individual codes, and the plurality of third individual codes may be a plurality of PN codes that are orthogonal to each other and each of which has a different shift amount.

In this example, carrier wave generator 122 generates a pair of first carrier waves having phases orthogonal to each other, and a pair of second carrier waves having phases orthogonal to each other. The frequency of the pair of first carrier waves and the frequency of the pair of second carrier waves are different from each other.

In this example, modulator 161 modulates the pulse trains on one side of the plurality of pairs of first pulse trains generated by code generator 121, with one carrier wave from the pair of carrier waves generated by carrier wave generator 122. Specifically, for example, modulator 161 modulates the plurality of pulse trains each corresponding to the reference code, with one carrier wave from the pair of first carrier waves. Thus, modulator 161 generates a plurality of modulated waves.

In this example, modulator 162 modulates the pulse trains on the other side of the plurality of pairs of first pulse trains generated by code generator 121, with the other carrier wave from the pair of first carrier waves generated by carrier wave generator 122. Specifically, for example, modulator 162 modulates the plurality of pulse trains corresponding to the plurality of first individual codes among the first two-dimensional vector codes, with the other carrier wave from the pair of first carrier waves. Thus, modulator 162 generates a plurality of modulated waves.

In this example, combiner 167 combines the plurality of modulated waves generated by modulator 161, with the plurality of modulated waves generated by modulator 162. Thus, combiner 167 newly generates a plurality of modulated waves. For example, combiner 167 combines n modulated waves generated by modulator 161, with n modulated waves generated by modulator 162, thereby newly generating n modulated waves.

In this example, modulator 163 modulates the pulse trains on one side of the plurality of pairs of second pulse trains generated by code generator 121, with one carrier wave from the pair of first carrier waves generated by carrier wave generator 122. Specifically, for example, modulator 163 modulates the plurality of pulse trains corresponding to the plurality of second individual codes among the second two-dimensional vector codes, with one carrier wave from the pair of first carrier waves. Thus, modulator 163 generates a plurality of modulated waves.

In this example, modulator 164 modulates the pulse trains on the other side of the plurality of pairs of second pulse trains generated by code generator 121, with the other carrier wave from the pair of first carrier waves generated by carrier wave generator 122. Specifically, for example, modulator 164 modulates the plurality of pulse trains corresponding to the plurality of third individual codes among the second two-dimensional vector codes, with the other carrier wave from the pair of first carrier waves. Thus, modulator 164 generates a plurality of modulated waves.

In this example, combiner 168 combines the plurality of modulated waves generated by modulator 163, with the plurality of modulated waves generated by modulator 164. Thus, combiner 168 newly generates a plurality of modulated waves. For example, combiner 168 combines n modulated waves generated by modulator 163, with n modulated waves generated by modulator 164, thereby newly generating n modulated waves.

In this example, modulator 165 modulates the plurality of modulated waves generated by combiner 167, with one carrier wave from the pair of second carrier waves generated by carrier wave generator 122. Thus, modulator 165 newly generates a plurality of modulated waves.

In this example, modulator 166 modulates the plurality of modulated waves generated by combiner 168, with the other carrier wave from the pair of second carrier waves generated by carrier wave generator 122. Thus, modulator 166 newly generates a plurality of modulated waves.

In this example, combiner 169 combines the plurality of modulated waves generated by modulator 165, with the plurality of modulated waves generated by modulator 166. Thus, combiner 169 newly generates a plurality of modulated waves. For example, combiner 169 combines n modulated waves generated by modulator 165, with n modulated waves generated by modulator 166, thereby newly generating n modulated waves.

In this example, amplifier 124 amplifies the plurality of modulated waves generated by combiner 169.

In the operation described above, generator 101 generates a plurality of pairs of first pulse trains, a plurality of pairs of second pulse trains, a pair of first carrier waves, and a pair of second carrier waves. Generator 101 then generates a plurality of first modulated waves by modulating the plurality of pairs of first pulse trains with the pair of first carrier waves, and generates a plurality of second modulated waves by modulating the plurality of pairs of second pulse trains with the pair of first carrier waves. Generator 101 then modulates the plurality of first modulated waves and the plurality of second modulated waves with the pair of second carrier waves, thereby generating the plurality of modulated waves as a plurality of waves to be emitted.

For example, generator 101 generates n pairs of first pulse trains, n pairs of second pulse trains, a pair of first carrier waves, and a pair of second carrier waves. Generator 101 generates n modulated waves as n waves to be emitted, according to the n pairs of first pulse trains, the n pairs of second pulse trains, the pair of first carrier waves, and the pair of second carrier waves. The n modulated waves are emitted respectively from n transmitters 102.

Note that the first two-dimensional vector code and the second two-dimensional vector code can be interpreted as a four-dimensional vector code.

FIG. 31 is a block diagram illustrating a configuration example of code generator 121 in the case where two pairs of carrier waves are used. In this example, code generator 121 includes memory 131 that stores a code set. The code set includes the plurality of first two-dimensional vector codes and the plurality of second two-dimensional vector codes. The characteristics of the plurality of first two-dimensional vector codes and the plurality of second two-dimensional vector codes included in the code set are the same as the characteristics of the plurality of first two-dimensional vector codes and the plurality of second two-dimensional vector codes described with reference to FIG. 30.

In this example, code generator 121 may generate the plurality of pairs of first pulse trains and the plurality of pairs of second pulse trains that correspond to the plurality of first two-dimensional vector codes and the plurality of second two-dimensional vector codes included in the code set, according to the code set stored in memory 131.

Generator 101 may then generate the plurality of modulated waves as a plurality of waves, by modulating the plurality of pairs of first pulse trains and the plurality of pairs of second pulse trains generated by code generator 121, using the pair of first carrier waves and the pair of second carrier waves. The plurality of modulated waves may then be emitted from respective transmitters 102.

The number of first two-dimensional vector codes included in the code set, and the number of second two-dimensional vector codes included in the code set are equal to or more than the number of transmitters 102. If the number of them is larger than the number of transmitters 102, some of them need not be used to transmit waves.

FIG. 32 is a block diagram illustrating another configuration example of code generator 121 in a case where two pairs of carrier waves are used. In this example, code generator 121 includes selector 132 in addition to memory 131 illustrated in FIG. 31. In this example, memory 131 stores a plurality of code set candidates. The plurality of code set candidates are different from each other.

Each code set candidate includes a plurality of first two-dimensional vector codes and a plurality of second two-dimensional vector codes that have the same characteristics as the characteristics of the plurality of first two-dimensional vector codes and the plurality of second two-dimensional vector codes included in the code set described with reference to FIG. 31.

In this example, selector 132 selects a code set from among the code set candidates. Selector 132 then generates the plurality of pairs of first pulse trains and the plurality of pairs of second pulse trains that correspond to the plurality of first two-dimensional vector codes and the plurality of second two-dimensional vector codes included in the selected code set.

In this example, similar to the example in FIG. 8, every time the condition for changing the plurality of codes related to the plurality of waves to be emitted is satisfied, selector 132 changes the plurality of two-dimensional vector codes by selecting the code set from among the code set candidates.

FIG. 33 is a block diagram illustrating still another configuration example of code generator 121 in the case where two pairs of carrier waves are used. In this example, code generator 121 includes random number generator 133 in selector 132. Similar to the example in FIG. 9, random number generator 133 generates a random number. Selector 132 randomly selects a code set from among code set candidates according to a random number obtained from random number generator 133.

In this case, selector 132 generates the plurality of pairs of first pulse trains and the plurality of pairs of second pulse trains that correspond to the plurality of first two-dimensional vector codes and the plurality of second two-dimensional vector codes included in the randomly selected code set.

FIG. 34 is a block diagram illustrating a configuration example of deriver 104 in the case where two pairs of carrier waves are used. In this example, deriver 104 includes local wave generator 141, and demodulators 171 to 173.

In this example, local wave generator 141 generates a pair of first local waves and a pair of second local waves that respectively correspond to the pair of first carrier waves and the pair of second carrier waves generated by carrier wave generator 122 illustrated in FIG. 30.

For example, the pair of first local waves have the same frequency as the pair of first carrier waves, and are orthogonal to each other. The pair of second local waves have the same frequency as the pair of second carrier waves, and are orthogonal to each other. The phase of the pair of first local waves and the phase of the pair of second local waves may or need not be synchronized with the phase of the pair of first carrier waves and the phase of the pair of second carrier waves.

In this example, demodulator 171 demodulates the received data of each receiver 103, with the pair of second local waves generated by local wave generator 141, to recover first data to be processed. The first data to be processed corresponds to the plurality of first modulated waves and the plurality of second modulated waves. The demodulated first data to be processed includes two components that are an in-phase component and an orthogonal component. Demodulators 172 and 173 then demodulate the two components of the first data to be processed, with the pair of first local waves generated by local wave generator 141, to recover second data to be processed corresponding to the plurality of pairs of first pulse trains and the plurality of pairs of second pulse trains.

Accordingly, second data to be processed is obtained that corresponds to the plurality of first two-dimensional vector codes (plurality of pairs of first pulse trains) and the plurality of second two-dimensional vector codes (plurality of pairs of second pulse trains) modulated with the pair of first carrier waves and the pair of second carrier waves. Deriver 104 then derives individual data from the second data to be processed, for each of combinations of transmitters 102 and receivers 103.

FIG. 35 is a block diagram illustrating another configuration example of deriver 104 in the case where two pairs of carrier waves are used. In this example, deriver 104 includes deconvolution processor 143 in addition to local wave generator 141 and demodulators 171 to 173 illustrated in FIG. 34.

In this example, deconvolution processor 143 performs deconvolution for the second data to be processed demodulated by demodulators 172 and 173, with the first two-dimensional vector code and the second two-dimensional vector code that correspond to each transmitter 102.

Accordingly, deconvolution processor 143 can obtain a component corresponding to the two-dimensional vector code from the second data to be processed. Consequently, detection device 100 can derive individual data corresponding to each transmitter 102, from the received data of each receiver 103, and can derive the individual data, for each of combinations of transmitters 102 and receivers 103.

FIG. 36 is a block diagram illustrating still another configuration example of deriver 104 in the case where two pairs of carrier waves are used. In this example, deriver 104 includes determinant processor 144 in addition to local wave generator 141, demodulators 171 to 173, and deconvolution processor 143 illustrated in FIG. 35.

In this example, determinant processor 144 performs determinant computation, for the computational result of the deconvolution performed by deconvolution processor 143. Accordingly, deriver 104 can derive individual data in an appropriate form, for each of combinations of transmitters 102 and receivers 103, according to the deconvolution corresponding to the first two-dimensional vector code and the second two-dimensional vector code, and the determinant.

FIG. 37 is a conceptual diagram illustrating a process example in the case where two pairs of carrier waves are used. In this example, code generator 121, modulators 181 to 183, transmitter 102, receiver 103, demodulators 171 to 173, and processor 145 are described as configuration elements of detection device 100. These configuration elements correspond to the configuration elements described above. For example, modulators 181 to 183 correspond to modulators 161 to 166 and the like. Processor 145 corresponds to deconvolution processor 143, determinant processor 144 and the like.

In this example, code generator 121 generates four pulse trains corresponding to four PN codes, inputs a pair of pulse trains corresponding to the first PN code and the second PN code into modulator 182, and inputs a pair of pulse trains corresponding to the third PN code and the fourth PN code into modulator 183.

Modulator 182 modulates the pair of pulse trains corresponding to the first PN code and the second PN code, with the pair of first carrier waves, thereby generating the modulated wave. Modulator 183 modulates the pair of pulse trains corresponding to the third PN code and the fourth PN code, with the pair of first carrier waves, thereby generating the modulated wave. Here, I/Q modulation, which is orthogonal modulation, is used. From the pair of pulse trains, one is used as an in-phase (I) component, and the other is used as an orthogonal (Q) component. For example, the frequency of the pair of first carrier waves is 6 GHz.

Modulator 181 modulates the modulated wave generated by modulator 182, and the modulated wave generated by modulator 183, with the pair of second carrier waves, thereby newly generating a modulated wave. Here, I/Q modulation, which is orthogonal modulation, is also used. From two modulated waves, one is used as an in-phase (I) component, and the other is used as an orthogonal (Q) component. For example, the frequency of the pair of second carrier waves is 40 GHz.

Modulator 181 then inputs the modulated wave into each transmitter 102. Transmitters 102 emit the modulated waves. Subsequently, the modulated waves are reflected by an object.

Each receiver 103 then receives the modulated waves, and inputs the modulated waves into demodulator 171. It is assumed that the modulated waves include a plurality of modulated waves emitted from the plurality of transmitters 102 and reflected by the object in a mixed manner.

Demodulator 171 demodulates the modulated waves to an in-phase (I) component and an orthogonal (Q) component according to the pair of second local waves. Demodulator 171 then inputs the in-phase (I) component into demodulator 172, and inputs the orthogonal (Q) component into demodulator 173. Demodulator 172 demodulates the in-phase (I) component demodulated by demodulator 171, according to the pair of first local waves, to recover an II component and an IQ component. Demodulator 173 demodulates the orthogonal (Q) demodulated by demodulator 171, according to the pair of first local waves, to recover a QI component and a QQ component.

Processor 145 then performs deconvolution for the demodulated II component, IQ component, QI component, and QQ component, with the first PN code, the second PN code, the first PN code, and the second PN code, respectively. Accordingly, individual data items with respect to the first PN code, the second PN code, the first PN code, and the second PN code are obtained.

Next, the PN code vector in the case where the two pairs of carrier waves are used is described. First, one PN code is selected. The PN code is represented as following Expression (3-1-1).

[Math. 29]

$$\mathbf{c} = \left( a_j \right) = \left( a_0, a_1, a_2, \cdots, a_{M-1} \right) \quad (j = 0, 1, 2, \cdots, M-1)$$

$$\cdots (3-1-1)$$

Hereinafter, a code obtained by cyclically shifting the code of Expression (3-1-1) is used. Next, two pairs of two-dimensional PN codes as in following Expression (3-1-2) are defined.

[Math. 30]

$$\mathbf{c}^i_I = \begin{pmatrix} \mathbf{c}^i_{II} \\ \mathbf{c}^i_{IQ} \end{pmatrix} = \begin{pmatrix} a_{p_{IIi}+j} \\ a_{p_{IQi}+j} \end{pmatrix} = \begin{pmatrix} a_{p_{IIi}}, a_{p_{IIi+1}}, a_{p_{IIi+2}}, \cdots, a_{p_{IIi}+M-1} \\ a_{p_{IQi}}, a_{p_{IQi+1}}, a_{p_{IQ+2}}, \cdots, a_{p_{IQi}+M-1} \end{pmatrix}$$

$$(j = 0, 1, 2, \cdots, M-1)$$

$$\mathbf{c}^i_Q = \begin{pmatrix} \mathbf{c}^i_{QI} \\ \mathbf{c}^i_{QQ} \end{pmatrix} = \begin{pmatrix} a_{p_{QIi}+j} \\ a_{p_{QQi}+j} \end{pmatrix} = \begin{pmatrix} a_{p_{QIi}}, a_{p_{QIi+1}}, a_{p_{QIi+2}}, \cdots, a_{p_{QIi}+M-1} \\ a_{p_{QQi}}, a_{p_{QQi+1}}, a_{p_{QQ+2}}, \cdots, a_{p_{QQi}+M-1} \end{pmatrix}$$

$$(j = 0, 1, 2, \cdots, M-1)$$

$$\cdots (3-1-2)$$

The suffix corresponds to FIG. 37, i of $c^i_{AB}$ corresponds to i-th transmitter 102, A corresponds to the I port or Q port of modulator 181, and B corresponds to the I port or Q port of modulators 182 and 183.

Here, $p_{IIi}$ is defined as zero. Remaining $p_{ABi}$ (AB = IQ, QI, QQ) has a positive integer value. For $p_{ABi}$ (AB = II, IQ, QI, QQ), change in AB in turn changes $p_{ABi}$. Except AB = II, change in i corresponding to transmitter 102 in turn changes $p_{ABi}$. Except AB = II, values different for each combination of AB and i may be selected as $p_{ABi}$.

To satisfy the condition described above, from code generator 121, two-dimensional PN code $c^i_I$ is input into the I port and Q port of modulator 182, and two-dimensional PN code $c^i_Q$ is input into the I port and Q port of modulator 183.

Modulator 182 then generates modulated signal $s_I(t)$ of 6 GHz indicated by following Expression (3-1-3), based on two-dimensional PN code $c^i_I$, and inputs the signal into the I port of modulator 181. Modulator 183 then generates modulated signal $s_Q(t)$ of 6 GHz indicated by following Expression (3-1-4), based on two-dimensional PN code $c^i_Q$, and inputs the signal into the Q port of modulator 181. Note that $f_{c2}$ in Expressions (3-1-3) and (3-1-4) is 6 GHz.

[Math. 31]

$$s_I(t) = c^i_{II}(t)\cos(2\pi f_{c2}\, t) + c^i_{IQ}(t)\sin(2\pi f_{c2}\, t)$$

$$\cdots (3-1-3)$$

[Math. 32]

$$s_Q(t) = c^i_{QI}(t)\cos(2\pi f_{c2}\, t) + c^i_{QQ}(t)\sin(2\pi f_{c2}\, t)$$

$$\cdots (3-1-4)$$

Modulator 181 generates a modulated signal of 40 GHz, based on modulated signals $s_I(t)$ and $s_Q(t)$ of 6 GHz, and outputs the signal. Accordingly, as the signal modulated by orthogonal modulation based on QPSK, a time-series signal as in following Expression (3-1-5) is output using a carrier wave of 40 GHz from transmitter 102. Note that $f_{c1}$ in Expression (3-1-5) is 40 GHz.
[Math. 33]

$$\begin{aligned}
s(t) &= s_I(t)\cos(2\pi f_{c1}\, t) + s_Q(t)\sin(2\pi f_{c1}\, t) \\
&= \left\{ c^i_{II}(t)\cos(2\pi f_{c2}\, t) + c^i_{IQ}(t)\sin(2\pi f_{c2}\, t) \right\}\cos(2\pi f_{c1}\, t) \\
&\quad + \left\{ c^i_{QI}(t)\cos(2\pi f_{c2}\, t) + c^i_{QQ}(t)\sin(2\pi f_{c2}\, t) \right\}\sin(2\pi f_{c1}\, t) \\
&= \left\{ \cos(2\pi f_{c2}\, t)\cos(2\pi f_{c1}\, t) \right\} c^i_{II}(t) + \left\{ \sin(2\pi f_{c2}\, t)\cos(2\pi f_{c1}\, t) \right\} c^i_{IQ}(t) \\
&\quad + \left\{ \cos(2\pi f_{c2}\, t)\sin(2\pi f_{c1}\, t) \right\} c^i_{QI}(t) + \left\{ \sin(2\pi f_{c2}\, t)\sin(2\pi f_{c1}\, t) \right\} c^i_{QQ}(t)
\end{aligned}$$

$$\cdots (3-1-5)$$

In a case where a highly accurate crystal oscillator is used to generate the carrier wave, the frequency accuracy is about $10^{-10}$. Consequently, in a case where the frequency of the carrier wave is 40 GHz, an error about 4 Hz occurs. Accordingly, in a case where heterodyne detection where the transmission side and the reception side are not synchronized with each other is used, the phase gradually changes with time. For example, the signal modulated by orthogonal modulation based on QPSK is output as a time-series signal as in following Expression (3-1-5) from transmitter 102.

It is hereinafter assumed that the phase of the carrier wave (i.e., LO signal) is different between transmitter 102 and receiver 103. Specifically, it is assumed that the phase of a 40-GHz wave detection oscillator (local wave generator 141) is different by $\beta$ from the phase of an oscillator (carrier wave generator 122) for transmitter 102, and the phase of a 6-GHz wave detection oscillator is different by $\alpha$ from the phase of an oscillator for transmitter 102. Under this assumption, the signal input into receiver 103 residing at the same point as transmitter 102 is represented as following Expression (3-2-1).
[Math. 34]

**EP 4 589 338 A1**

$$s_R(t)$$

$$= \{\cos(2\pi f_{c2} t + \beta)\cos(2\pi f_{c1} t + \alpha)\} c^i{}_{II}(t)$$

$$+ \{\sin(2\pi f_{c2} t + \beta)\cos(2\pi f_{c1} t + \alpha)\} c^i{}_{IQ}(t)$$

$$+ \{\cos(2\pi f_{c2} t + \beta)\sin(2\pi f_{c1} t + \alpha)\} c^i{}_{QI}(t)$$

$$+ \{\sin(2\pi f_{c2} t + \beta)\sin(2\pi f_{c1} t + \alpha)\} c^i{}_{QQ}(t)$$

$$= \{\cos(2\pi f_{c2} t)\cos(\beta) - \sin(2\pi f_{c2} t)\sin(\beta)\}$$

$$\cdot \{\cos(2\pi f_{c1} t)\cos(\alpha) - \sin(2\pi f_{c1} t)\sin(\alpha)\} c^i{}_{II}(t)$$

$$+ \{\sin(2\pi f_{c2} t)\cos(\beta) + \cos(2\pi f_{c2} t)\sin(\beta)\}$$

$$\cdot \{\cos(2\pi f_{c1} t)\cos(\alpha) - \sin(2\pi f_{c1} t)\sin(\alpha)\} c^i{}_{IQ}(t)$$

$$+ \{\cos(2\pi f_{c2} t)\cos(\beta) - \sin(2\pi f_{c2} t)\sin(\beta)\}$$

$$\cdot \{\sin(2\pi f_{c1} t)\cos(\alpha) + \cos(2\pi f_{c1} t)\sin(\alpha)\} c^i{}_{QI}(t)$$

$$+ \{\sin(2\pi f_{c2} t)\cos(\beta) + \cos(2\pi f_{c2} t)\sin(\beta)\}$$

$$\cdot \{\sin(2\pi f_{c1} t)\cos(\alpha) + \cos(2\pi f_{c1} t)\sin(\alpha)\} c^i{}_{QQ}(t)$$

$$\cdots (3-2-1)$$

Baseband signals output from two 6-GHz wave detectors (demodulators 172 and 173) are represented as following Expression (3-2-2). The meanings of suffixes are defined as follows. R means reception. I or Q subsequent to R means the I port or Q port of the 40-GHz wave detector (demodulator 171). The third suffix means the I port or Q port of the 6-GHz wave detector (demodulator 172 or 173).
[Math. 35]

$$s_{RII}(t) = \cos(\beta)\cos(\alpha)c^i{}_{II}(t) + \sin(\beta)\cos(\alpha)c^i{}_{IQ}(t)$$

$$+ \cos(\beta)\sin(\alpha)c^i{}_{QI}(t) + \sin(\beta)\sin(\alpha)c^i{}_{QQ}(t)$$

$$s_{RIQ}(t) = -\sin(\beta)\cos(\alpha)c^i{}_{II}(t) + \cos(\beta)\cos(\alpha)c^i{}_{IQ}(t)$$

$$- \sin(\beta)\sin(\alpha)c^i{}_{QI}(t) + \cos(\beta)\sin(\alpha)c^i{}_{QQ}(t)$$

$$s_{RQI}(t) = -\cos(\beta)\sin(\alpha)c^i{}_{II}(t) - \sin(\beta)\sin(\alpha)c^i{}_{IQ}(t)$$

$$+ \cos(\beta)\cos(\alpha)c^i{}_{QI}(t) + \sin(\beta)\cos(\alpha)c^i{}_{QQ}(t)$$

$$s_{RQQ}(t) = \sin(\beta)\sin(\alpha)c^i{}_{II}(t) - \cos(\beta)\sin(\alpha)c^i{}_{IQ}(t)$$

$$- \sin(\beta)\cos(\alpha)c^i{}_{QI}(t) + \cos(\beta)\cos(\alpha)c^i{}_{QQ}(t)$$

$$\cdots (3-2-2)$$

Expression (3-2-2) is represented as following Expression (3-2-3) using a matrix representation.
[Math. 36]

**25**

$$
\begin{pmatrix} s_{RII}(t) \\ s_{RIQ}(t) \\ s_{RQI}(t) \\ s_{RQQ}(t) \end{pmatrix}
$$

$$
= \begin{pmatrix} \cos(\beta)\cos(\alpha) & \sin(\beta)\cos(\alpha) & \cos(\beta)\sin(\alpha) & \sin(\beta)\sin(\alpha) \\ -\sin(\beta)\cos(\alpha) & \cos(\beta)\cos(\alpha) & -\sin(\beta)\sin(\alpha) & \cos(\beta)\sin(\alpha) \\ -\cos(\beta)\sin(\alpha) & -\sin(\beta)\sin(\alpha) & \cos(\beta)\cos(\alpha) & \sin(\beta)\cos(\alpha) \\ \sin(\beta)\sin(\alpha) & -\cos(\beta)\sin(\alpha) & -\sin(\beta)\cos(\alpha) & \cos(\beta)\cos(\alpha) \end{pmatrix}
$$

$$
\cdot \begin{pmatrix} c^{i}{}_{II}(t) \\ c^{i}{}_{IQ}(t) \\ c^{i}{}_{QI}(t) \\ c^{i}{}_{QQ}(t) \end{pmatrix}
$$

$$
\cdots (3-2-3)
$$

For the matrix on the right side of Expression (3-2-3), following Expression (3-2-4) holds.
[Math. 37]

$$\begin{pmatrix} \cos(\beta)\cos(\alpha) & \sin(\beta)\cos(\alpha) & \cos(\beta)\sin(\alpha) & \sin(\beta)\sin(\alpha) \\ -\sin(\beta)\cos(\alpha) & \cos(\beta)\cos(\alpha) & -\sin(\beta)\sin(\alpha) & \cos(\beta)\sin(\alpha) \\ -\cos(\beta)\sin(\alpha) & -\sin(\beta)\sin(\alpha) & \cos(\beta)\cos(\alpha) & \sin(\beta)\cos(\alpha) \\ \sin(\beta)\sin(\alpha) & -\cos(\beta)\sin(\alpha) & -\sin(\beta)\cos(\alpha) & \cos(\beta)\cos(\alpha) \end{pmatrix}$$

$$= \begin{pmatrix} \cos(\alpha) & 0 & \sin(\alpha) & 0 \\ 0 & \cos(\alpha) & 0 & \sin(\alpha) \\ -\sin(\alpha) & 0 & \cos(\alpha) & 0 \\ 0 & -\sin(\alpha) & 0 & \cos(\alpha) \end{pmatrix}$$

$$\cdot \begin{pmatrix} \cos(\beta) & \sin(\beta) & 0 & 0 \\ -\sin(\beta) & \cos(\beta) & 0 & 0 \\ 0 & 0 & \cos(\beta) & \sin(\beta) \\ 0 & 0 & -\sin(\beta) & \cos(\beta) \end{pmatrix}$$

$$\cdots (3-2-4)$$

Factorization as in Expression (3-2-4) can easily derive that following Expression (3-2-5) holds.
[Math. 38]

$$\det \begin{pmatrix} \cos(\beta)\cos(\alpha) & \sin(\beta)\cos(\alpha) & \cos(\beta)\sin(\alpha) & \sin(\beta)\sin(\alpha) \\ -\sin(\beta)\cos(\alpha) & \cos(\beta)\cos(\alpha) & -\sin(\beta)\sin(\alpha) & \cos(\beta)\sin(\alpha) \\ -\cos(\beta)\sin(\alpha) & -\sin(\beta)\sin(\alpha) & \cos(\beta)\cos(\alpha) & \sin(\beta)\cos(\alpha) \\ \sin(\beta)\sin(\alpha) & -\cos(\beta)\sin(\alpha) & -\sin(\beta)\cos(\alpha) & \cos(\beta)\cos(\alpha) \end{pmatrix} = 1$$

$$\cdots (3-2-5)$$

Here a case where the number of transmitters 102 is one is assumed. Expression (3-2-3) can be represented as in following Expressions (3-3-1) and (3-3-2).
[Math. 39]

$$\begin{pmatrix} s_{RII}(t) \\ s_{RIQ}(t) \\ s_{RQI}(t) \\ s_{RQQ}(t) \end{pmatrix} = \mathbf{A} \begin{pmatrix} c^i{}_{II}(t) \\ c^i{}_{IQ}(t) \\ c^i{}_{QI}(t) \\ c^i{}_{QQ}(t) \end{pmatrix}$$

$$\cdots (3-3-1)$$

[Math. 40]

$$\mathbf{A} = \begin{pmatrix} \cos(\beta)\cos(\alpha) & \sin(\beta)\cos(\alpha) & \cos(\beta)\sin(\alpha) & \sin(\beta)\sin(\alpha) \\ -\sin(\beta)\cos(\alpha) & \cos(\beta)\cos(\alpha) & -\sin(\beta)\sin(\alpha) & \cos(\beta)\sin(\alpha) \\ -\cos(\beta)\sin(\alpha) & -\sin(\beta)\sin(\alpha) & \cos(\beta)\cos(\alpha) & \sin(\beta)\cos(\alpha) \\ \sin(\beta)\sin(\alpha) & -\cos(\beta)\sin(\alpha) & -\sin(\beta)\cos(\alpha) & \cos(\beta)\cos(\alpha) \end{pmatrix}$$

$$\cdot\,\cdot\,\cdot\,(3-3-2)$$

Deconvolution performed for Expression (3-3-1) with the code defined by Expression (3-1-2) is represented as Expression (3-3-3) in FIG. 38. In a case where the matrix on the left side of Expression (3-3-3) is represented as X, following Expression (3-3-4) is obtained.

[Math. 41]

$$\mathbf{X} = \mathbf{A} \begin{pmatrix} \delta(t) & \delta(t-p_{IQk}) & \delta(t-p_{QIk}) & \delta(t-p_{QQk}) \\ \delta(t+p_{IQi}) & \delta_{k,i}\delta(t) & \delta(t-p_{QIk}+p_{IQi}) & \delta(t-p_{QQk}+p_{IQi}) \\ \delta(t+p_{QIi}) & \delta(t-p_{IQk}+p_{QIi}) & \delta_{k,i}\delta(t) & \delta(t-p_{QQk}+p_{QIi}) \\ \delta(t+p_{QQi}) & \delta(t-p_{IQk}+p_{QQi}) & \delta(t-p_{QIk}+p_{QQi}) & \delta_{k,i}\delta(t) \end{pmatrix}$$

$$\cdot\,\cdot\,\cdot\,(3-3-4)$$

By obtaining determinants of both the sides of Expression (3-3-4), following Expression (3-3-5) is obtained.

[Math. 42]

$$\det \mathbf{X}$$

$$= \left(\det \mathbf{A}\right) \det \begin{pmatrix} \delta(t) & \delta(t-p_{IQk}) & \delta(t-p_{QIk}) & \delta(t-p_{QQk}) \\ \delta(t+p_{IQi}) & \delta_{k,i}\delta(t) & \delta(t-p_{QIk}+p_{IQi}) & \delta(t-p_{QQk}+p_{IQi}) \\ \delta(t+p_{QIi}) & \delta(t-p_{IQk}+p_{QIi}) & \delta_{k,i}\delta(t) & \delta(t-p_{QQk}+p_{QIi}) \\ \delta(t+p_{QQi}) & \delta(t-p_{IQk}+p_{QQi}) & \delta(t-p_{QIk}+p_{QQi}) & \delta_{k,i}\delta(t) \end{pmatrix}$$

$$= \delta_{k,i}\delta(t)^4$$

$$\cdot\,\cdot\,\cdot\,(3-3-5)$$

The result of Expression (3-3-5) is obtained using the limitation described in the definition of the code in Expression (3-1-2). Consequently, if transmitter 102 is different, detX is zero.

Next, it is assumed that the signal as in Expression (3-1-5) is output from each of transmitters 102, reflected by a plurality of objects, and received by receivers 103. For example, the signal received by i-th transmitter 102 is represented as following Expression (3-4-1).

[Math. 43]

$$s^i(t) = s^i_I(t)\cos(2\pi f_{c1}t) + s^i_Q(t)\sin(2\pi f_{c1}t)$$

$$= \left\{c^i_{II}(t)\cos(2\pi f_{c2}t) + c^i_{IQ}(t)\sin(2\pi f_{c2}t)\right\}\cos(2\pi f_{c1}t)$$

$$+ \left\{c^i_{QI}(t)\cos(2\pi f_{c2}t) + c^i_{QQ}(t)\sin(2\pi f_{c2}t)\right\}\sin(2\pi f_{c1}t)$$

$$\cdots (3-4-1)$$

The reflected signal is represented as following Expression (3-4-2). In Expression (3-4-2), j corresponds to the j-th reflection point. [Math. 44]

$$s_r(t) = \sum_{i=1}^{N}\sum_{j} x_{i,j} s^i(t - t_{i,j})$$

$$\cdots (3-4-2)$$

Four time-series signals received and detected by one receiver 103 are represented as following Expression (3-4-3).
[Math. 45]

$$s_{RII}(t) = \sum_{i=1}^{N}\sum_{j} x_{i,j}\left\{\cos(\beta)\cos(\alpha)c^i_{II}(t-t_{i,j}) + \sin(\beta)\cos(\alpha)c^i_{IQ}(t-t_{i,j})\right.$$

$$\left. + \cos(\beta)\sin(\alpha)c^i_{QI}(t-t_{i,j}) + \sin(\beta)\sin(\alpha)c^i_{QQ}(t-t_{i,j})\right\}$$

$$s_{RIQ}(t) = \sum_{i=1}^{N}\sum_{j} x_{i,j}\left\{-\sin(\beta)\cos(\alpha)c^i_{II}(t-t_{i,j}) + \cos(\beta)\cos(\alpha)c^i_{IQ}(t-t_{i,j})\right.$$

$$\left. - \sin(\beta)\sin(\alpha)c^i_{QI}(t-t_{i,j}) + \cos(\beta)\sin(\alpha)c^i_{QQ}(t-t_{i,j})\right\}$$

$$s_{RQI}(t) = \sum_{i=1}^{N}\sum_{j} x_{i,j}\left\{-\cos(\beta)\sin(\alpha)c^i_{II}(t-t_{i,j}) - \sin(\beta)\sin(\alpha)c^i_{IQ}(t-t_{i,j})\right.$$

$$\left. + \cos(\beta)\cos(\alpha)c^i_{QI}(t-t_{i,j}) + \sin(\beta)\cos(\alpha)c^i_{QQ}(t-t_{i,j})\right\}$$

$$s_{RQQ}(t) = \sum_{i=1}^{N}\sum_{j} x_{i,j}\left\{\sin(\beta)\sin(\alpha)c^i_{II}(t-t_{i,j}) - \cos(\beta)\sin(\alpha)c^i_{IQ}(t-t_{i,j})\right.$$

$$\left. - \sin(\beta)\cos(\alpha)c^i_{QI}(t-t_{i,j}) + \cos(\beta)\cos(\alpha)c^i_{QQ}(t-t_{i,j})\right\}$$

$$\cdots (3-4-3)$$

Expression (3-4-3) is represented as following Expression (3-4-4) in FIG. 39 in a case of a matrix representation.
The deconvolution performed for Expression (3-4-4) with the code defined in Expression (3-1-2) is represented as Expression (3-4-6) in FIG. 41 using $A_{i,j}$ indicated in Expression (3-4-5) in FIG. 40. With reference to calculation of deconvolution described later, Expression (3-4-6) is calculated, and the matrix on the left side is represented by X, thereby obtaining Expression (3-4-7) in FIG. 42.
By representing the calculation result of the determinant at each time as detX, following Expression (3-4-8) is obtained.
[Math. 46]

$$\det \mathbf{X} = \sum_{i=1}^{N} \sum_{j} \delta_{k,i} x_{i,j}{}^{4} \delta(t - t_{i,j})^{4} + \left[ \text{accidental interference term} \right]$$

$$\cdots (3 - 4 - 8)$$

Here, an accidental interference term is made up of a term that includes, as a factor, $\delta$ function not including time t, similar to Expression (2-5-7). For example, the accidental interference term includes a term such as the following expression.
[Math. 47]

$$x_{o,o} x_{o,o} x_{o,o} x_{o,o} A_{oo} A_{oo} A_{oo} A_{oo}$$

$$\cdot \delta(t_{i1,j1} - p_{IQi1} - t_{i2,j2} - p_{IQk} + p_{QIi2})$$

$$\cdot \delta(t_{i3,j3} + p_{QIk} - p_{QQi3} - t_{i4,j4} - p_{QQk})(t - t_{o,o})$$

$$\cdots (3 - 4 - 9)$$

$t_{i,j}$ is a time period during which the wave emitted from i-th transmitter 102 is reflected by the object (identification number j), and is received by receiver 103. This $t_{i,j}$ is a quantity continuously changing with time t. On the other hand, $p_{Qi}$, $p_{Qk}$ and the like are quantities that can be freely determined.

For example, it can happen by chance that the term indicated by Expression (3-4-9) is not zero. However, when $p_{Qi}$, $p_{Qk}$ and the like have other values, the term is zero.

The accidental interference term can converge to a time average of zero, using code hopping that changes $p_{ABi}$ (AB = IQ, QI, QQ) for every code transmission trigger. Consequently, the following expression is obtained.
[Math. 48]

$$\text{Detected received signal } (T_k \to R) = \sum_{i} \sum_{j} \delta_{k,i} x_{i,j}{}^{4} \delta(t - t_{i,j})^{4}$$

$$= \sum_{j} x_{k,j}{}^{4} \delta(t - t_{k,j})^{4}$$

$$\cdots (3 - 4 - 1 0)$$

In a case where the number of receivers 103 is M, the deconvolution process described above can be simultaneously performed in parallel in each receiver 103. Here, the two-step modulation is applied. Alternatively, modulation of three or more steps may be applied.

FIG. 43 is a conceptual diagram illustrating synchronization of transmitters $T_1, T_2, ..., T_n$, and receivers $R_1, R_2, ..., R_n$.

The plurality of transmitters $T_1, T_2, ..., T_n$ are connected by optical fiber cables using E/O converters and O/E converters for conversion into optical signals for communication. For example, as soon as a pulse arrives from transmitter $T_1$ through the optical fiber, transmitter $T_2$ emits microwaves from an antenna. At the same time, transmitter $T_2$ transmits a synchronization signal to transmitter $T_3$ through the optical fiber.

This similarly applies to receivers $R_1, R_2, ..., R_n$. Note that after transmitter $T_1$ transmits the synchronization signal to receiver $R_1$, and receiver $R_1$ receives the pulse, the cascading operation is started. By the synchronization pulse of the received signal, each receiver $R_i$ starts receiving data.

For example, individual data may be derived with respect to each transmitter $T_i$, by allowing distributed processing circuit 191 corresponding to each receiver $R_i$ to perform deconvolution for the received data obtained by corresponding receiver $R_i$. In centralized processing circuit 192, individual data with respect to each of combinations of transmitters $T_i$ and receivers $R_i$ is obtained, and the object may be detected according to the individual data. For example, deriver 104 may be included in distributed processing circuit 191, and detector 105 may be included in centralized processing circuit 192.

Distributed processing circuit 191 may be an information processing circuit corresponding to a CPU, a GPU or the like. Centralized processing circuit 192 may be an information processing circuit corresponding to a PC cluster, a host computer or the like.

According to the method described above, the integral of following Expression (4-1) appears in calculation of deconvolution. Here, A and B each represent I (in-phase component) or Q (orthogonal component). This also applies to C and D.

[Math. 49]

$$\int c_{AB}(\tau - t) s_{CD}(\tau - t_a) d\tau$$

$$\cdots (4-1)$$

In a case where the basic code of Expression (3-1-1) is represented as c(t), Expression (4-1) described above is represented as following Expression (4-2). $P_{AB}$ and $P_{CD}$ correspond to the number of bits of cyclically shifting.

[Math. 50]

$$\int c(\tau + P_{AB} - t) c(\tau + P_{CD} - t_a) d\tau$$

$$\cdots (4-2)$$

According to the property of the code, the integral of Expression (4-2) is not zero only when following Expression (4-3) holds.

[Math. 51]

$$\tau + P_{AB} - t = \tau + P_{CD} - t_a$$

$$\cdots (4-3)$$

Consequently, following Expression (4-4) is obtained.

[Math. 52]

$$\int c(\tau + P_{AB} - t) c(\tau + P_{CD} - t_a) d\tau = \delta(t - P_{AB} + P_{CD} - t_a)$$

$$\cdots (4-4)$$

Specifically, based on the above expression, following Expression (4-5) is used for deconvolution.

[Math. 53]

$$A = I, B = I \quad : \int c(\tau - t) c(\tau - t_a) d\tau = \delta(t - t_a)$$

$$A = I, B = Q \quad : \int c(\tau - t) c(\tau + P_{CD} - t_a) d\tau = \delta(t + P_{CD} - t_a)$$

$$A = Q, B = I \quad : \int c(\tau + P_{AB} - t) c(\tau - t_a) d\tau = \delta(t - P_{AB} - t_a)$$

$$A = Q, B = Q \quad : \int c(\tau + P_{AB} - t) c(\tau + P_{CD} - t_a) d\tau = \delta(t - P_{AB} + P_{CD} - t_a)$$

$$\cdots (4-5)$$

<Basic operation example>

FIG. 44 is a flowchart illustrating a basic operation example of detection device 100 illustrated in FIG. 4 and the like.

First, generator 101 generates a plurality of waves (S101). In this case, generator 101 generates a plurality of pulse train groups corresponding to the respective code groups different from each other, and at least one carrier wave.

Here, each code group includes a reference code, and one or more individual codes. The reference code is common to the plurality of code groups. The plurality of individual codes in the plurality of code groups are different from each other. Generator 101 modulates the plurality of pulse train groups using at least one carrier wave, to generate a plurality of modulated waves as a plurality of waves.

Next, the plurality of transmitters 102 emit the respective waves generated by generator 101 (S102). In this case, each transmitter 102 emits one of the waves generated by generator 101. Each of receivers 103 receives one or more of the waves emitted from transmitters 102, as a composite wave (S103).

Next, deriver 104 derives individual data corresponding to each transmitter 102, from the received data of each receiver 103, thus deriving individual data, for each of combinations of transmitters 102 and receivers 103 (S104). In this case, deriver 104 demodulates the received data of each receiver 103 to recover data to be processed corresponding to the pulse train groups, and derives individual data from the data to be processed. Detector 105 detects an object that affects at least one of the waves according to the individual data (S105).

Accordingly, even in the case where the plurality of transmitters 102 and the plurality of receivers 103 are used at the same time, detection device 100 can obtain individual data with respect to each of combinations of transmitters 102 and receivers 103 because the signals of the waves respectively correspond to the code groups different from each other. Consequently, detection device 100 can detect the object at high resolution and high speed. Accordingly, detection device 100 can appropriately detect the object moving at high speed.

Here, each code group may be, for example, a two-dimensional vector code having a pair of codes, or two two-dimensional vector codes each having a pair of codes. Each pulse train group may be for, for example, a pair of pulse trains, or two pairs of pulse trains. At least one carrier wave may be a pair of carrier waves, or two pairs of carrier waves.

For example, generator 101 may generate a plurality of pairs of pulse trains corresponding to a plurality of two-dimensional vector codes different from each other, and a pair of carrier waves having phases orthogonal to each other, as a plurality of pulse train groups, and at least one carrier wave. Here, each two-dimensional vector code includes a reference code and an individual code as two elements. The reference code is common to the plurality of two-dimensional vector codes. The plurality of individual codes in the plurality of two-dimensional vector codes are different from each other.

Generator 101 may then generate a plurality of modulated waves by modulating the plurality of pairs of pulse trains with a pair of carrier waves. Deriver 104 may then demodulate the received data of each receiver 103 to recover data to be processed corresponding to the plurality of pairs of pulse trains.

Accordingly, detection device 100 can efficiently transmit the modulated waves corresponding to the two-dimensional vector codes according to the pair of carrier waves.

For example, the reference code and the plurality of individual codes may be a plurality of orthogonal codes that are orthogonal to each other. Accordingly, detection device 100 can efficiently obtain the individual data with respect to each of combinations of transmitters 102 and receivers 103 according to the orthogonality of the codes.

For example, the reference code and the plurality of individual codes may be a plurality of cyclic codes that have shift amounts different from each other. Accordingly, detection device 100 can efficiently obtain the individual data with respect to each of the combinations of transmitters 102 and receivers 103 according to the difference in shift amount.

For example, the reference code and the plurality of individual codes may be a plurality of PN (Pseudo-Noise) codes that are orthogonal to each other and each of which has a different shift amount. Accordingly, detection device 100 can efficiently obtain the individual data with respect to each of the combinations of transmitters 102 and receivers 103 according to the characteristics of the PN code.

For example, every time the condition is satisfied, generator 101 may change the reference code and the plurality of individual codes by selecting a reference code and a set of individual codes from a plurality of candidate sets. Accordingly, detection device 100 can adaptationally change the plurality of codes related to the plurality of waves. Accordingly, detection device 100 can prevent accidental reduction in distinguishability, and appropriately obtain the individual data with respect to each of the combinations of transmitters 102 and receivers 103.

For example, generator 101 may randomly select the set from the plurality of candidate sets. Accordingly, detection device 100 can prevent accidental reduction in distinguishability according to the randomness, and appropriately obtain the individual data with respect to each of combinations of transmitters 102 and receivers 103.

For example, deriver 104 may derive the individual data according to the computational result obtained by performing deconvolution for data to be processed, with each two-dimensional vector code. Accordingly, detection device 100 can efficiently obtain the individual data with respect to each of combinations of transmitters 102 and receivers 103 according to the deconvolution corresponding to the two-dimensional vector code.

For example, deriver 104 may derive the individual data according to the determinant for the computational result. Accordingly, detection device 100 can efficiently obtain the individual data with respect to each of combinations of transmitters 102 and receivers 103 according to the deconvolution corresponding to the two-dimensional vector code and the determinant.

For example, generator 101 may generate a plurality of pairs of first pulse trains, a plurality of pairs of second pulse trains, a pair of first carrier waves, and a pair of second carrier waves, as a plurality of pulse train groups, and at least one carrier wave. The plurality of pairs of first pulse trains correspond to a plurality of first two-dimensional vector codes that are different from each other. The plurality of pairs of second pulse trains correspond to a plurality of second two-dimensional vector codes that are different from each other. The pair of first carrier waves have phases that are orthogonal to each other. The pair of second carrier waves have phases that are orthogonal to each other.

Each first two-dimensional vector code includes a reference code and a first individual code as two elements. Each second two-dimensional vector code includes a second individual code and a third individual code as two elements. The reference code is common to the plurality of first two-dimensional vector codes. The plurality of first individual codes, the plurality of second individual codes, and the plurality of third individual codes in the plurality of first two-dimensional vector codes and the plurality of second two-dimensional vector codes are different from each other. The frequency of the pair of first carrier waves and the frequency of the pair of second carrier waves are different from each other.

Generator 101 may then modulate the plurality of pairs of first pulse trains using the pair of first carrier waves, to generate a plurality of first modulated waves. Generator 101 may modulate the plurality of pairs of second pulse trains using the pair of first carrier waves, to generate a plurality of second modulated waves. By modulating the plurality of first modulated waves and the plurality of second modulated waves using the pair of second carrier waves, the plurality of modulated waves may be generated.

Deriver 104 may then demodulate the received data of each receiver 103 to recover first data to be processed corresponding to the plurality of first modulated waves and the plurality of second modulated waves. Deriver 104 may demodulate the first data to be processed, to recover second data to be processed corresponding to the plurality of pairs of first pulse trains and the plurality of pairs of second pulse trains, as data to be processed.

Accordingly, detection device 100 can efficiently transmit the plurality of modulated waves corresponding to the plurality of pairs of two-dimensional vector codes according to the two pairs of carrier waves.

For example, the reference code, the plurality of first individual codes, the plurality of second individual codes, and the plurality of third individual codes may be a plurality of orthogonal codes that are orthogonal to each other. Accordingly, detection device 100 can efficiently obtain the individual data with respect to each of combinations of transmitters 102 and receivers 103 according to the orthogonality of the codes.

The reference code, the plurality of first individual codes, the plurality of second individual codes, and the plurality of third individual codes may be a plurality of cyclic codes that have shift amounts different from each other. Accordingly, detection device 100 can efficiently obtain the individual data with respect to each of the combinations of transmitters 102 and receivers 103 according to the difference in shift amount.

The reference code, the plurality of first individual codes, the plurality of second individual codes, and the plurality of third individual codes may be a plurality of PN (Pseudo-Noise) codes that are orthogonal to each other and each of which has a different shift amount. Accordingly, detection device 100 can efficiently obtain the individual data with respect to each of the combinations of transmitters 102 and receivers 103 according to the characteristics of the PN code.

For example, every time the condition is satisfied, generator 101 may select a set of a reference code, a plurality of first individual codes, a plurality of second individual codes, and a plurality of third individual codes from a plurality of candidate sets. Thus, generator 101 may then change the reference code, the plurality of first individual codes, the plurality of second individual codes, and the plurality of third individual codes.

Accordingly, detection device 100 can adaptationally change the plurality of codes related to the plurality of waves. Accordingly, detection device 100 can prevent accidental reduction in distinguishability, and appropriately obtain the individual data with respect to each of the combinations of transmitters 102 and receivers 103.

For example, generator 101 may randomly select the set from the plurality of candidate sets. Accordingly, detection device 100 can prevent accidental reduction in distinguishability according to the randomness, and appropriately obtain the individual data with respect to each of combinations of transmitters 102 and receivers 103.

For example, deriver 104 may derive the individual data according to a computational result obtained by performing deconvolution for the second data to be processed, with each combination of corresponding first and second two-dimensional vector codes. Accordingly, detection device 100 can efficiently obtain the individual data with respect to each of combinations of transmitters 102 and receivers 103 according to the deconvolution corresponding to the pair of two-dimensional vector codes.

For example, deriver 104 may derive the individual data according to the determinant for the computational result. Accordingly, detection device 100 can efficiently obtain the individual data with respect to each of combinations of transmitters 102 and receivers 103 according to the deconvolution corresponding to the pair of two-dimensional vector codes and the determinant.

Although the aspects of the detection device have been described above based on the embodiment, the aspects of the detection device are not limited to the embodiment. Modifications that may be conceived by a person skilled in the art may be applied to the embodiment, and a plurality of configuration elements in the embodiment may be combined in any manner. For example, processes performed by specific configuration elements in the embodiment may be performed by other configuration elements instead of the specific configuration elements. In addition, the order of processes may be changed or processes may be performed in parallel.

The mathematical expressions and the like described in the present embodiment may be appropriately changed and used. For example, mathematical expressions that indicate the substantially same content as the aforementioned mathematical expressions in other representations may be used, or other mathematical expressions derived based on the aforementioned theories may be used.

Some of configuration elements among the plurality of configuration elements indicated in the above description need not be implemented. In particular, a process performed by a second configuration element included in a first configuration element in the above description may be interpreted as a process performed by the first configuration element, and may be performed by the first configuration element not necessarily by the second configuration element described as the example. Some of processes indicated in the above description need not be executed.

The ordinal numbers, such as first and second, used in the description may be appropriately replaced, removed, or newly assigned. These ordinal numbers do not necessarily correspond to ordinal numbers having meanings, and may be used to distinguish the elements.

The detection method including the steps performed by the respective configuration elements of the detection device may be executed by any device or system. For example, part or all of the detection method may be executed by a computer including a processor, memory, and an input/output circuit, etc. In doing so, the detection method may be executed by the computer executing a program for causing the computer to execute the detection method.

The above program may be recorded on a non-transitory computer-readable recording medium.

Each configuration element of the detection device may be configured of dedicated hardware, general-purpose hardware that executes, for example, the above program, or a combination thereof. The general-purpose hardware my include memory on which a program is recorded, a general-purpose processor that reads out the program from the memory and executes the program, etc. Here, the memory may be a semiconductor memory or a hard disk, etc., and the general-purpose processor may be a CPU etc.

The dedicated hardware may include memory and a dedicated processor, etc. For example, the dedicated processor may execute the above detection method using memory for recording received data and individual data.

Each configuration element of the detection device may be an electrical circuit. These electrical circuits may constitute one electrical circuit as a whole or may each be a different electrical circuit. The electrical circuits may correspond to dedicated hardware or general-purpose hardware that executes the above program etc.

The detection device is not limited to a physically integrated device, and may include a plurality of sub-devices disposed dispersedly. The detection device may be referred to as a detection system.

[Industrial Applicability]

An aspect of the present disclosure is useful for a detection device that detects an object using waves, and is applicable to detection of a moving object and the like.

[Reference Signs List]

100 Detection device
101 Generator
102 Transmitter
103 Receiver
104 Deriver
105 Detector
106, 107 Repeater
108 Controller
121 Code generator
122 Carrier wave generator
123, 151, 152, 154, 161, 162, 163, 164, 165, 166, 181, 182, 183 Modulator
124 Amplifier
131 Memory
132 Selector
133 Random number generator
141 Local wave generator
142, 171, 172, 173 Demodulator
143 Deconvolution processor

144 Determinant processor
145 Processor
153, 167, 168, 169 Combiner
191 Distributed processing circuit
192 Centralized processing circuit

**Claims**

1. A detection device comprising:

   a generator that generates a plurality of waves;
   a plurality of transmitters that emit the plurality of waves, the plurality of waves each being emitted by a corresponding one of the plurality of transmitters;
   a plurality of receivers each of which receives one or more of the plurality of waves as a composite wave;
   a deriver that derives individual data for each combination of one of the plurality of transmitters and one of the plurality of receivers by deriving, from received data of each of the plurality of receivers, the individual data corresponding to each of the plurality of transmitters; and
   a detector that detects an object that affects at least one of the plurality of waves, according to the individual data,
   wherein the generator:

   generates a plurality of pulse train groups and at least one carrier wave, the plurality of pulse train groups corresponding to a plurality of code groups each of which includes a reference code and one or more individual codes and that are different from each other; and
   modulates the plurality of pulse train groups using the at least one carrier wave, to generate a plurality of modulated waves as the plurality of waves,

   the deriver:

   demodulates data to be processed from the received data of each of the plurality of receivers, the data to be processed corresponding to the plurality of pulse train groups; and
   derives the individual data from the data to be processed,

   the reference code is common to the plurality of code groups, and
   a plurality of individual codes in the plurality of code groups are different from each other.

2. The detection device according to claim 1,

   wherein the generator:

   generates a plurality of pairs of pulse trains and a pair of carrier waves as the plurality of pulse train groups and the at least one carrier wave, respectively, the plurality of pairs of pulse trains corresponding to a plurality of two-dimensional vector codes each of which includes the reference code and one individual code as two elements and that are different from each other, the pair of carrier waves having phases that are orthogonal to each other; and
   modulates the plurality of pairs of pulse trains using the pair of carrier waves, to generate the plurality of modulated waves,

   the deriver demodulates the data to be processed from the received data of each of the plurality of receivers, the data to be processed corresponding to the plurality of pairs of pulse trains,
   the reference code is common to the plurality of two-dimensional vector codes, and
   the plurality of individual codes in the plurality of two-dimensional vector codes are different from each other.

3. The detection device according to claim 2,
   wherein the reference code and the plurality of individual codes are a plurality of orthogonal codes that are orthogonal to each other.

4. The detection device according to claim 2,

wherein the reference code and the plurality of individual codes are a plurality of cyclic codes each of which has a different shift amount.

5. The detection device according to claim 2,
   wherein the reference code and the plurality of individual codes are a plurality of pseudo-noise (PN) codes that are orthogonal to each other and each of which has a different shift amount.

6. The detection device according to claim 2,
   wherein every time a condition is satisfied, the generator selects a set of the reference code and the plurality of individual codes from a plurality of candidate sets, to change the reference code and the plurality of individual codes.

7. The detection device according to claim 6,
   wherein the generator selects the set randomly from the plurality of candidate sets.

8. The detection device according to any one of claim 2 to claim 7,
   wherein the deriver derives the individual data according to a computational result obtained by performing deconvolution on the data to be processed, using each of the plurality of two-dimensional vector codes.

9. The detection device according to claim 8,
   wherein the deriver derives the individual data according to a determinant for the computational result.

10. The detection device according to claim 1,

    wherein the generator:

    generates (i) a plurality of pairs of first pulse trains and a plurality of pairs of second pulse trains and (ii) a pair of first carrier waves and a pair of second carrier waves as the plurality of pulse train groups and the at least one carrier wave, respectively, the plurality of pairs of first pulse trains corresponding to a plurality of first two-dimensional vector codes that are different from each other, the plurality of pairs of second pulse trains corresponding to a plurality of second two-dimensional vector codes that are different from each other, the pair of first carrier waves having phases that are orthogonal to each other, the pair of second carrier waves having phases that are orthogonal to each other;
    modulates the plurality of pairs of first pulse trains using the pair of first carrier waves, to generate a plurality of first modulated waves;
    modulates the plurality of pairs of second pulse trains using the pair of first carrier waves, to generate a plurality of second modulated waves; and
    modulates the plurality of first modulated waves and the plurality of second modulated waves using the pair of second carrier waves, to generate the plurality of modulated waves,

    the deriver:

    demodulates first data to be processed from the received data of each of the plurality of receivers, the first data to be processed corresponding to the plurality of first modulated waves and the plurality of second modulated waves; and
    demodulates, as the data to be processed, second data to be processed from the first data to be processed, the second data to be processed corresponding to the plurality of pairs of first pulse trains and the plurality of pairs of second pulse trains,

    each of the plurality of first two-dimensional vector codes includes the reference code and a first individual code as two elements,
    each of the plurality of second two-dimensional vector codes includes a second individual code and a third individual code as two elements,
    the reference code is common to the plurality of first two-dimensional vector codes,
    a plurality of first individual codes in the plurality of first two-dimensional vector codes and a plurality of second individual codes and a plurality of third individual codes in the plurality of second two-dimensional vector codes are different from each other, and
    a frequency of the pair of first carrier waves and a frequency of the pair of second carrier waves are different from each other.

11. The detection device according to claim 10,
wherein the reference code, the plurality of first individual codes, the plurality of second individual codes, and the plurality of third individual codes are a plurality of orthogonal codes that are orthogonal to each other.

12. The detection device according to claim 10,
wherein the reference code, the plurality of first individual codes, the plurality of second individual codes, and the plurality of third individual codes are a plurality of cyclic codes each of which has a different shift amount.

13. The detection device according to claim 10,
wherein the reference code, the plurality of first individual codes, the plurality of second individual codes, and the plurality of third individual codes are a plurality of pseudo-noise (PN) codes that are orthogonal to each other and each of which has a different shift amount.

14. The detection device according to claim 10,
wherein every time a condition is satisfied, the generator selects a set of the reference code, the plurality of first individual codes, the plurality of second individual codes, and the plurality of third individual codes from a plurality of candidate sets, to change the reference code, the plurality of first individual codes, the plurality of second individual codes, and the plurality of third individual codes.

15. The detection device according to claim 14,
wherein the generator selects the set randomly from the plurality of candidate sets.

16. The detection device according to any one of claim 10 to claim 15,
wherein the deriver derives the individual data according to a computational result obtained by performing deconvolution on the second data to be processed, using each combination of one of the plurality of first two-dimensional vector codes and a corresponding one of the plurality of second two-dimensional codes.

17. The detection device according to claim 16,
wherein the deriver derives the individual data according to a determinant for the computational result.

18. A detection method comprising:

generating a plurality of waves;
emitting the plurality of waves from a plurality of transmitters, the plurality of waves each being emitted from a corresponding one of the plurality of transmitters;
receiving, by each of a plurality of receivers, one or more of the plurality of waves as a composite wave;
deriving individual data for each combination of one of the plurality of transmitters and one of the plurality of receivers by deriving, from received data of each of the plurality of receivers, the individual data corresponding to each of the plurality of transmitters; and
detecting an object that affects at least one of the plurality of waves, according to the individual data,
wherein in the generating:

a plurality of pulse train groups and at least one carrier wave are generated, the plurality of pulse train groups corresponding to a plurality of code groups each of which includes a reference code and one or more individual codes and that are different from each other; and
the plurality of pulse train groups are modulated using the at least one carrier wave, to generate a plurality of modulated waves as the plurality of waves,

in the deriving:

data to be processed is demodulated from the received data of each of the plurality of receivers, the data to be processed corresponding to the plurality of pulse train groups; and
the individual data is derived from the data to be processed,

the reference code is common to the plurality of code groups, and
a plurality of individual codes in the plurality of code groups are different from each other.

FIG. 1

EP 4 589 338 A1

FIG. 2

FIG. 3

FIG. 4

100

Transmitter group — 102

Receiver group — 103

Generator — 101

Deriver — 104

Detector — 105

FIG. 5

EP 4 589 338 A1

# FIG. 6

101

**Generator**

121

**Code generator**

# FIG. 7

121

**Code generator**

131

**Memory**

**Code set**

# FIG. 8

121

## Code generator

131

### Memory

First code set candidates

132

### Selector

N-th code set candidates

# FIG. 9

121

Code generator

131

Memory

First code set candidates

N-th code set candidates

132

Selector

133

Random number generator

# FIG. 10

# FIG. 11

## FIG. 12

104

Deriver

142

Demodulator

141

Local wave generator

## FIG. 13

104

Deriver

142

Demodulator

143

Deconvolution processor

141

Local wave generator

# FIG. 14

# FIG. 15

# FIG. 16

# FIG. 17

## FIG. 18

104

Deriver

142

Demodulator

141

Local wave
generator

## FIG. 19

104

Deriver

142

Demodulator

143

Deconvolution
processor

141

Local wave
generator

# FIG. 20

104

**Deriver**

142

**Demodulator**

143

**Deconvolution processor**

144

**Determinant processor**

141

**Local wave generator**

## FIG. 21

EP 4 589 338 A1

## FIG. 22

$$\left[\int c^i{}_I(t) \otimes \begin{pmatrix} c^i{}_I(t-t_j)\cos\theta_j + c^i{}_Q(t-t_j)\sin\theta_j \\ -c^i{}_I(t-t_j)\sin\theta_j + c^i{}_Q(t-t_j)\cos\theta_j \end{pmatrix} \quad \int c^i{}_Q(t) \otimes \begin{pmatrix} c^i{}_I(t-t_j)\cos\theta_j + c^i{}_Q(t-t_j)\sin\theta_j \\ -c^i{}_I(t-t_j)\sin\theta_j + c^i{}_Q(t-t_j)\cos\theta_j \end{pmatrix} \right]$$

$$= \begin{pmatrix} \int c^i{}_I(\tau-t)\{c^i{}_I(\tau-t_j)\cos\theta_j + c^i{}_Q(\tau-t_j)\sin\theta_j\}d\tau & \int c^i{}_Q(\tau-t)\{c^i{}_I(\tau-t_j)\cos\theta_j + c^i{}_Q(\tau-t_j)\sin\theta_j\}d\tau \\ \int c^i{}_I(\tau-t)\{-c^i{}_I(\tau-t_j)\sin\theta_j + c^i{}_Q(\tau-t_j)\cos\theta_j\}d\tau & \int c^i{}_Q(\tau-t)\{-c^i{}_I(\tau-t_j)\sin\theta_j + c^i{}_Q(\tau-t_j)\cos\theta_j\}d\tau \end{pmatrix}$$

$$= \begin{pmatrix} \delta(t-t_j)\cos\theta_j + \delta(t+p_i-t_j)\sin\theta_j & \delta(t-p_i-t_j)\cos\theta_j + \delta(t-t_j)\sin\theta_j \\ -\delta(t-t_j)\sin\theta_j + \delta(t+p_i-t_j)\cos\theta_j & -\delta(t-p_i-t_j)\sin\theta_j + \delta(t-t_j)\cos\theta_j \end{pmatrix}$$

$$\cdots (2-3-3)$$

EP 4 589 338 A1

## FIG. 23

$$
\det\left[ \int c^i_{\ I}(t) \otimes \begin{pmatrix} c^i_{\ I}(t-t_j)\cos\theta_j + c^i_{\ Q}(t-t_j)\sin\theta_j \\ -c^i_{\ I}(t-t_j)\sin\theta_j + c^i_{\ Q}(t-t_j)\cos\theta_j \end{pmatrix} \quad \int c^i_{\ Q}(t) \otimes \begin{pmatrix} c^i_{\ I}(t-t_j)\cos\theta_j + c^i_{\ Q}(t-t_j)\sin\theta_j \\ -c^i_{\ I}(t-t_j)\sin\theta_j + c^i_{\ Q}(t-t_j)\cos\theta_j \end{pmatrix} \right]
$$

$$
= \delta(t-t_j)^2
$$

$$
\cdots (2-3-4)
$$

EP 4 589 338 A1

## FIG. 24

$$\sum_{j} \det\left[\int c^{i}{}_{I}(t)\otimes x_{j}\begin{pmatrix} c^{i}{}_{I}(t-t_{j})\cos\theta_{j} + c^{i}{}_{Q}(t-t_{j})\sin\theta_{j} \\ -c^{i}{}_{I}(t-t_{j})\sin\theta_{j} + c^{i}{}_{Q}(t-t_{j})\cos\theta_{j} \end{pmatrix} \quad \int c^{i}{}_{Q}(t)\otimes x_{j}\begin{pmatrix} c^{i}{}_{I}(t-t_{j})\cos\theta_{j} + c^{i}{}_{Q}(t-t_{j})\sin\theta_{j} \\ -c^{i}{}_{I}(t-t_{j})\sin\theta_{j} + c^{i}{}_{Q}(t-t_{j})\cos\theta_{j} \end{pmatrix}\right]$$

$$= \sum_{j} x_{j}{}^{2}\delta(t-t_{j})^{2}$$

$$\cdots(2-3-5)$$

FIG. 25

$$\left[\int c^k{}_I(t)\otimes\begin{pmatrix} c^i{}_I(t-t_{i,j})\cos\theta_{i,j}+c^i{}_Q(t-t_{i,j})\sin\theta_{i,j} \\ -c^i{}_I(t-t_{i,j})\sin\theta_{i,j}+c^i{}_Q(t-t_{i,j})\cos\theta_{i,j} \end{pmatrix}\quad \int c^k{}_Q(t)\otimes\begin{pmatrix} c^i{}_I(t-t_{i,j})\cos\theta_{i,j}+c^i{}_Q(t-t_{i,j})\sin\theta_{i,j} \\ -c^i{}_I(t-t_{i,j})\sin\theta_{i,j}+c^i{}_Q(t-t_{i,j})\cos\theta_{i,j} \end{pmatrix}\right]$$

$$=\begin{pmatrix} \int c^k{}_I(\tau-t)\{c^i{}_I(\tau-t_{i,j})\cos\theta_{i,j}+c^i{}_Q(\tau-t_{i,j})\sin\theta_{i,j}\}d\tau & \int c^k{}_Q(\tau-t)\{c^i{}_I(\tau-t_{i,j})\cos\theta_{i,j}+c^i{}_Q(\tau-t_{i,j})\sin\theta_{i,j}\}d\tau \\ \int c^k{}_I(\tau-t)\{-c^i{}_I(\tau-t_{i,j})\sin\theta_{i,j}+c^i{}_Q(\tau-t_{i,j})\cos\theta_{i,j}\}d\tau & \int c^k{}_Q(\tau-t)\{-c^i{}_I(\tau-t_{i,j})\sin\theta_{i,j}+c^i{}_Q(\tau-t_{i,j})\cos\theta_{i,j}\}d\tau \end{pmatrix}$$

$$=\begin{pmatrix} \delta(t-t_{i,j})\cos\theta_{i,j}+\delta(t+p_i-t_{i,j})\sin\theta_{i,j} & \delta(t-p_k-t_{i,j})\cos\theta_{i,j}+\delta(t+p_i-p_k-t_{i,j})\sin\theta_{i,j} \\ -\delta(t-t_{i,j})\sin\theta_{i,j}+\delta(t+p_i-t_{i,j})\cos\theta_{i,j} & -\delta(t-p_k-t_{i,j})\sin\theta_{i,j}+\delta(t+p_i-p_k-t_{i,j})\cos\theta_{i,j} \end{pmatrix}$$

$$\cdots(2-4-4)$$

EP 4 589 338 A1

FIG. 26

$$\det\left[\int c^{k}{}_{I}(t)\otimes\begin{pmatrix} c^{i}{}_{I}(t-t_{i,j})\cos\theta_{i,j}+c^{i}{}_{Q}(t-t_{i,j})\sin\theta_{i,j} \\ -c^{i}{}_{I}(t-t_{i,j})\sin\theta_{i,j}+c^{i}{}_{Q}(t-t_{i,j})\cos\theta_{i,j} \end{pmatrix} \quad \int c^{k}{}_{Q}(t)\otimes\begin{pmatrix} c^{i}{}_{I}(t-t_{i,j})\cos\theta_{i,j}+c^{i}{}_{Q}(t-t_{i,j})\sin\theta_{i,j} \\ -c^{i}{}_{I}(t-t_{i,j})\sin\theta_{i,j}+c^{i}{}_{Q}(t-t_{i,j})\cos\theta_{i,j} \end{pmatrix}\right]$$

$$=\det\begin{pmatrix} \delta(t-t_{i,j})\cos\theta_{i,j}+\delta(t+p_{i}-t_{i,j})\sin\theta_{i,j} & \delta(t-p_{k}-t_{i,j})\cos\theta_{i,j}+\delta(t+p_{i}-p_{k}-t_{i,j})\sin\theta_{i,j} \\ -\delta(t-t_{i,j})\sin\theta_{i,j}+\delta(t+p_{i}-t_{i,j})\cos\theta_{i,j} & -\delta(t-p_{k}-t_{i,j})\sin\theta_{i,j}+\delta(t+p_{i}-p_{k}-t_{i,j})\cos\theta_{i,j} \end{pmatrix}$$

$$=\delta_{k,i}\delta(t-t_{i,j})^{2}$$

$$\cdots(2-4-5)$$

# FIG. 27

$$\det\left[\int c^k{}_I(t)\otimes\left(\begin{array}{l}\sum_i\sum_j x_{i,j}\left\{c^i{}_I(t-t_{i,j})\cos\theta_{i,j}+c^i{}_Q(t-t_{i,j})\sin\theta_{i,j}\right\}\\ -\sum_i\sum_j x_{i,j}\left\{c^i{}_I(t-t_{i,j})\sin\theta_{i,j}+c^i{}_Q(t-t_{i,j})\cos\theta_{i,j}\right\}\end{array}\right)\quad\int c^k{}_Q(t)\otimes\left(\begin{array}{l}\sum_i\sum_j x_{i,j}\left\{c^i{}_I(t-t_{i,j})\cos\theta_{i,j}+c^i{}_Q(t-t_{i,j})\sin\theta_{i,j}\right\}\\ -\sum_i\sum_j x_{i,j}\left\{c^i{}_I(t-t_{i,j})\sin\theta_{i,j}+c^i{}_Q(t-t_{i,j})\cos\theta_{i,j}\right\}\end{array}\right)\right]$$

$$=\det\left(\begin{array}{l}\sum_i\sum_j x_{i,j}\left\{\delta(t-t_{i,j})\cos\theta_{i,j}+\delta(t+p_i-t_{i,j})\sin\theta_{i,j}\right\}\quad\sum_a\sum_b x_{a,b}\left\{\delta(t-p_k-t_{a,b})\cos\theta_{a,b}+\delta(t+p_a-p_k-t_{a,b})\sin\theta_{a,b}\right\}\\ \sum_i\sum_j x_{i,j}\left\{-\delta(t-t_{i,j})\sin\theta_{i,j}+\delta(t+p_i-t_{i,j})\cos\theta_{i,j}\right\}\quad\sum_a\sum_b x_{a,b}\left\{-\delta(t-p_k-t_{a,b})\sin\theta_{a,b}+\delta(t+p_a-p_k-t_{a,b})\cos\theta_{a,b}\right\}\end{array}\right)$$

$$=\delta_{k,i}x_{i,j}{}^2\delta(t-t_{i,j})^2$$

$$+\sum_{(i=a,j=b)\text{ Excluded}}\left[\ \delta(t_{i,j}-p_k-t_{a,b})x_{i,j}x_{a,b}\cos\theta_{i,j}\sin\theta_{a,b}\delta(t-t_{i,j})\ \right]$$

$$+\sum_{(i=a,j=b)\text{ Excluded}}\left[\ \delta(t_{i,j}+p_a-p_k-t_{a,b})x_{i,j}x_{a,b}\cos\theta_{i,j}\cos\theta_{a,b}\delta(t-t_{i,j})\ \right]$$

$$+\sum_{(i=a,j=b)\text{ Excluded}}\left[\ \delta(t_{i,j}-p_i-p_k-t_{a,b})x_{i,j}x_{a,b}\sin\theta_{i,j}\sin\theta_{a,b}\delta(t+p_i-t_{i,j})\ \right]$$

$$+\sum_{(i=a,j=b)\text{ Excluded}}\left[\ \delta(t_{i,j}-p_i+p_a-p_k-t_{a,b})x_{i,j}x_{a,b}\sin\theta_{i,j}\cos\theta_{a,b}\delta(t+p_i-t_{i,j})\ \right]$$

$$-\sum_{(i=a,j=b)\text{ Excluded}}\left[\ \delta(t_{i,j}-p_k-t_{a,b})x_{i,j}x_{a,b}\sin\theta_{i,j}\cos\theta_{a,b}\delta(t-t_{i,j})\ \right]$$

$$-\sum_{(i=a,j=b)\text{ Excluded}}\left[\ \delta(t_{i,j}+p_a-p_k-t_{a,b})x_{i,j}x_{a,b}\sin\theta_{i,j}\sin\theta_{a,b}\delta(t-t_{i,j})\ \right]$$

$$-\sum_{(i=a,j=b)\text{ Excluded}}\left[\ \delta(t_{i,j}-p_i-p_k-t_{a,b})x_{i,j}x_{a,b}\cos\theta_{i,j}\cos\theta_{a,b}\delta(t+p_i-t_{i,j})\ \right]$$

$$-\sum_{(i=a,j=b)\text{ Excluded}}\left[\ \delta(t_{i,j}-p_i+p_a-p_k-t_{a,b})x_{i,j}x_{a,b}\cos\theta_{i,j}\sin\theta_{a,b}\delta(t-t_{i,j})\ \right]$$

$$\cdots(2-4-6)$$

EP 4 589 338 A1

FIG. 28

$$\left[ \int c^k_{\ I}(t) \otimes \left( \begin{array}{l} \displaystyle\sum_i \sum_j x_{i,j} \left\{ c^i_{\ I}(t-t_{i,j})\cos\theta_{i,j} + c^i_{\ Q}(t-t_{i,j})\sin\theta_{i,j} \right\} \\ \displaystyle -\sum_i \sum_j x_{i,j} \left\{ c^i_{\ I}(t-t_{i,j})\sin\theta_{i,j} + c^i_{\ Q}(t-t_{i,j})\cos\theta_{i,j} \right\} \end{array} \right) \quad \int c^k_{\ Q}(t) \otimes \left( \begin{array}{l} \displaystyle\sum_i \sum_j x_{i,j} \left\{ c^i_{\ I}(t-t_{i,j})\cos\theta_{i,j} + c^i_{\ Q}(t-t_{i,j})\sin\theta_{i,j} \right\} \\ \displaystyle -\sum_i \sum_j x_{i,j} \left\{ c^i_{\ I}(t-t_{i,j})\sin\theta_{i,j} + c^i_{\ Q}(t-t_{i,j})\cos\theta_{i,j} \right\} \end{array} \right) \right]$$

$$= \left( \begin{array}{ll} \displaystyle\sum_i \sum_j x_{i,j} \left\{ \delta(t-t_{i,j})\cos\theta_{i,j} + \delta(t+p_i-t_{i,j})\sin\theta_{i,j} \right\} & \displaystyle\sum_i \sum_j x_{i,j} \left\{ \delta(t-p_k-t_{i,j})\cos\theta_{i,j} + \delta(t+p_i-p_k-t_{i,j})\sin\theta_{i,j} \right\} \\ \displaystyle\sum_i \sum_j x_{i,j} \left\{ -\delta(t-t_{i,j})\sin\theta_{i,j} + \delta(t+p_i-t_{i,j})\cos\theta_{i,j} \right\} & \displaystyle\sum_i \sum_j x_{i,j} \left\{ -\delta(t-p_k-t_{i,j})\sin\theta_{i,j} + \delta(t+p_i-p_k-t_{i,j})\cos\theta_{i,j} \right\} \end{array} \right)$$

$$\cdots (2-5-1)$$

# FIG. 29

$$\lim_{t \to t_{k,b}} \left[ \begin{pmatrix} \int c^k{}_I(t) \otimes \begin{pmatrix} \sum_i \sum_j x_{i,j} \left\{ c^i{}_I(t-t_{i,j})\cos\theta_{i,j} + c^i{}_Q(t-t_{i,j})\sin\theta_{i,j} \right\} \\ -\sum_i \sum_j x_{i,j} \left\{ c^i{}_I(t-t_{i,j})\sin\theta_{i,j} + c^i{}_Q(t-t_{i,j})\cos\theta_{i,j} \right\} \end{pmatrix} & \int c^k{}_Q(t) \otimes \begin{pmatrix} \sum_i \sum_j x_{i,j} \left\{ c^i{}_I(t-t_{i,j})\cos\theta_{i,j} + c^i{}_Q(t-t_{i,j})\sin\theta_{i,j} \right\} \\ -\sum_i \sum_j x_{i,j} \left\{ c^i{}_I(t-t_{i,j})\sin\theta_{i,j} + c^i{}_Q(t-t_{i,j})\cos\theta_{i,j} \right\} \end{pmatrix} \end{pmatrix} \right]$$

$$= \begin{pmatrix} \sum_i \sum_j x_{i,j} \left\{ \delta(t_{k,b}-t_{i,j})\cos\theta_{i,j} + \delta(t_{k,b}+p_k-t_{i,j})\sin\theta_{i,j} \right\} & \sum_i \sum_j x_{i,j} \left\{ \delta(t_{k,b}-p_k-t_{i,j})\cos\theta_{i,j} + \delta(t_{k,b}+p_i-p_k-t_{i,j})\sin\theta_{i,j} \right\} \\ \sum_i \sum_j x_{i,j} \left\{ -\delta(t_{k,b}-t_{i,j})\sin\theta_{i,j} + \delta(t_{k,b}+p_k-t_{i,j})\cos\theta_{i,j} \right\} & \sum_i \sum_j x_{i,j} \left\{ -\delta(t_{k,b}-p_k-t_{i,j})\sin\theta_{i,j} + \delta(t_{k,b}+p_i-p_k-t_{i,j})\cos\theta_{i,j} \right\} \end{pmatrix}$$

$$= \sum_j x_{k,j} \begin{pmatrix} \cos\theta_{k,j} & \sin\theta_{k,j} \\ -\sin\theta_{k,j} & \cos\theta_{k,j} \end{pmatrix}$$

$$+ \begin{pmatrix} \sum_{i \neq k} \sum_j x_{i,j} \left\{ \delta(t_{k,b}-t_{i,j})\cos\theta_{i,j} + \delta(t_{k,b}+p_k-t_{i,j})\sin\theta_{i,j} \right\} & \sum_{i \neq k} \sum_j x_{i,j} \left\{ \delta(t_{k,b}-p_k-t_{i,j})\cos\theta_{i,j} + \delta(t_{k,b}+p_i-p_k-t_{i,j})\sin\theta_{i,j} \right\} \\ -\sum_{i \neq k} \sum_j x_{i,j} \left\{ -\delta(t_{k,b}-t_{i,j})\sin\theta_{i,j} + \delta(t_{k,b}+p_k-t_{i,j})\cos\theta_{i,j} \right\}\sin\theta_{i,j} & \sum_{i \neq k} \sum_j x_{i,j} \left\{ -\delta(t_{k,b}-p_k-t_{i,j})\sin\theta_{i,j} + \delta(t_{k,b}+p_i-p_k-t_{i,j})\cos\theta_{i,j} \right\} \end{pmatrix}$$

$$= \sum_j x_{k,j} \begin{pmatrix} \cos\theta_{k,j} & \sin\theta_{k,j} \\ -\sin\theta_{k,j} & \cos\theta_{k,j} \end{pmatrix} + \begin{pmatrix} 0(\text{Time average}) & 0(\text{Time average}) \\ 0(\text{Time average}) & 0(\text{Time average}) \end{pmatrix}$$

$$\Rightarrow \sum_j x_{k,j} e^{-i\theta_{k,j}} \qquad (\text{Complex notation})$$

$$\cdots (2-5-2)$$

## FIG. 30

EP 4 589 338 A1

FIG. 31

# FIG. 32

# FIG. 33

FIG. 34

104

Deriver

171

172

Demodulator

Demodulator

173

Demodulator

141

Local wave generator

# FIG. 35

104

Deriver

171

Demodulator

172

Demodulator

143

Deconvolution processor

173

Demodulator

141

Local wave generator

## FIG. 36

EP 4 589 338 A1

FIG. 37

FIG. 38

$$
\begin{pmatrix}
\int c^k{}_{II}(\tau-t)s_{RII}(\tau)d\tau & \int c^k{}_{IQ}(\tau-t)s_{RII}(\tau)d\tau & \int c^k{}_{QI}(\tau-t)s_{RII}(\tau)d\tau & \int c^k{}_{QQ}(\tau-t)s_{RII}(\tau)d\tau \\
\int c^k{}_{II}(\tau-t)s_{RIQ}(\tau)d\tau & \int c^k{}_{IQ}(\tau-t)s_{RIQ}(\tau)d\tau & \int c^k{}_{QI}(\tau-t)s_{RIQ}(\tau)d\tau & \int c^k{}_{QQ}(\tau-t)s_{RIQ}(\tau)d\tau \\
\int c^k{}_{II}(\tau-t)s_{RQI}(\tau)d\tau & \int c^k{}_{IQ}(\tau-t)s_{RQI}(\tau)d\tau & \int c^k{}_{QI}(\tau-t)s_{RQI}(\tau)d\tau & \int c^k{}_{QQ}(\tau-t)s_{RQI}(\tau)d\tau \\
\int c^k{}_{II}(\tau-t)s_{RQQ}(\tau)d\tau & \int c^k{}_{IQ}(\tau-t)s_{RQQ}(\tau)d\tau & \int c^k{}_{QI}(\tau-t)s_{RQQ}(\tau)d\tau & \int c^k{}_{QQ}(\tau-t)s_{RQQ}(\tau)d\tau
\end{pmatrix}
$$

$$
= \mathbf{A}
\begin{pmatrix}
\int c^k{}_{II}(\tau-t)c^i{}_{II}(\tau)d\tau & \int c^k{}_{IQ}(\tau-t)c^i{}_{II}(\tau)d\tau & \int c^k{}_{QI}(\tau-t)c^i{}_{II}(\tau)d\tau & \int c^k{}_{QQ}(\tau-t)c^i{}_{II}(\tau)d\tau \\
\int c^k{}_{II}(\tau-t)c^i{}_{IQ}(\tau)d\tau & \int c^k{}_{IQ}(\tau-t)c^i{}_{IQ}(\tau)d\tau & \int c^k{}_{QI}(\tau-t)c^i{}_{IQ}(\tau)d\tau & \int c^k{}_{QQ}(\tau-t)c^i{}_{IQ}(\tau)d\tau \\
\int c^k{}_{II}(\tau-t)c^i{}_{QI}(\tau)d\tau & \int c^k{}_{IQ}(\tau-t)c^i{}_{QI}(\tau)d\tau & \int c^k{}_{QI}(\tau-t)c^i{}_{QI}(\tau)d\tau & \int c^k{}_{QQ}(\tau-t)c^i{}_{QI}(\tau)d\tau \\
\int c^k{}_{II}(\tau-t)c^i{}_{QQ}(\tau)d\tau & \int c^k{}_{IQ}(\tau-t)c^i{}_{QQ}(\tau)d\tau & \int c^k{}_{QI}(\tau-t)c^i{}_{QQ}(\tau)d\tau & \int c^k{}_{QQ}(\tau-t)c^i{}_{QQ}(\tau)d\tau
\end{pmatrix}
$$

$\cdots(3-3-3)$

# FIG. 39

$$\begin{pmatrix} s_{RII}(t) \\ s_{RIQ}(t) \\ s_{RQI}(t) \\ s_{RQQ}(t) \end{pmatrix} = \sum_{i=1}^{N}\sum_{j} x_{i,j} \begin{pmatrix} \cos(\beta_{i,j})\cos(\alpha_{i,j}) & \sin(\beta_{i,j})\cos(\alpha_{i,j}) & \cos(\beta_{i,j})\sin(\alpha_{i,j}) & \sin(\beta_{i,j})\sin(\alpha_{i,j}) \\ -\sin(\beta_{i,j})\cos(\alpha_{i,j}) & \cos(\beta_{i,j})\cos(\alpha_{i,j}) & -\sin(\beta_{i,j})\sin(\alpha_{i,j}) & \cos(\beta_{i,j})\sin(\alpha_{i,j}) \\ -\cos(\beta_{i,j})\sin(\alpha_{i,j}) & -\sin(\beta_{i,j})\sin(\alpha_{i,j}) & \cos(\beta_{i,j})\cos(\alpha_{i,j}) & \sin(\beta_{i,j})\cos(\alpha_{i,j}) \\ \sin(\beta_{i,j})\sin(\alpha_{i,j}) & -\cos(\beta_{i,j})\sin(\alpha_{i,j}) & -\sin(\beta_{i,j})\cos(\alpha_{i,j}) & \cos(\beta_{i,j})\cos(\alpha_{i,j}) \end{pmatrix} \begin{pmatrix} c^i_{II}(t-t_{i,j}) \\ c^i_{IQ}(t-t_{i,j}) \\ c^i_{QI}(t-t_{i,j}) \\ c^i_{QQ}(t-t_{i,j}) \end{pmatrix}$$

$$\cdots(3-4-4)$$

# FIG. 40

EP 4 589 338 A1

$$\mathbf{A}_{i,j} = \begin{pmatrix} \cos(\beta_{i,j})\cos(\alpha_{i,j}) & \sin(\beta_{i,j})\cos(\alpha_{i,j}) & \cos(\beta_{i,j})\sin(\alpha_{i,j}) & \sin(\beta_{i,j})\sin(\alpha_{i,j}) \\ -\sin(\beta_{i,j})\cos(\alpha_{i,j}) & \cos(\beta_{i,j})\cos(\alpha_{i,j}) & -\sin(\beta_{i,j})\sin(\alpha_{i,j}) & \cos(\beta_{i,j})\sin(\alpha_{i,j}) \\ -\cos(\beta_{i,j})\sin(\alpha_{i,j}) & -\sin(\beta_{i,j})\sin(\alpha_{i,j}) & \cos(\beta_{i,j})\cos(\alpha_{i,j}) & \sin(\beta_{i,j})\cos(\alpha_{i,j}) \\ \sin(\beta_{i,j})\sin(\alpha_{i,j}) & -\cos(\beta_{i,j})\sin(\alpha_{i,j}) & -\sin(\beta_{i,j})\cos(\alpha_{i,j}) & \cos(\beta_{i,j})\cos(\alpha_{i,j}) \end{pmatrix}$$

$$\cdots (3-4-5)$$

# FIG. 41

$$
\begin{pmatrix}
\int c^k_{II}(\tau-t)s_{RII}(\tau)d\tau & \int c^k_{IQ}(\tau-t)s_{RII}(\tau)d\tau & \int c^k_{QI}(\tau-t)s_{RII}(\tau)d\tau & \int c^k_{QQ}(\tau-t)s_{RII}(\tau)d\tau \\
\int c^k_{II}(\tau-t)s_{RIQ}(\tau)d\tau & \int c^k_{IQ}(\tau-t)s_{RIQ}(\tau)d\tau & \int c^k_{QI}(\tau-t)s_{RIQ}(\tau)d\tau & \int c^k_{QQ}(\tau-t)s_{RIQ}(\tau)d\tau \\
\int c^k_{II}(\tau-t)s_{RQI}(\tau)d\tau & \int c^k_{IQ}(\tau-t)s_{RQI}(\tau)d\tau & \int c^k_{QI}(\tau-t)s_{RQI}(\tau)d\tau & \int c^k_{QQ}(\tau-t)s_{RQI}(\tau)d\tau \\
\int c^k_{II}(\tau-t)s_{RQQ}(\tau)d\tau & \int c^k_{IQ}(\tau-t)s_{RQQ}(\tau)d\tau & \int c^k_{QI}(\tau-t)s_{RQQ}(\tau)d\tau & \int c^k_{QQ}(\tau-t)s_{RQQ}(\tau)d\tau
\end{pmatrix}
$$

$$
= \sum_{i=1}^{N}\sum_{j} x_{i,j}\mathbf{A}_{i,j}
\begin{pmatrix}
\int c^k_{II}(\tau-t)c^i_{II}(\tau-t_{i,j})d\tau & \int c^k_{IQ}(\tau-t)c^i_{II}(\tau-t_{i,j})d\tau & \int c^k_{QI}(\tau-t)c^i_{II}(\tau-t_{i,j})d\tau & \int c^k_{QQ}(\tau-t)c^i_{II}(\tau-t_{i,j})d\tau \\
\int c^k_{II}(\tau-t)c^i_{IQ}(\tau-t_{i,j})d\tau & \int c^k_{IQ}(\tau-t)c^i_{IQ}(\tau-t_{i,j})d\tau & \int c^k_{QI}(\tau-t)c^i_{IQ}(\tau-t_{i,j})d\tau & \int c^k_{QQ}(\tau-t)c^i_{IQ}(\tau-t_{i,j})d\tau \\
\int c^k_{II}(\tau-t)c^i_{QI}(\tau-t_{i,j})d\tau & \int c^k_{IQ}(\tau-t)c^i_{QI}(\tau-t_{i,j})d\tau & \int c^k_{QI}(\tau-t)c^i_{QI}(\tau-t_{i,j})d\tau & \int c^k_{QQ}(\tau-t)c^i_{QI}(\tau-t_{i,j})d\tau \\
\int c^k_{II}(\tau-t)c^i_{QQ}(\tau-t_{i,j})d\tau & \int c^k_{IQ}(\tau-t)c^i_{QQ}(\tau-t_{i,j})d\tau & \int c^k_{QI}(\tau-t)c^i_{QQ}(\tau-t_{i,j})d\tau & \int c^k_{QQ}(\tau-t)c^i_{QQ}(\tau-t_{i,j})d\tau
\end{pmatrix}
$$

$$\cdots(3-4-6)$$

EP 4 589 338 A1

# FIG. 42

$$\mathbf{X} = \sum_{i=1}^{N}\sum_{j} x_{i,j}\mathbf{A}_{i,j} \begin{pmatrix} \delta(t-t_{i,j}) & \delta(t-t_{i,j}-p_{IQk}) & \delta(t-t_{i,j}-p_{QIk}) & \delta(t-t_{i,j}-p_{QQk}) \\ \delta(t-t_{i,j}+p_{IQi}) & \delta_{k,i}\delta(t-t_{i,j}) & \delta(t-t_{i,j}-p_{QIk}+p_{IQi}) & \delta(t-t_{i,j}-p_{QQk}+p_{IQi}) \\ \delta(t-t_{i,j}+p_{QIi}) & \delta(t-t_{i,j}-p_{IQk}+p_{QIi}) & \delta_{k,i}\delta(t-t_{i,j}) & \delta(t-t_{i,j}-p_{QQk}+p_{QIi}) \\ \delta(t-t_{i,j}+p_{QQi}) & \delta(t-t_{i,j}-p_{IQk}+p_{QQi}) & \delta(t-t_{i,j}-p_{QIk}+p_{QQi}) & \delta_{k,i}\delta(t-t_{i,j}) \end{pmatrix}$$

$\cdots (3-4-7)$

# FIG. 43

# FIG. 44

Start

S101

Generate a plurality of waves

S102

Emit a plurality of waves

S103

Receive composite wave

S104

Derive individual data

S105

Detect object

End

## INTERNATIONAL SEARCH REPORT

| International application No. |
|---|
| **PCT/JP2023/028564** |

| A. | CLASSIFICATION OF SUBJECT MATTER |
|---|---|

*G01S 13/87*(2006.01)i; *G01S 13/46*(2006.01)i
FI: G01S13/87; G01S13/46

According to International Patent Classification (IPC) or to both national classification and IPC

| B. | FIELDS SEARCHED |
|---|---|

Minimum documentation searched (classification system followed by classification symbols)

G01S7/00-7/42; G01S13/00-13/95;

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2012-145332 A (MITSUBISHI ELECTRIC CORP.) 02 August 2012 (2012-08-02) paragraphs [0012]-[0015], [0017], fig. 1-4 | 1, 18 |
| A | JP 2017-032522 A (PANASONIC CORP.) 09 February 2017 (2017-02-09) entire text, all drawings | 1-18 |
| A | JP 02-059690 A (MITSUBISHI PRECISION CO., LTD.) 28 February 1990 (1990-02-28) entire text, all drawings | 1-18 |
| A | US 2020/0191940 A1 (NXP USA, INC.) 18 June 2020 (2020-06-18) entire text, all drawings | 1-18 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **22 September 2023** | **10 October 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2023/028564**

| Patent document cited in search report | | | Publication date (day/month/year) | Patent family member(s) | | | Publication date (day/month/year) |
|---|---|---|---|---|---|---|---|
| JP | 2012-145332 | A | 02 August 2012 | (Family: none) | | | |
| JP | 2017-032522 | A | 09 February 2017 | US | 2017/0212213 | A1 | |
| JP | 02-059690 | A | 28 February 1990 | (Family: none) | | | |
| US | 2020/0191940 | A1 | 18 June 2020 | CN | 111337915 | A | |

Form PCT/ISA/210 (patent family annex) (January 2015)

**EP 4 589 338 A1**

**Patent documents cited in the description**

- JP 2012052923 A